# EUROPEAN PATENT APPLICATION

(11) **EP 4 718 844 A1**
(43) Date of publication of application: **01.04.2026**
(21) Application number: 24811259.1
(22) Date of filing: 12.04.2024
(51) Int. Cl.: H04N 19/119, H04N 19/70, H04N 19/105, H04N 19/176, H04N 19/129

(54) **VIDEO DECODING METHOD USING BLOCK PARTITIONING PREDICTION AND DEVICE THEREOF, AND VIDEO ENCODING METHOD AND DEVICE THEREOF**

(30) Priority: 23.05.2023 KR 20230066483; 05.04.2024 KR 20240046948
(71) Applicant: Samsung Electronics Co., Ltd., Suwon-si, Gyeonggi-do 16677 (KR)
(72) Inventor: PARK, Minsoo, Suwon-si, Gyeonggi-do 16677 (KR); PARK, Minwoo, Suwon-si, Gyeonggi-do 16677 (KR); CHOI, Kwangpyo, Suwon-si, Gyeonggi-do 16677 (KR); PIAO, Yinji, Suwon-si, Gyeonggi-do 16677 (KR)
(74) Representative: Appleyard Lees IP LLP
(86) International application number: PCT/KR2024/004942
(87) International publication number: WO 2024/242320

(57) **Abstract**

A video decoding method according to an embodiment may include determining whether to apply split prediction for a current coding unit, when the split prediction is applied to the current coding unit, determining a neighboring area of the current coding unit, wherein the neighboring area is to be used in the split prediction, predicting a split scheme for the current coding unit by using split-associated information obtained from the neighboring area, when the split scheme indicates a split of the current coding unit, determining at least one lower coding unit by splitting the current coding unit according to the split scheme, and when the split scheme indicates no split of the current coding unit, decoding the current coding unit (2350). Here, the neighboring area may be an area within a current picture including the current coding unit or may be an area within a picture decoded before the current picture. Also, the split-associated information may include at least one of size information and depth information of at least one coding unit included in the neighboring area.

## Description

### Technical Field

The present disclosure relates to the field of encoding and decoding video. More particularly, the present disclosure relates to a method of hierarchically partitioning a block for video encoding or decoding.

### Background Art

In a compression scheme according to the related art, square coding units are determined via recursive partitioning processes in which it is determined whether to partition a coding unit included in a picture while determining a size of the coding unit and then the coding unit is uniformly partitioned into four coding units of the same size. However, recently, image quality deterioration of a reconstructed image caused by the use of coding units having the uniform shape of a square for a high-resolution image has become a problem. Accordingly, methods and apparatuses for partitioning a high-resolution image into coding units of various shapes have been proposed.

### Disclosure of Invention

### Technical Problem

The present disclosure relates to the field of encoding and decoding a video. More particularly, the present disclosure provides a method of predicting a block partitioning scheme in a video encoding and decoding procedure.

### Solution to Problem

According to an embodiment of the present disclosure, a video decoding method may include determining whether to apply split prediction for a current coding unit, when the split prediction is applied to the current coding unit, determining a neighboring area of the current coding unit, wherein the neighboring area is to be used in the split prediction, predicting a split scheme for the current coding unit by using split-associated information obtained from the neighboring area, when the split scheme indicates a split of the current coding unit, determining at least one lower coding unit by splitting the current coding unit according to the split scheme, and when the split scheme indicates no split of the current coding unit, decoding the current coding unit. Here, the neighboring area may be an area within a current picture including the current coding unit or may be an area within a picture decoded before the current picture. Also, the split-associated information may include at least one of size information and depth information of at least one coding unit included in the neighboring area.

### Advantageous Effects of Invention

In an embodiment, according to a block partitioning prediction scheme, a block splitting method of a current coding unit is determined by referring to block split information from a neighboring area that is spatially adjacent to the current coding unit or a reference area that is temporally adjacent thereto, so that the amount of computation and the amount of data for newly determining a block splitting method of the current coding unit may be reduced.

### Brief Description of Drawings

Brief descriptions of respective drawings are provided to gain a sufficient understanding of the drawings of the present specification.
FIG. 1 illustrates a schematic block diagram of an image decoding apparatus according to an embodiment.
FIG. 2 is a flowchart of an image decoding method according to an embodiment.
FIG. 3 illustrates a process, performed by an image decoding apparatus, of determining at least one coding unit by splitting a current coding unit, according to an embodiment.
FIG. 4 illustrates a process, performed by an image decoding apparatus, of determining at least one coding unit by splitting a non-square coding unit, according to an embodiment.
FIG. 5 illustrates a process, performed by an image decoding apparatus, of splitting a coding unit, based on at least one of block shape information and split shape mode information, according to an embodiment.
FIG. 6 illustrates a method, performed by an image decoding apparatus, of determining a preset coding unit from among an odd number of coding units, according to an embodiment.
FIG. 7 illustrates an order of processing a plurality of coding units when an image decoding apparatus determines the plurality of coding units by splitting a current coding unit, according to an embodiment.
FIG. 8 illustrates a process, performed by an image decoding apparatus, of determining that a current coding unit is to be split into an odd number of coding units, when the coding units are not processable in a preset order, according to an embodiment.
FIG. 9 illustrates a process, performed by an image decoding apparatus, of determining at least one coding unit by splitting a first coding unit, according to an embodiment.
FIG. 10 illustrates that a shape into which a second coding unit is splittable is restricted when the second coding unit having a non-square shape, which is determined when an image decoding apparatus splits a first coding unit, satisfies a preset condition, according to an embodiment.
FIG. 11 illustrates a process, performed by an image decoding apparatus, of splitting a square coding unit when split shape mode information is unable to indicate that the square coding unit is split into four square coding units, according to an embodiment.
FIG. 12 illustrates that a processing order between a plurality of coding units may be changed depending on a process of splitting a coding unit, according to an embodiment.
FIG. 13 illustrates a process of determining a depth of a coding unit as a shape and size of the coding unit change, when the coding unit is recursively split such that a plurality of coding units are determined, according to an embodiment.
FIG. 14 illustrates depths that are determinable based on shapes and sizes of coding units, and part indexes (PIDs) that are for distinguishing the coding units, according to an embodiment.
FIG. 15 illustrates that a plurality of coding units are determined based on a plurality of preset data units included in a picture, according to an embodiment.
FIG. 16 is a block diagram of an image encoding and decoding system.
FIG. 17 is a diagram illustrating a split tree and QT depths of a CTU, according to an embodiment.
FIG. 18 is a diagram illustrating a split tree, a QT depth, and an MTT depth of a CTU, according to an embodiment.
FIG. 19 is a diagram illustrating split types for generating a split tree, a QT depth, MTT depths, and each coding unit of a CTU, according to an embodiment.
FIG. 20 is a diagram illustrating a split-type indicating bitstream according to an embodiment.
FIG. 21 illustrates a block diagram of a video decoding apparatus according to an embodiment.
FIG. 22 illustrates a block diagram of a video encoding apparatus according to an embodiment.
FIG. 23 illustrates a flowchart of a video decoding method according to an embodiment.
FIG. 24 illustrates a flowchart of a video encoding method according to an embodiment.
FIG. 25 is a diagram illustrating syntax for signaling information indicating whether split prediction is performed on a current coding unit, according to an embodiment.
FIG. 26 is a diagram illustrating syntax for signaling information indicating whether split prediction is performed according to a size of a current coding unit, according to an embodiment.
FIG. 27 is a diagram illustrating syntax for signaling information indicating whether split prediction is performed in an upper block of a current coding unit, according to an embodiment.
FIG. 28 is a diagram illustrating syntax for signaling information indicating via high level syntax whether it is allowed to perform split prediction, according to an embodiment.
FIG. 29 is a diagram illustrating a method of determining a neighboring block to be used for split prediction of a current coding unit, according to a location of a storage block of split-associated information, according to an embodiment.
FIG. 30 is a diagram for describing a method of representing a location of a neighboring block by using a size of a storage block of split-associated information, the neighboring block being to be used for split prediction of a current coding unit, according to an embodiment.
FIG. 31 is a diagram for illustrating a method of determining a location of a neighboring block to be used for split prediction of a current coding unit, based on an offset of a pixel unit, according to an embodiment.
FIG. 32 is a diagram illustrating a method of determining, according to a template matching scheme, a location of a neighboring area to be used for split prediction of a current coding unit, according to an embodiment.
FIG. 33 illustrates a case in which reference picture information obtained from a neighboring area does not match a storage block of split-associated information in a reference picture, according to an embodiment.
FIG. 34 is a diagram illustrating a case in which a storage block of split-associated information is greater than a size of a current coding unit or a reference area to be used in prediction, according to an embodiment.
FIG. 35 is a diagram illustrating a method of determining a split scheme of a current coding unit by using a history of split prediction, according to an embodiment.
FIG. 36 is a diagram illustrating a method of uniformly splitting a largest coding unit into preset size blocks and performing block split with respect to storage blocks, according to an embodiment.
FIG. 37 is a diagram in which a coding order of storage blocks generated via QT split is compared with a coding order of storage blocks generated as preset size blocks via uniform split, according to an embodiment.

### Best Mode for Carrying out the Invention

According to an embodiment of the present disclosure, a video decoding method may include determining whether to apply split prediction for a current coding unit, when the split prediction is applied to the current coding unit, determining a neighboring area of the current coding unit, wherein the neighboring area is to be used in the split prediction, predicting a split scheme for the current coding unit by using split-associated information obtained from the neighboring area, when the split scheme indicates a split of the current coding unit, determining at least one lower coding unit by splitting the current coding unit according to the split scheme, and when the split scheme indicates no split of the current coding unit, decoding the current coding unit. Here, the neighboring area may be an area within a current picture including the current coding unit or may be an area within a picture decoded before the current picture. Also, the split-associated information may include at least one of size information and depth information of at least one coding unit included in the neighboring area.

According to an embodiment, a video decoding apparatus may include: a coding unit split predictor configured to determine whether to apply split prediction for a current coding unit, when the split prediction is applied to the current coding unit, determine a neighboring area of the current coding unit, wherein the neighboring area is to be used in the split prediction, and predict a split scheme for the current coding unit by using split-associated information obtained from the neighboring area; a coding unit determiner configured to, when the split scheme indicates a split of the current coding unit, determine at least one lower coding unit by splitting the current coding unit according to the split scheme, and a decoder configured to, when the split scheme indicates no split of the current coding unit, decode the current coding unit, wherein the neighboring area is an area within a current picture including the current coding unit or is an area within a picture decoded before the current picture, and the split-associated information includes at least one of size information and depth information of at least one coding unit included in the neighboring area.

According to an embodiment, a video encoding method may include: determining whether to apply split prediction to a current coding unit; when the split prediction is applied to the current coding unit, determining a neighboring area of the current coding unit, wherein the neighboring area is to be used for the split prediction; predicting a split scheme for the current coding unit by using split-associated information obtained from the neighboring area; when the split scheme indicates a split of the current coding unit, determining at least one lower coding unit by splitting the current coding unit according to the split scheme; and when the split scheme indicates no split of the current coding unit, encoding the current coding unit, wherein the neighboring area is an area within a current picture including the current coding unit or is an area within a picture encoded before the current picture, and the split-associated information includes at least one of size information and depth information of at least one coding unit included in the neighboring area.

According to an embodiment, a video encoding apparatus may include: coding unit split predictor configured to determine whether to apply split prediction to a current coding unit; when the split prediction is applied to the current coding unit, determine a neighboring area of the current coding unit, wherein the neighboring area is to be used for the split prediction, and predict a split scheme for the current coding unit by using split-associated information obtained from the neighboring area; a coding unit determiner configured to, when the split scheme indicates a split of the current coding unit, determineg at least one lower coding unit by splitting the current coding unit according to the split scheme; and an encoder configured to, when the split scheme indicates no split of the current coding unit, encode the current coding unit, wherein the neighboring area is an area within a current picture including the current coding unit or is an area within a picture encoded before the current picture, and the split-associated information includes at least one of size information and depth information of at least one coding unit included in the neighboring area.

According to an embodiment, a computer-readable recording medium may store a bitstream generated by a video encoding method including: determining whether to apply split prediction to a current coding unit; when the split prediction is applied to the current coding unit, determining a neighboring area of the current coding unit, wherein the neighboring area is to be used for the split prediction; predicting a split scheme for the current coding unit by using split-associated information obtained from the neighboring area; when the split scheme indicates a split of the current coding unit, determining at least one lower coding unit by splitting the current coding unit according to the split scheme; and when the split scheme indicates no split of the current coding unit, encoding the current coding unit, wherein the neighboring area is an area within a current picture including the current coding unit or is an area within a picture encoded before the current picture, and the split-associated information includes at least one of size information and depth information of at least one coding unit included in the neighboring area.

According to an embodiment, a computer-readable recording medium may store a bitstream generated by a video encoding method, the bitstream including encoded data of a current coding unit, and the video encoding method including: determining whether to apply split prediction to the current coding unit; when the split prediction is applied to the current coding unit, determining a neighboring area of the current coding unit, wherein the neighboring area is to be used for the split prediction; predicting a split scheme for the current coding unit by using split-associated information obtained from the neighboring area; when the split scheme indicates a split of the current coding unit, determining at least one lower coding unit by splitting the current coding unit according to the split scheme; and when the split scheme indicates no split of the current coding unit, encoding the current coding unit, wherein the neighboring area is an area within a current picture including the current coding unit or is an area within a picture encoded before the current picture, and the split-associated information includes at least one of size information and depth information of at least one coding unit included in the neighboring area.

### Mode for the Invention

As the present disclosure allows for various changes and numerous embodiments, particular embodiments will be illustrated in the drawings and described in detail in the written descriptions. However, this is not intended to limit the present disclosure to particular modes of practice, and it is to be appreciated that all changes, equivalents, and substitutes that do not depart from the spirit and technical scope of the present disclosure are encompassed in the present disclosure.

In the descriptions of embodiments, detailed explanations of the related art are omitted when it is deemed that they may unnecessarily obscure the essence of the present disclosure. Also, numerals (e.g., "first", "second", and the like) in descriptions of the specification are used only to distinguish one element from another element.

Throughout the specification, it will also be understood that, when an element is referred to as being "connected to" or "coupled with" another element, it can be directly connected to or coupled with the other element, or it can be indirectly connected to or coupled with the other element by having an intervening element interposed therebetween.

In the present specification, regarding an element represented as a "unit" or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another component.

Also, in the present specification, an "image" or a "picture" may indicate a still image of a video or a moving image, i.e., the video itself.

Also, in the present specification, a "sample" indicates data allocated to a sampling position of an image, i.e., data to be processed. For example, pixel values of an image in a spatial domain and transform coefficients on a transform area may be samples. A unit including at least one such sample may be defined as a block.

Also, in the present specification, a "current block" may indicate a block of a largest coding unit, coding unit, prediction unit, or transform unit of a current image to be encoded or decoded.

Also, in the present specification, a motion vector in a list 0 direction may indicate a motion vector used to indicate a block in a reference picture included in a list 0, and a motion vector in a list 1 direction may indicate a motion vector used to indicate a block in a reference picture included in a list 1. Also, a motion vector in a unidirection may indicate a motion vector used to indicate a block in a reference picture included in a list 0 or list 1, and a motion vector in a bidirection may indicate that the motion vector includes a motion vector in a list 0 direction and a motion vector in a list 1 direction.

Also, in the present specification, a "binary split" of a block indicates a split for generating two subblocks of which a width or height is half the width or height of the block. In detail, when a "binary vertical split" is performed on a current block, a split is performed in a vertical direction (longitudinal direction) at half the width of the current block, and thus, two subblocks having a width that is half the width of the current block and the same height as the current block may be generated. When a "binary horizontal split" is performed on the current block, a split is performed in a horizontal direction (traverse direction) at half the height of the current block, and thus, two subblocks having a height that is half the height of the current block and the same width as the current block may be generated.

Also, in the present specification, a "ternary split" of a block indicates a split for generating three subblocks of which the widths or heights are 1:2:1 of those of the block. In detail, when a "ternary vertical split" is performed on a current block, a split is performed in a vertical direction (longitudinal direction) at points of 1:2:1 of the width of the current block, and thus, two subblocks having a width that is 1/4 the width of the current block and the same height as the current block, and one subblock having a width that is 2/4 the width of the current block and the same height as the current block may be generated. When a "ternary horizontal split" is performed on the current block, a split is performed in a horizontal direction (traverse direction) at points of 1:2:1 of the height of the current block, and thus, two subblocks having a height that is 1/4 the height of the current block and the same width as the current block, and one subblock having a height that is 2/4 the height of the current block and the same width as the current block may be generated.

Also, in the present specification, a "quad split" of a block indicates a split for generating four subblocks of which the widths and heights are 1:1 of those of the block. In detail, when the "quad split" is performed on a current block, a split is performed in a vertical direction (longitudinal direction) at half the width of the current block and a split is performed in a horizontal direction (traverse direction) at half the height of the current block, and thus, four subblocks having a width that is 1/2 the width of the current block and a height that is 1/2 the height of the current block may be generated.

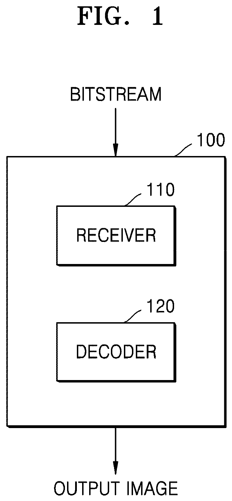

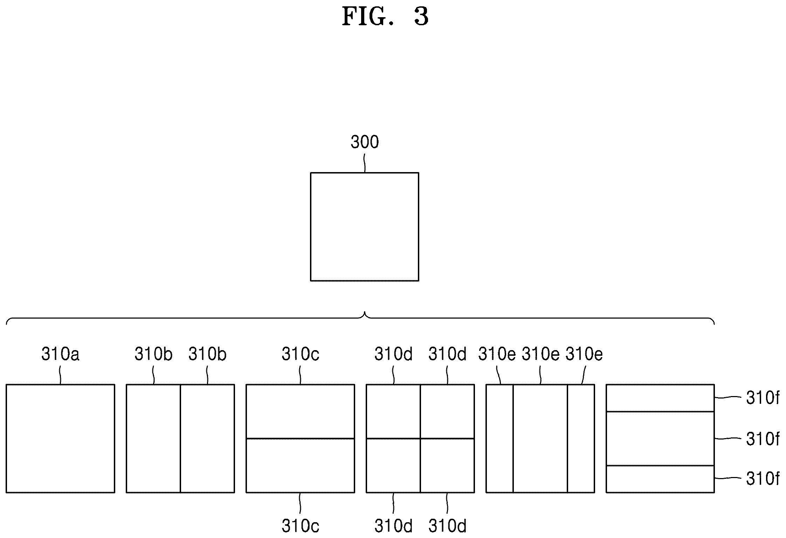

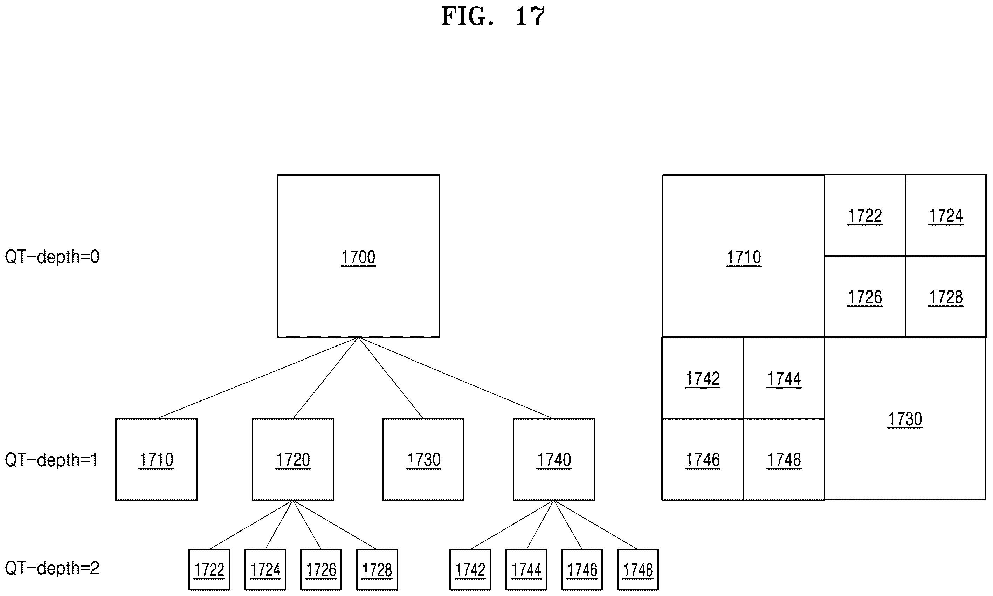

Hereinafter, an image encoding apparatus and an image decoding apparatus, and an image encoding method and an image decoding method according to embodiments will now be described with reference to FIGS. 1 to 16. A method of determining a data unit of an image, according to an embodiment, will be described with reference to FIGS. 3 to 16, and a video encoding/decoding method according to an embodiment, using the data unit determined according to FIGS. 3 to 16 will be described with reference to FIGS. 17 to 34.

Hereinafter, an image encoding apparatus and an image decoding apparatus, and an image encoding method and an image decoding method according to embodiments will be described with reference to FIGS. 1 to 16.

Hereinafter, with reference to FIGS. 1 to 16, an image encoding apparatus and an image decoding apparatus, and an image encoding method and an image decoding method according to embodiments will be described. With reference to FIGS. 3 to 16, a method of determining a data unit of an image according to an embodiment will be described, and with reference to FIGS. 17 to 37, a video encoding/decoding method performing prediction of a block partitioning method according to an embodiment will now be described below.

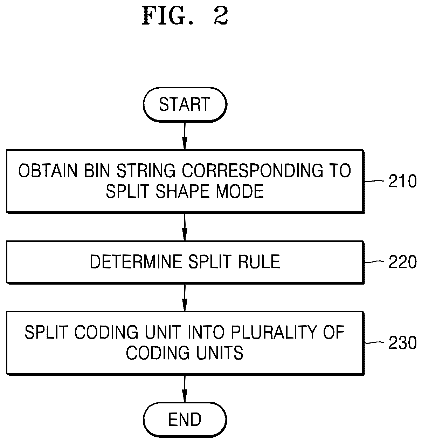

Hereinafter, a method and apparatus for adaptive selection based on various shapes of coding units, according to an embodiment of the present disclosure will be described with reference to FIGS. 1 and 2.

FIG. 1 illustrates a schematic block diagram of an image decoding apparatus according to an embodiment.

An image decoding apparatus 100 may include a receiver 110 and a decoder 120. The receiver 110 and the decoder 120 may include at least one processor. Also, the receiver 110 and the decoder 120 may include a memory storing instructions to be performed by the at least one processor.

The receiver 110 may receive a bitstream. The bitstream includes information of an image encoded by a video encoding apparatus 2200 to be described below. Also, the bitstream may be transmitted from the video encoding apparatus 2200. The video encoding apparatus 2200 and the image decoding apparatus 100 may be connected by wire or wirelessly, and the receiver 110 may receive the bitstream by wire or wirelessly. The receiver 110 may receive the bitstream from a storage medium such as an optical medium, a hard disk, or the like. The decoder 120 may reconstruct an image based on information obtained from the received bitstream. The decoder 120 may obtain, from the bitstream, a syntax element for reconstructing the image. The decoder 120 may reconstruct the image based on the syntax element.

Operations of the image decoding apparatus 100 will be described in detail with reference to FIG. 2.

FIG. 2 is a flowchart of an image decoding method according to an embodiment.

According to an embodiment of the present disclosure, the receiver 110 receives a bitstream.

The image decoding apparatus 100 obtains, from a bitstream, a bin string corresponding to a split shape mode of a coding unit (operation 210). The image decoding apparatus 100 determines a split rule of the coding unit (operation 220). Also, the image decoding apparatus 100 splits the coding unit into a plurality of coding units, based on at least one of the bin strings corresponding to the split shape mode and the split rule (operation 230). The image decoding apparatus 100 may determine an allowable first range of a size of the coding unit, according to a height to width ratio of the coding unit, so as to determine the split rule. The image decoding apparatus 100 may determine an allowable second range of the size of the coding unit, according to the split shape mode of the coding unit, so as to determine the split rule.

Hereinafter, splitting of a coding unit will be described in detail according to an embodiment of the present disclosure.

First, one picture may be split into one or more slices or one or more tiles. One slice or one tile may be a sequence of one or more largest coding units (coding tree units (CTUs)). There is a largest coding block (coding tree block (CTB)) conceptually compared to a largest coding unit (CTU).

The largest coding block (CTB) indicates an NxN block including NxN samples (where, N is an integer). Each color component may be split into one or more largest coding blocks.

A largest coding unit (CTU) of a case where a picture includes three sample arrays (sample arrays for Y, Cr, and Cb components) is a unit including a largest coding block of a luma sample, two corresponding largest coding blocks of chroma samples, and syntax structures used to encode the luma sample and the chroma samples. A largest coding unit of a case where a picture is a monochrome picture is a unit including a largest coding block of a monochrome sample and syntax structures used to encode the monochrome samples. A largest coding unit of a case where a picture is a picture encoded in color planes separated according to color components is a unit including syntax structures used to encode the picture and samples of the picture.

One largest coding block (CTB) may be split into MxN coding blocks including MxN samples (where, M and N are integers).

A coding unit (CU) of a case where a picture has sample arrays for Y, Cr, and Cb components is a unit including a coding block of a luma sample, two corresponding coding blocks of chroma samples, and syntax structures used to encode the luma sample and the chroma samples. A coding unit of a case where a picture is a monochrome picture is a unit including a coding block of a monochrome sample and syntax structures used to encode the monochrome samples. A coding unit of a case where a picture is a picture encoded in color planes separated according to color components is a unit including syntax structures used to encode the picture and samples of the picture.

As described above, a largest coding block and a largest coding unit are conceptually distinguished from each other, and a coding block and a coding unit are conceptually distinguished from each other. That is, a (largest) coding unit refers to a data structure including a (largest) coding block including a corresponding sample and a syntax structure corresponding to the (largest) coding block. However, because it is understood by one of ordinary skill in the art that a (largest) coding unit or a (largest) coding block refers to a block of a preset size including a preset number of samples, a largest coding block and a largest coding unit, or a coding block and a coding unit are mentioned in the following specification without being distinguished unless otherwise described.

An image may be split into largest coding units (CTUs). A size of each largest coding unit may be determined based on information obtained from a bitstream. A shape of each largest coding unit may be a square shape of the same size. However, the present disclosure is not limited thereto.

For example, information about a largest size of a luma coding block may be obtained from a bitstream. For example, the largest size of the luma coding block indicated by the information about the largest size of the luma coding block may be one of 4x4, 8x8, 16x16, 32x32, 64x64, 128x128, and 256x256.

For example, information about a luma block size difference and a largest size of a luma coding block that may be split into two may be obtained from a bitstream. The information about the luma block size difference may refer to a size difference between a luma largest coding unit and a largest luma coding block that may be split into two. Accordingly, when the information about the largest size of the luma coding block that may be split into two and the information about the luma block size difference obtained from the bitstream are combined with each other, a size of the luma largest coding unit may be determined. A size of a chroma largest coding unit may be determined by using the size of the luma largest coding unit. For example, when a Y:Cb:Cr ratio is 4:2:0 according to a color format, a size of a chroma block may be half a size of a luma block, and a size of a chroma largest coding unit may be half a size of a luma largest coding unit.

According to an embodiment, because information about a largest size of a luma coding block that is binary splittable is obtained from a bitstream, the largest size of the luma coding block that is binary splittable may be variably determined. In contrast, a largest size of a luma coding block that is ternary splittable may be fixed. For example, the largest size of the luma coding block that is ternary splittable in an I-picture may be 32x32, and the largest size of the luma coding block that is ternary splittable in a P-picture or a B-picture may be 64x64.

Also, a largest coding unit may be hierarchically split into coding units based on split shape mode information obtained from a bitstream. At least one of information indicating whether to perform quad splitting, information indicating whether to perform multi-splitting, split direction information, and split type information may be obtained as the split shape mode information from the bitstream.

For example, the information indicating whether to perform quad splitting may indicate whether a current coding unit is to be quad split (QUAD_SPLIT) or not.

When the current coding unit is not quad split, the information indicating whether to perform multi-splitting may indicate whether the current coding unit is to be no longer split (NO_SPLIT) or to be binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_ VER), and a split mode when the current coding unit is ternary split in the vertical direction may be determined to be a ternary vertical split mode SPLIT_TT_VER.

The image decoding apparatus 100 may obtain, from the bitstream, the bin string of the split shape mode information. A form of the bitstream received by the image decoding apparatus 100 may include fixed length binary code, unary code, truncated unary code, pre-determined binary code, or the like. The bin string is information in a binary number. The bin string may include at least one bit. The image decoding apparatus 100 may obtain the split shape mode information corresponding to the bin string, based on the split rule. The image decoding apparatus 100 may determine whether to quad-split a coding unit, whether not to split a coding unit, a split direction, and a split type, based on one bin string.

The coding unit may be smaller than or equal to the largest coding unit. For example, because a largest coding unit is a coding unit having a largest size, the largest coding unit is one of coding units. When split shape mode information about a largest coding unit indicates that splitting is not performed, a coding unit determined in the largest coding unit has the same size as that of the largest coding unit. When split shape mode information about a largest coding unit indicates that splitting is performed, the largest coding unit may be split into coding units. Also, when split shape mode information about a coding unit indicates that splitting is performed, the coding unit may be split into smaller coding units. However, the splitting of the image is not limited thereto, and the largest coding unit and the coding unit may not be distinguished. The splitting of the coding unit will be described in detail with reference to FIGS. 3 to 16.

Also, one or more prediction blocks for prediction may be determined from a coding unit. The prediction block may be equal to or smaller than the coding unit. Also, one or more transform blocks for transformation may be determined from a coding unit. The transform block may be equal to or smaller than the coding unit.

The shapes and sizes of the transform block and prediction block may not be related to each other.

In another embodiment, prediction may be performed by using a coding unit as a prediction unit. Also, transformation may be performed by using a coding unit as a transform block.

The splitting of the coding unit will be described in detail with reference to FIGS. 3 to 16. A current block and a neighboring block of the present disclosure may indicate one of the largest coding unit, the coding unit, the prediction block, and the transform block. Also, the current block of the current coding unit is a block that is currently being decoded or encoded or a block that is currently being split. The neighboring block may be a block reconstructed before the current block. The neighboring block may be spatially or temporally adjacent to the current block. The neighboring block may be located at one of lower left, left, upper left, top, upper right, right, lower right of the current block.

FIG. 3 illustrates a process, performed by an image decoding apparatus, of determining at least one coding unit by splitting a current coding unit, according to an embodiment.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a height to width ratio, or size of a coding unit.

The shape of the coding unit may include a square and a non-square. When the lengths of the width and height of the coding unit are the same (i.e., when the block shape of the coding unit is 4Nx4N), the image decoding apparatus 100 may determine the block shape information of the coding unit to be a square. The image decoding apparatus 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of the coding unit to be a non-square shape. When the shape of the coding unit is non-square, the image decoding apparatus 100 may determine the height to width ratio among the block shape information of the coding unit to be at least one of 1:2, 2:1, 1:4, 4:1, 1:8, 8:1, 1:16, 16:1, 1:32, or 32:1. Also, the image decoding apparatus 100 may determine whether the coding unit is in a horizontal direction or a vertical direction, based on the length of the width and the length of the height of the coding unit. Also, the image decoding apparatus 100 may determine the size of the coding unit, based on at least one of the length of the width, the length of the height, or the area of the coding unit.

According to an embodiment, the image decoding apparatus 100 may determine the shape of the coding unit by using the block shape information, and may determine a splitting method of the coding unit by using the split shape mode information. That is, a coding unit splitting method indicated by the split shape mode information may be determined based on a block shape indicated by the block shape information used by the image decoding apparatus 100.

The image decoding apparatus 100 may obtain the split shape mode information from a bitstream. However, an embodiment is not limited thereto, and the image decoding apparatus 100 and the video encoding apparatus 2200 may determine pre-agreed split shape mode information, based on the block shape information. The image decoding apparatus 100 may determine the pre-agreed split shape mode information with respect to a largest coding unit or a smallest coding unit. For example, the image decoding apparatus 100 may determine split shape mode information with respect to the largest coding unit to be a quad split. Also, the image decoding apparatus 100 may determine split shape mode information regarding the smallest coding unit to be "no split". In particular, the image decoding apparatus 100 may determine the size of the largest coding unit to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the largest coding unit of a 256x256 size, based on the split shape mode information. Also, the image decoding apparatus 100 may determine the size of the smallest coding unit to be 4x4. The image decoding apparatus 100 may obtain split shape mode information indicating "no split" with respect to the smallest coding unit.

According to an embodiment, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information of a current coding unit 300 indicates a square shape, the decoder 120 may determine that a coding unit 310a having the same size as the current coding unit 300 is not split, based on the split shape mode information indicating no split, or may determine coding units 310b, 310c, 310d, 310e, 310f, etc. split based on the split shape mode information indicating a preset splitting method.

Referring to FIG. 3, according to an embodiment, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment, the image decoding apparatus 100 may determine three coding units 310e obtained by splitting the current coding unit 300 in a vertical direction, based on the split shape mode information indicating to perform ternary-splitting in a vertical direction. The image decoding apparatus 100 may determine three coding units 310f obtained by splitting the current coding unit 300 in a horizontal direction, based on the split shape mode information indicating to perform ternary-splitting in a horizontal direction. However, splitting methods of the square coding unit are not limited to the above-described methods, and the split shape mode information may indicate various methods. Preset splitting methods of splitting the square coding unit will be described in detail below in relation to various embodiments.

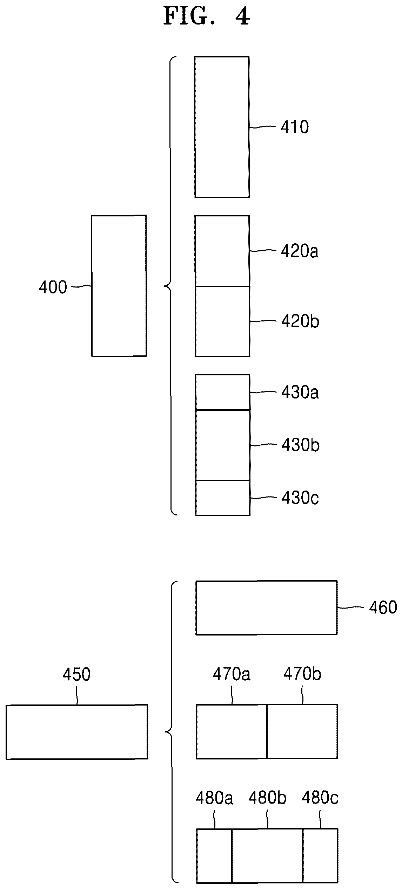

FIG. 4 illustrates a process, performed by an image decoding apparatus, of determining at least one coding unit by splitting a non-square coding unit, according to an embodiment.

According to an embodiment, the image decoding apparatus 100 may use block shape information indicating that a current coding unit has a non-square shape. The image decoding apparatus 100 may determine whether not to split the non-square current coding unit or whether to split the non-square current coding unit by using a preset splitting method, based on split shape mode information. Referring to FIG. 4, when the block shape information of a current coding unit 400 or 450 indicates a non-square shape, the image decoding apparatus 100 may determine that a coding unit 410 or 460 having the same size as the current coding unit 400 or 450 is not split, based on the split shape mode information indicating no split, or may determine coding units 420a, 420b, 430a, 430b, 430c, 470a, 470b, 480a, 480b, and 480c split based on the split shape mode information indicating a preset splitting method. Preset splitting methods of splitting a non-square coding unit will be described in detail below in relation to various embodiments.

According to an embodiment, the image decoding apparatus 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information.

According to an embodiment, when the image decoding apparatus 100 splits the non-square current coding unit 400 or 450 based on the split shape mode information, the image decoding apparatus 100 may consider the location of a long side of the non-square current coding unit 400 or 450 so as to split a current coding unit. For example, the image decoding apparatus 100 may determine a plurality of coding units by splitting the current coding unit 400 or 450 in a direction of splitting a long side of the current coding unit 400 or 450, in consideration of the shape of the current coding unit 400 or 450.

According to an embodiment, when the split shape mode information indicates to split (ternary-split) a coding unit into an odd number of blocks, the image decoding apparatus 100 may determine an odd number of coding units included in the current coding unit 400 or 450. For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c.

According to an embodiment, a height to width ratio of the current coding unit 400 or 450 may be 4:1 or 1:4. When the height to width ratio is 4:1, the block shape information may be a horizontal direction because the length of the width is longer than the length of the height. When the height to width ratio is 1:4, the block shape information may be a vertical direction because the length of the width is shorter than the length of the height. The image decoding apparatus 100 may determine to split a current coding unit into the odd number of blocks, based on the split shape mode information. Also, the image decoding apparatus 100 may determine a split direction of the current coding unit 400 or 450, based on the block shape information of the current coding unit 400 or 450. For example, when the current coding unit 400 is in the vertical direction, the image decoding apparatus 100 may determine the coding units 430a, 430b, and 430c by splitting the current coding unit 400 in the horizontal direction. Also, when the current coding unit 450 is in the horizontal direction, the image decoding apparatus 100 may determine the coding units 480a, 480b, and 480c by splitting the current coding unit 450 in the vertical direction.

According to an embodiment, the image decoding apparatus 100 may determine the odd number of coding units included in the current coding unit 400 or 450, and not all the determined coding units may have the same size. For example, a preset coding unit 430b or 480b from among the determined odd number of coding units 430a, 430b, and 430c, or 480a, 480b, and 480c may have a size different from the size of the other coding units 430a and 430c, or 480a and 480c. That is, coding units that may be determined by splitting the current coding unit 400 or 450 may have multiple sizes and, in some cases, all of the odd number of coding units 430a, 430b, and 430c, or 480a, 480b, and 480c may have different sizes.

According to an embodiment, when the split shape mode information indicates to split a coding unit into the odd number of blocks, the image decoding apparatus 100 may determine the odd number of coding units included in the current coding unit 400 or 450, and in addition, may put a preset restriction on at least one coding unit from among the odd number of coding units generated by splitting the current coding unit 400 or 450. Referring to FIG. 4, the image decoding apparatus 100 may set a decoding process regarding the coding unit 430b or 480b to be different from that of the other coding units 430a and 430c, or 480a or 480c, the coding unit 430b or 480b being located at the center among the three coding units 430a, 430b, and 430c or 480a, 480b, and 480c generated as the current coding unit 400 or 450 is split. For example, the image decoding apparatus 100 may restrict the coding unit 430b or 480b at the center location to be no longer split or to be split only a preset number of times, unlike the other coding units 430a and 430c, or 480a and 480c.

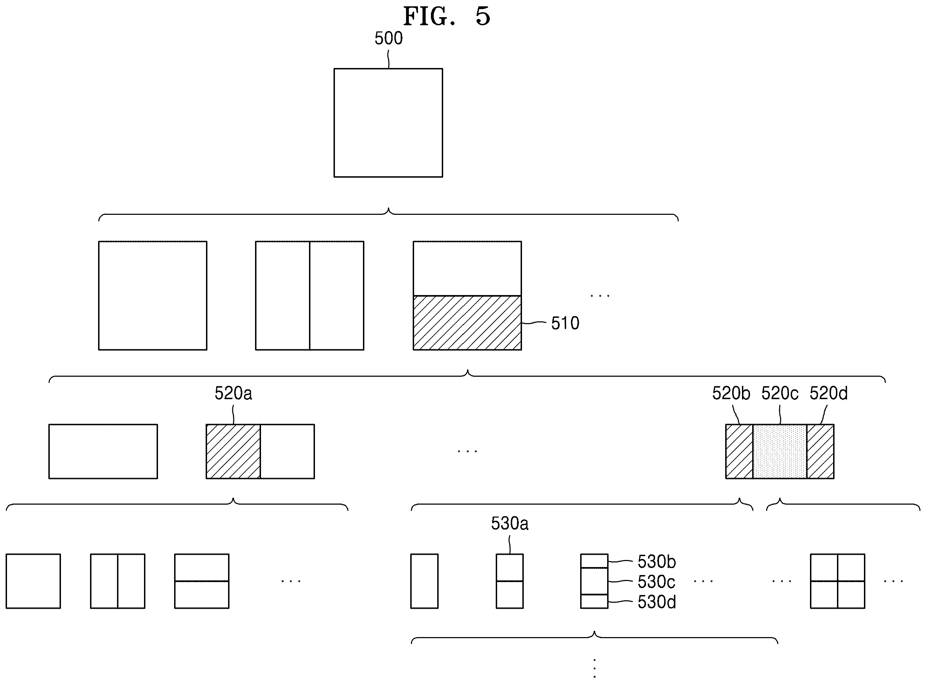

FIG. 5 illustrates a process, performed by an image decoding apparatus, of splitting a coding unit based on at least one of block shape information and split shape mode information, according to an embodiment.

According to an embodiment, the image decoding apparatus 100 may determine to split or not to split a square first coding unit 500 into coding units, based on at least one of the block shape information and the split shape mode information. According to an embodiment, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment are terms used to understand a relation before and after a coding unit is split. For example, a second coding unit may be determined by splitting a first coding unit, and a third coding unit may be determined by splitting the second coding unit. Hereinafter, it will be understood that the structure of the first coding unit, the second coding unit, and the third coding unit follows the above descriptions.

According to an embodiment, the image decoding apparatus 100 may determine to split or not to split the determined second coding unit 510 into coding units, based on the split shape mode information. Referring to FIG. 5, the image decoding apparatus 100 may or may not split the non-square second coding unit 510, which is determined by splitting the first coding unit 500, into one or more third coding units 520a, or 520b, 520c, and 520d based on the split shape mode information. The image decoding apparatus 100 may obtain the split shape mode information, and may obtain a plurality of various-shaped second coding units (e.g., the second coding unit 510) by splitting the first coding unit 500, based on the obtained split shape mode information, and the second coding unit 510 may be split by using a splitting method of the first coding unit 500 based on the split shape mode information. According to an embodiment, when the first coding unit 500 is split into the second coding units 510 based on the split shape mode information of the first coding unit 500, the second coding unit 510 may also be split into the third coding units (e.g., 520a, or 520b, 520c, and 520d) based on the split shape mode information of the second coding unit 510. That is, a coding unit may be recursively split based on the split shape mode information of each coding unit. Therefore, a square coding unit may be determined by splitting a non-square coding unit, and a non-square coding unit may be determined by recursively splitting the square coding unit.

Referring to FIG. 5, a preset coding unit from among the odd number of third coding units 520b, 520c, and 520d determined by splitting the non-square second coding unit 510 (e.g., a coding unit at a center location or a square coding unit) may be recursively split. According to an embodiment, the square third coding unit 520b from among the odd number of third coding units 520b, 520c, and 520d may be split in a horizontal direction into a plurality of fourth coding units. A non-square fourth coding unit 530b or 530d from among a plurality of fourth coding units 530a, 530b, 530c, and 530d may be split into a plurality of coding units again. For example, the non-square fourth coding unit 530b or 530d may be split into the odd number of coding units again. A method that may be used to recursively split a coding unit will be described below in relation to various embodiments.

According to an embodiment, the image decoding apparatus 100 may split each of the third coding units 520a, or 520b, 520c, and 520d into coding units, based on the split shape mode information. Also, the image decoding apparatus 100 may determine not to split the second coding unit 510 based on the split shape mode information. According to an embodiment, the image decoding apparatus 100 may split the non-square second coding unit 510 into the odd number of third coding units 520b, 520c, and 520d. The image decoding apparatus 100 may put a preset restriction on a preset third coding unit from among the odd number of third coding units 520b, 520c, and 520d. For example, the image decoding apparatus 100 may restrict the third coding unit 520c at a center location from among the odd number of third coding units 520b, 520c, and 520d to be no longer split or to be split a settable number of times.

Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a preset splitting method (e.g., split into only four coding units or split by using a splitting method of the second coding unit 510), or to be split only a preset number of times (e.g., split only n times (where n>0)). However, the restrictions on the third coding unit 520c at the center location are not limited to the above-described examples, and may include various restrictions for decoding the third coding unit 520c at the center location differently from the other third coding units 520b and 520d.

According to an embodiment, the image decoding apparatus 100 may obtain the split shape mode information, which is used to split a current coding unit, from a preset location in the current coding unit.

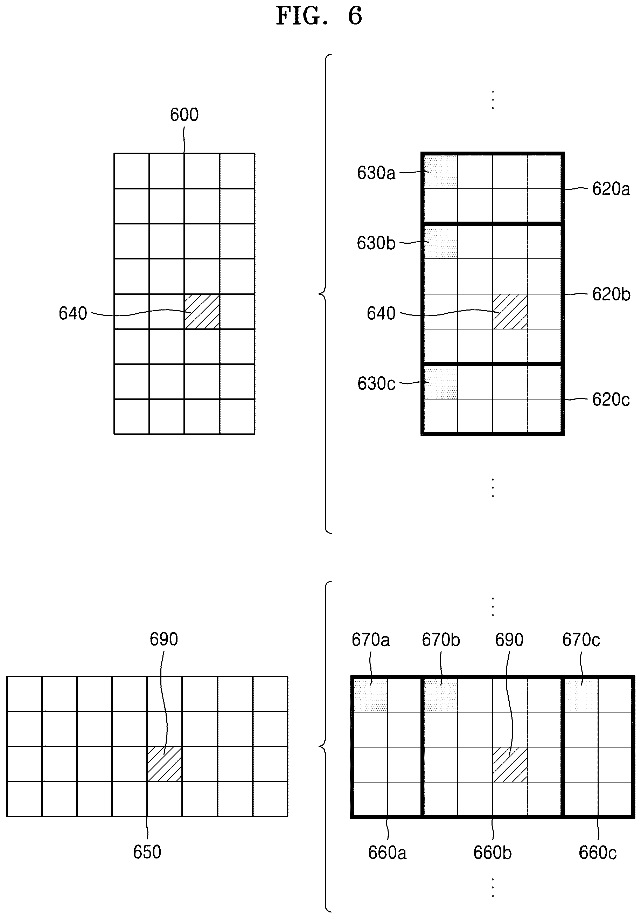

FIG. 6 illustrates a method, performed by an image decoding apparatus, of determining a preset coding unit from among an odd number of coding units, according to an embodiment.

Referring to FIG. 6, split shape mode information of a current coding unit 600 or 650 may be obtained from a sample of a preset location (e.g., a sample 640 or 690 of a center location) from among a plurality of samples included in the current coding unit 600 or 650. However, the preset location in the current coding unit 600, from which at least one piece of the split shape mode information may be obtained, is not limited to the center location in FIG. 6, and may include various locations included in the current coding unit 600 (e.g., top, bottom, left, right, upper left, lower left, upper right, and lower right locations). The image decoding apparatus 100 may obtain the split shape mode information from the preset location and may determine to split or not to split the current coding unit into various-shaped and various-sized coding units.

According to an embodiment, when the current coding unit is split into a preset number of coding units, the image decoding apparatus 100 may select one of the coding units. Various methods may be used to select one of a plurality of coding units, and descriptions of the methods will be described below in relation to various embodiments.

According to an embodiment, the image decoding apparatus 100 may split the current coding unit into a plurality of coding units, and may determine a coding unit at a preset location.

According to an embodiment, image decoding apparatus 100 may use information indicating locations of the odd number of coding units so as to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about the locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of preset samples included in the coding units 620a, 620b, and 620c. In detail, the image decoding apparatus 100 may determine the coding unit 620b at the center location by determining the locations of the coding units 620a, 620b, and 620c based on information indicating locations of upper left samples 630a, 630b, and 630c of the coding units 620a, 620b, and 620c.

According to an embodiment, the information indicating the locations of the upper left samples 630a, 630b, and 630c, which are included in the coding units 620a, 620b, and 620c, respectively, may include information about locations or coordinates of the coding units 620a, 620b, and 620c in a picture. According to an embodiment, the information indicating the locations of the upper left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment, information indicating the location of the upper left sample 630a of the upper coding unit 620a may include coordinates (xa, ya), information indicating the location of the upper left sample 630b of the middle coding unit 620b may include coordinates (xb, yb), and information indicating the location of the upper left sample 630c of the lower coding unit 620c may include coordinates (xc, yc). The image decoding apparatus 100 may determine the middle coding unit 620b by using the coordinates of the upper left samples 630a, 630b, and 630c which are included in the coding units 620a, 620b, and 620c, respectively. For example, when the coordinates of the upper left samples 630a, 630b, and 630c are sorted in an ascending or descending order, the coding unit 620b including the coordinates (xb, yb) of the sample 630b at a center location may be determined as a coding unit at a center location from among the coding units 620a, 620b, and 620c determined by splitting the current coding unit 600. However, the coordinates indicating the locations of the upper left samples 630a, 630b, and 630c may include coordinates indicating absolute locations in the picture, or may use coordinates (dxb, dyb) indicating a relative location of the upper left sample 630b of the middle coding unit 620b and coordinates (dxc, dyc) indicating a relative location of the upper left sample 630c of the lower coding unit 620c with reference to the location of the upper left sample 630a of the upper coding unit 620a. A method of determining a coding unit at a preset location by using coordinates of a sample included in the coding unit, as information indicating a location of the sample, is not limited to the above-described method, and may include various arithmetic methods of using the coordinates of the sample.

According to an embodiment, the image decoding apparatus 100 may split the current coding unit 600 into a plurality of coding units 620a, 620b, and 620c, and may select one of the coding units 620a, 620b, and 620c based on a preset criterion. For example, the image decoding apparatus 100 may select the coding unit 620b that has a size different from that of the others, from among the coding units 620a, 620b, and 620c.

According to an embodiment, the image decoding apparatus 100 may determine the width or height of each of the coding units 620a, 620b, and 620c by using the coordinates (xa, ya) that is the information indicating the location of the upper left sample 630a of the upper coding unit 620a, the coordinates (xb, yb) that is the information indicating the location of the upper left sample 630b of the middle coding unit 620b, and the coordinates (xc, yc) that is the information indicating the location of the upper left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment, the image decoding apparatus 100 may determine the width of the upper coding unit 620a to be the width of the current coding unit 600. The image decoding apparatus 100 may determine the height of the upper coding unit 620a to be yb-ya. According to an embodiment, the image decoding apparatus 100 may determine the width of the middle coding unit 620b to be the width of the current coding unit 600. The image decoding apparatus 100 may determine the height of the middle coding unit 620b to be yc-yb. According to an embodiment, the image decoding apparatus 100 may determine the width or height of the lower coding unit by using the width or height of the current coding unit or the widths or heights of the upper and middle coding units 620a and 620b. The image decoding apparatus 100 may determine a coding unit that has a size different from that of the others, based on the determined widths and heights of the coding units 620a, 620b, and 620c. Referring to FIG. 6, the image decoding apparatus 100 may determine the middle coding unit 620b that has a size different from the size of the upper and lower coding units 620a and 620c, as the coding unit of the preset location. However, the above-described method, performed by the image decoding apparatus 100, of determining a coding unit having a size different from the size of the other coding units merely corresponds to an example of determining a coding unit at a preset location by using the sizes of coding units that are determined based on coordinates of samples, and thus, various methods of determining a coding unit at a preset location by comparing the sizes of coding units that are determined based on coordinates of preset samples may be used.

The image decoding apparatus 100 may determine the width or height of each of the coding units 660a, 660b, and 660c by using the coordinates (xd, yd) that is information indicating the location of a upper left sample 670a of the left coding unit 660a, the coordinates (xe, ye) that is information indicating the location of a upper left sample 670b of the middle coding unit 660b, and the coordinates (xf, yf) that is information indicating a location of the upper left sample 670c of the right coding unit 660c. The image decoding apparatus 100 may determine the respective sizes of the coding units 660a, 660b, and 660c by using the coordinates (xd, yd), (xe, ye), and (xf, yf) indicating the locations of the coding units 660a, 660b, and 660c.

According to an embodiment, the image decoding apparatus 100 may determine the width of the left coding unit 660a to be xe-xd. The image decoding apparatus 100 may determine the height of the left coding unit 660a to be the height of the current coding unit 650. According to an embodiment, the image decoding apparatus 100 may determine the width of the middle coding unit 660b to be xf-xe. The image decoding apparatus 100 may determine the height of the middle coding unit 660b to be the height of the current coding unit 600. According to an embodiment, the image decoding apparatus 100 may determine the width or height of the right coding unit 660c by using the width or height of the current coding unit 650 or the widths or heights of the left and middle coding units 660a and 660b. The image decoding apparatus 100 may determine a coding unit that has a size different from that of the others, based on the determined widths and heights of the coding units 660a, 660b, and 660c. Referring to FIG. 6, the image decoding apparatus 100 may determine the middle coding unit 660b that has a size different from the sizes of the left and right coding units 660a and 660c, as the coding unit of the certain location. However, the above-described method, performed by the image decoding apparatus 100, of determining a coding unit having a size different from the size of the other coding units merely corresponds to an example of determining a coding unit at a preset location by using the sizes of coding units that are determined based on coordinates of samples, and thus, various methods of determining a coding unit at a preset location by comparing the sizes of coding units that are determined based on coordinates of certain samples may be used.

However, locations of samples considered to determine locations of coding units are not limited to the above-described upper left locations, and information about arbitrary locations of samples included in the coding units may be used.

According to an embodiment, the image decoding apparatus 100 may select a coding unit at a preset location from among an odd number of coding units determined by splitting the current coding unit, by considering the shape of the current coding unit. For example, when the current coding unit has a non-square shape, a width of which is longer than a height, the image decoding apparatus 100 may determine the coding unit at the preset location in a horizontal direction. That is, the image decoding apparatus 100 may determine one of coding units at different locations in a horizontal direction and may put a restriction on the coding unit. When the current coding unit has a non-square shape, a height of which is longer than a width, the image decoding apparatus 100 may determine the coding unit at the preset location in a vertical direction. That is, the image decoding apparatus 100 may determine one of coding units at different locations in a vertical direction and may put a restriction on the coding unit.

According to an embodiment, the image decoding apparatus 100 may use information indicating respective locations of an even number of coding units so as to determine the coding unit at the preset location from among the even number of coding units. The image decoding apparatus 100 may determine an even number of coding units by splitting (binary-splitting) the current coding unit, and may determine the coding unit at the preset location by using the information about the locations of the even number of coding units. An operation related thereto may correspond to the operation of determining a coding unit at a preset location (e.g., a center location) from among an odd number of coding units, which has been described in detail above in relation to FIG. 6, and thus, detailed descriptions thereof are not provided here.

According to an embodiment, when a non-square current coding unit is split into a plurality of coding units, preset information about a coding unit at a preset location may be used in a splitting operation to determine the coding unit at the preset location from among the plurality of coding units. For example, the image decoding apparatus 100 may use at least one of block shape information or split shape mode information, which is stored in a sample included in a middle coding unit, in a splitting operation to determine a coding unit at a center location from among the plurality of coding units determined by splitting the current coding unit.

Referring to FIG. 6, the image decoding apparatus 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding apparatus 100 may determine the coding unit 620b at the center location, in consideration of a location from which the split shape mode information is obtained. That is, the split shape mode information of the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment, preset information for identifying the coding unit at the preset location may be obtained from a preset sample included in a coding unit to be determined. Referring to FIG. 6, the image decoding apparatus 100 may use the split shape mode information that is obtained from a sample at a preset location in the current coding unit 600 (e.g., a sample at a center location of the current coding unit 600) to determine a coding unit at a preset location from among the plurality of the coding units 620a, 620b, and 620c determined by splitting the current coding unit 600 (e.g., a coding unit at a center location from among a plurality of split coding units). That is, the image decoding apparatus 100 may determine the sample at the preset location by considering a block shape of the current coding unit 600, may determine the coding unit 620b including a sample, from which certain information (e.g., the split shape mode information) may be obtained, from among the plurality of coding units 620a, 620b, and 620c determined by splitting the current coding unit 600, and may put a preset restriction on the coding unit 620b. Referring to FIG. 6, according to an embodiment, the image decoding apparatus 100 may determine the sample 640 at the center location of the current coding unit 600 as the sample from which the preset information may be obtained, and may put a preset restriction on the coding unit 620b including the sample 640, in a decoding operation. However, the location of the sample from which the preset information may be obtained is not limited to the above-described location, and may include arbitrary locations of samples included in the coding unit 620b to be determined for a restriction.

According to an embodiment, the location of the sample from which the preset information may be obtained may be determined based on the shape of the current coding unit 600. According to an embodiment, the block shape information may indicate whether the current coding unit has a square or non-square shape, and the location of the sample from which the preset information may be obtained may be determined based on the shape. For example, the image decoding apparatus 100 may determine a sample located on a boundary for splitting at least one of a width or height of the current coding unit in half, as the sample from which the preset information may be obtained, by using at least one of information about the width of the current coding unit or information about the height of the current coding unit. As another example, when the block shape information of the current coding unit indicates a non-square shape, the image decoding apparatus 100 may determine one of samples including a boundary for splitting a long side of the current coding unit in half, as the sample from which the preset information may be obtained.

According to an embodiment, when the current coding unit is split into a plurality of coding units, the image decoding apparatus 100 may use the split shape mode information so as to determine a coding unit at a preset location from among the plurality of coding units. According to an embodiment, the image decoding apparatus 100 may obtain the split shape mode information from a sample at a preset location in a coding unit, and may split the plurality of coding units, which are generated by splitting the current coding unit, by using the split shape mode information, which is obtained from the sample of the preset location in each of the plurality of coding units. That is, a coding unit may be recursively split based on the split shape mode information that is obtained from the sample at the preset location in each coding unit. An operation of recursively splitting a coding unit has been described above in relation to FIG. 5, and thus, detailed descriptions thereof are not provided here.

According to an embodiment, the image decoding apparatus 100 may determine one or more coding units by splitting the current coding unit, and may determine an order of decoding the one or more coding units, based on a preset block (e.g., the current coding unit).

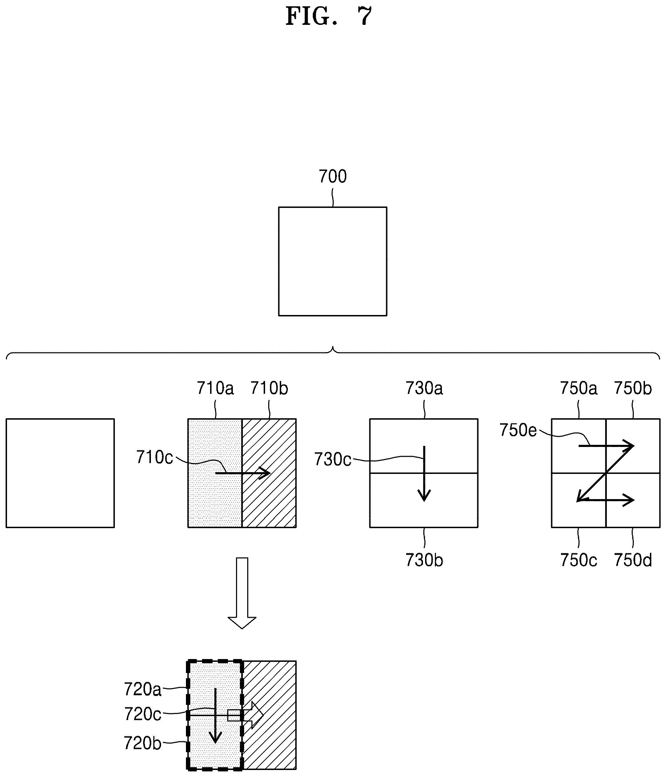

FIG. 7 illustrates an order of processing a plurality of coding units when an image decoding apparatus determines the plurality of coding units by splitting a current coding unit, according to an embodiment.

According to an embodiment, the image decoding apparatus 100 may determine second coding units 710a and 710b by splitting a first coding unit 700 in a vertical direction, may determine second coding units 730a and 730b by splitting the first coding unit 700 in a horizontal direction, or may determine second coding units 750a to 750d by splitting the first coding unit 700 in vertical and horizontal directions, based on split shape mode information.

Referring to FIG. 7, the image decoding apparatus 100 may determine to process the second coding units 710a and 710b that are determined by splitting the first coding unit 700 in a vertical direction, in a horizontal direction order 710c. The image decoding apparatus 100 may determine to process the second coding units 730a and 730b that are determined by splitting the first coding unit 700 in a horizontal direction, in a vertical direction order 730c. The image decoding apparatus 100 may determine to process the second coding units 750a to 750d that are determined by splitting the first coding unit 700 in vertical and horizontal directions, in a preset order for processing coding units in a row and then processing coding units in a next row (e.g., in a raster scan order or Z-scan order 750e).

According to an embodiment, the image decoding apparatus 100 may recursively split coding units. Referring to FIG. 7, the image decoding apparatus 100 may determine the plurality of coding units 710a, 710b, 730a, 730b, 750a, 750b, 750c, and 750d by splitting the first coding unit 700, and may recursively split each of the determined plurality of coding units 710a, 710b, 730a, 730b, 750a, 750b, 750c, and 750d. A splitting method of the plurality of coding units 710a, 710b, 730a, 730b, 750a, 750b, 750c, and 750d may correspond to a splitting method of the first coding unit 700. Accordingly, each of the plurality of coding units 710a, 710b, 730a, 730b, 750a, 750b, 750c, and 750d may be independently split into a plurality of coding units. Referring to FIG. 7, the image decoding apparatus 100 may determine the second coding units 710a and 710b by splitting the first coding unit 700 in a vertical direction, and may determine to independently split or not to split each of the second coding units 710a and 710b.

According to an embodiment, the image decoding apparatus 100 may determine third coding units 720a and 720b by splitting the left second coding unit 710a in a horizontal direction, and may not split the right second coding unit 710b.

According to an embodiment, a processing order of coding units may be determined based on an operation of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. Because the left and right second coding units 710a and 710b are processed in the horizontal direction order 710c, the right second coding unit 710b may be processed after the third coding units 720a and 720b included in the left second coding unit 710a are processed in the vertical direction order 720c. An operation of determining a processing order of coding units based on a coding unit before being split is not limited to the above-described example, and it should be understood that various methods may be used to independently process coding units that are split and determined to various shapes, in a preset order.

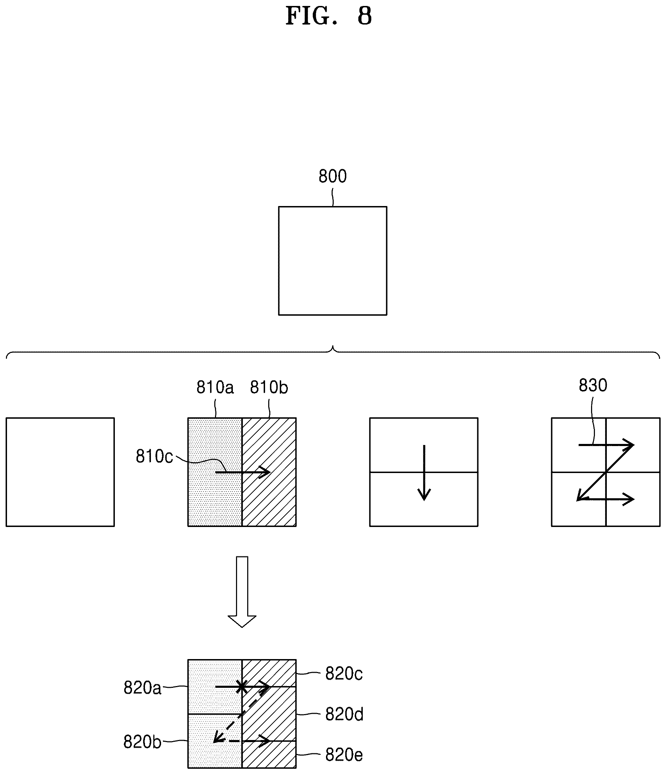

FIG. 8 illustrates a process, performed by an image decoding apparatus, of determining that a current coding unit is to be split into an odd number of coding units, when the coding units are not processable in a preset order, according to an embodiment.

According to an embodiment, the image decoding apparatus 100 may determine whether the current coding unit is split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c, 820d and 820e. According to an embodiment, the image decoding apparatus 100 may determine the plurality of third coding units 820a and 820b by splitting the left second coding unit 810a in a horizontal direction, and may split the right second coding unit 810b into the odd number of third coding units 820c to 820e.

According to an embodiment, the image decoding apparatus 100 may determine whether that is any coding unit being split into an odd number of coding units, by determining whether the third coding units 820a and 820b, and 820c to 820e are processable in a preset order. Referring to FIG. 8, the image decoding apparatus 100 may determine the third coding units 820a and 820b, and 820c, 820d and 820e by recursively splitting the first coding unit 800. The image decoding apparatus 100 may determine whether any of the first coding unit 800, the second coding units 810a and 810b, and the third coding units 820a and 820b, and 820c, 820d and 820e are split into an odd number of coding units, based on at least one of the block shape information or the split shape mode information. For example, the right second coding unit 810b among the second coding units 810a and 810b may be split into an odd number of third coding units 820c, 820d, and 820e. A processing order of a plurality of coding units included in the first coding unit 800 may be a preset order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the preset order.

According to an embodiment, the image decoding apparatus 100 may determine whether the third coding units 820a and 820b, and 820c, 820d and 820e included in the first coding unit 800 satisfy the condition for processing in the preset order, and the condition relates to whether at least one of a width or height of the second coding units 810a and 810b is split in half along a boundary of the third coding units 820a and 820b, and 820c, 820d and 820e. For example, the third coding units 820a and 820b that are determined when the height of the left second coding unit 810a of the non-square shape is split in half may satisfy the condition. It may be determined that the third coding units 820c to 820e do not satisfy the condition because the boundaries of the third coding units 820c to 820e that are determined when the right second coding unit 810b is split into three coding units are unable to split the width or height of the right second coding unit 810b in half. When the condition is not satisfied as described above, the image decoding apparatus 100 may determine disconnection of a scan order, and may determine that the right second coding unit 810b is split into an odd number of coding units, based on a result of the determination. According to an embodiment, when a coding unit is split into an odd number of coding units, the image decoding apparatus 100 may put a preset restriction on a coding unit at a preset location from among the split coding units, and the restriction or the preset location is described above in relation to various embodiments, and thus, detailed descriptions thereof are not provided here.

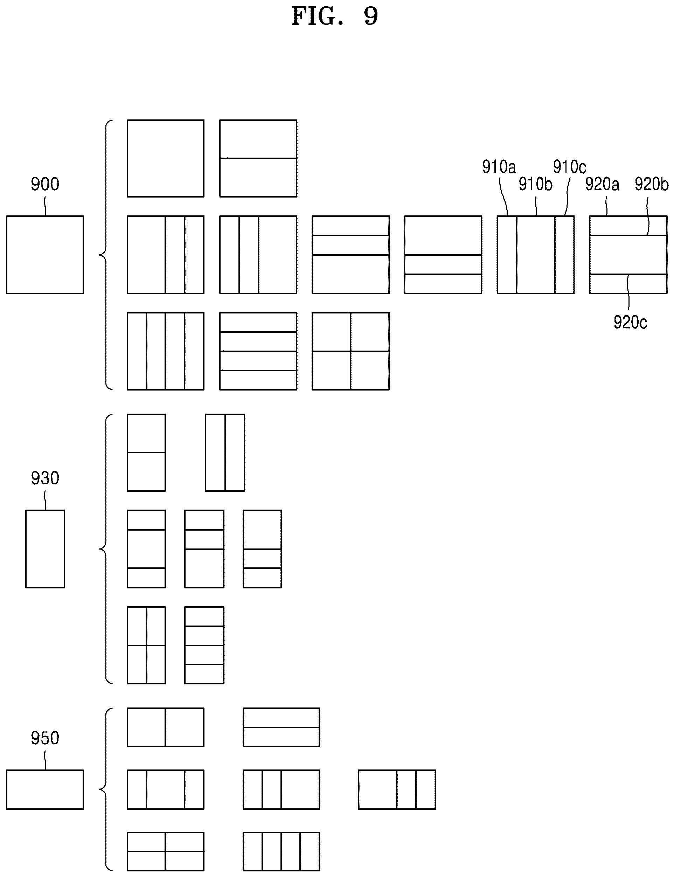

FIG. 9 illustrates a process, performed by an image decoding apparatus, of determining at least one coding unit by splitting a first coding unit, according to an embodiment.

According to an embodiment, the image decoding apparatus 100 may split the first coding unit 900, based on split shape mode information obtained via the receiver 110. The square first coding unit 900 may be split into four square coding units, or may be split into a plurality of non-square coding units. For example, referring to FIG. 9, when the split shape mode information indicates to split the first coding unit 900 into non-square coding units, the image decoding apparatus 100 may split the first coding unit 900 into a plurality of non-square coding units. In detail, when the split shape mode information indicates to determine an odd number of coding units by splitting the first coding unit 900 in a horizontal direction or a vertical direction, the image decoding apparatus 100 may split the square first coding unit 900 into an odd number of coding units that are second coding units 910a, 910b, and 910c determined by splitting the square first coding unit 900 in a vertical direction or second coding units 920a, 920b, and 920c determined by splitting the square first coding unit 900 in a horizontal direction.

According to an embodiment, the image decoding apparatus 100 may determine whether the second coding units 910a, 910b, 910c, 920a, 920b, and 920c included in the first coding unit 900 satisfy a condition for processing in a preset order, and the condition relates to whether at least one of a width or height of the first coding unit 900 is split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the width of the first coding unit 900 in half, it may be determined that the first coding unit 900 does not satisfy the condition for processing in the preset order. In addition, because boundaries of the second coding units 920a, 920b, and 920c determined by splitting the square first coding unit 900 in a horizontal direction do not split the height of the first coding unit 900 in half, it may be determined that the first coding unit 900 does not satisfy the condition for processing in the preset order. When the condition is not satisfied as described above, the image decoding apparatus 100 may determine disconnection of a scan order, and may determine that the first coding unit 900 is split into an odd number of coding units, based on a result of the determination. According to an embodiment, when a coding unit is split into an odd number of coding units, the image decoding apparatus 100 may put a preset restriction on a coding unit at a preset location from among the split coding units, and the restriction or the preset location is described above in relation to various embodiments, and thus, detailed descriptions thereof are not provided here.

According to an embodiment, the image decoding apparatus 100 may determine various-shaped coding units by splitting a first coding unit.

Referring to FIG. 9, the image decoding apparatus 100 may split the square first coding unit 900 or a non-square first coding unit 930 or 950 into various-shaped coding units.

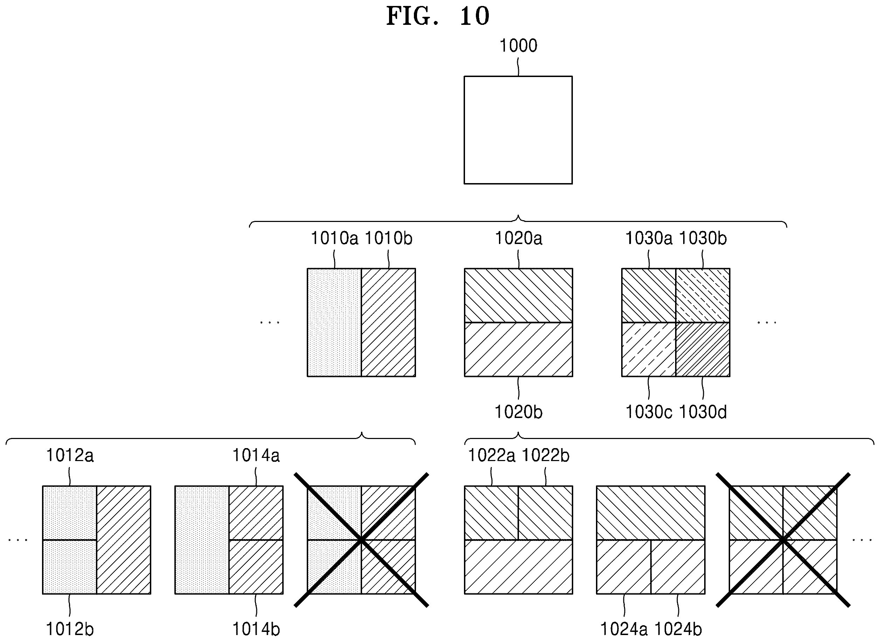

FIG. 10 illustrates that a shape into which a second coding unit is splittable is restricted when the second coding unit having a non-square shape, which is determined when an image decoding apparatus splits a first coding unit, satisfies a preset condition, according to an embodiment.

According to an embodiment, the image decoding apparatus 100 may determine to split the square first coding unit 1000 into non-square second coding units 1010a, 1010b, 1020a, and 1020b, based on split shape mode information obtained via the receiver 110. The second coding units 1010a, 1010b, 1020a, and 1020b may be independently split. Accordingly, the image decoding apparatus 100 may determine to split or not to split each of the second coding units 1010a, 1010b, 1020a, and 1020b into a plurality of coding units, based on the split shape mode information of each of the second coding units 1010a, 1010b, 1020a, and 1020b. According to an embodiment, the image decoding apparatus 100 may determine third coding units 1012a and 1012b by splitting the non-square left second coding unit 1010a that is determined by splitting the first coding unit 1000 in a vertical direction, in a horizontal direction. However, when the left second coding unit 1010a is split in a horizontal direction, the image decoding apparatus 100 may restrict the right second coding unit 1010b not to be split in a horizontal direction in which the left second coding unit 1010a is split. When third coding units 1014a and 1014b are determined by splitting the right second coding unit 1010b in a same direction, the third coding units 1012a and 1012b or 1014a and 1014b may be determined in a manner that the left and right second coding units 1010a and 1010b are independently split in a horizontal direction. However, this case serves equally as a case in which the image decoding apparatus 100 splits the first coding unit 1000 into four square second coding units 1030a, 1030b, 1030c, and 1030d, based on the split shape mode information, and may be inefficient in terms of image decoding.

According to an embodiment, the image decoding apparatus 100 may determine third coding units 1022a and 1022b or 1024a and 1024b by splitting the non-square second coding unit 1020a or 1020b which is determined by splitting the first coding unit 1000 in a horizontal direction, in a vertical direction. However, when a second coding unit (e.g., the upper second coding unit 1020a) is split in a vertical direction, for the above-described reason, the image decoding apparatus 100 may restrict the other second coding unit (e.g., the lower second coding unit 1020b) not to be split in a vertical direction in which the upper second coding unit 1020a is split.

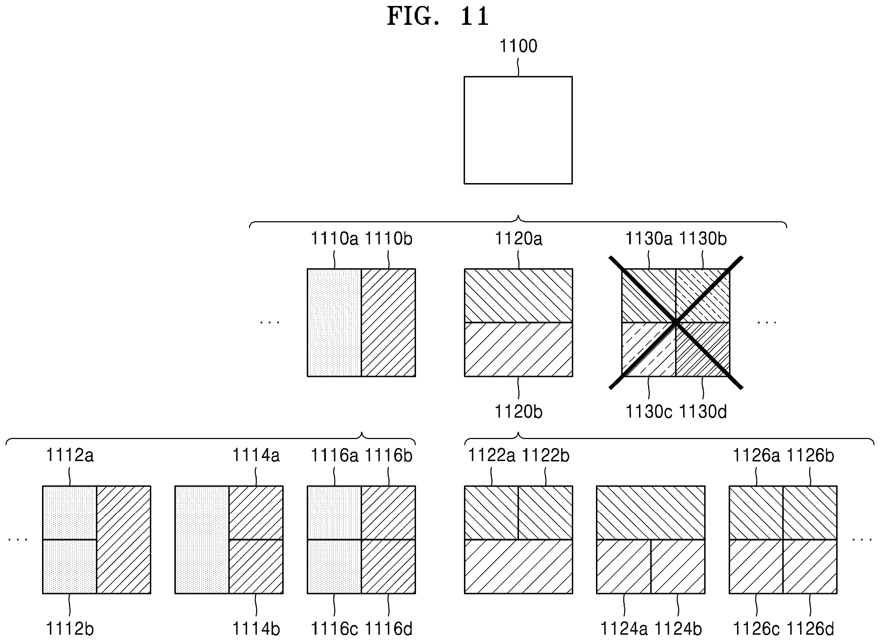

FIG. 11 illustrates a process, performed by an image decoding apparatus, of splitting a square coding unit when split shape mode information is unable to indicate that the square coding unit is split into four square coding units, according to an embodiment.

According to an embodiment, the image decoding apparatus 100 may determine second coding units 1110a, 1110b, 1120a, 1120b, etc. by splitting a first coding unit 1100, based on split shape mode information. The split shape mode information may include information about various methods of splitting a coding unit but, the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d. Based on the split shape mode information, the image decoding apparatus 100 may determine the non-square second coding units 1110a, 1110b, 1120a, 1120b, etc.

According to an embodiment, the image decoding apparatus 100 may independently split the non-square second coding units 1110a, 1110b, 1120a, 1120b, etc. Each of the second coding units 1110a, 1110b, 1120a, 1120b, etc. may be recursively split in a preset order, and this splitting method may correspond to a method of splitting the first coding unit 1100, based on the split shape mode information.

For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding apparatus 100 may determine square third coding units 1122a and 1122b by splitting the upper second coding unit 1120a in a vertical direction, and may determine square third coding units 1124a and 1124b by splitting the lower second coding unit 1120b in a vertical direction. Furthermore, the image decoding apparatus 100 may determine square third coding units 1126a, 1126b, 1126c, and 1126d by splitting both of the upper and lower second coding units 1120a and 1120b in a vertical direction. In this case, coding units having the same shape as the four square second coding units 1130a, 1130b, 1130c, and 1130d split from the first coding unit 1100 may be determined.

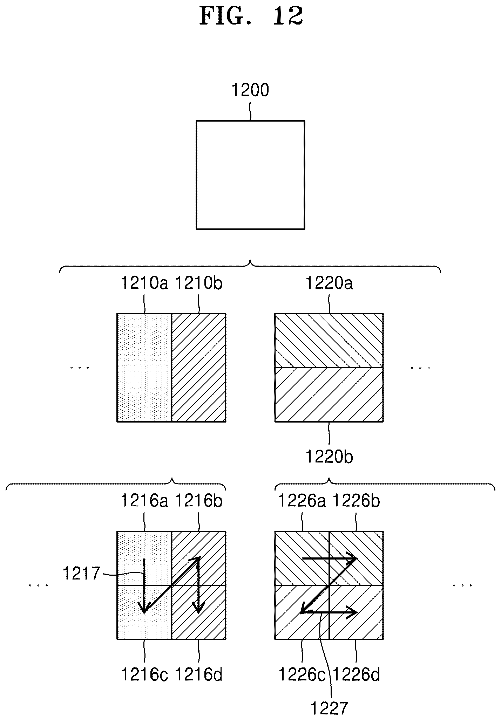

FIG. 12 illustrates that a processing order between a plurality of coding units may be changed depending on a process of splitting a coding unit, according to an embodiment.

According to an embodiment, the image decoding apparatus 100 may split a first coding unit 1200, based on split shape mode information. When a block shape indicates a square shape and the split shape mode information indicates to split the first coding unit 1200 in at least one of a horizontal direction and a vertical direction, the image decoding apparatus 100 may determine second coding units (for examples, second coding units 1210a, 1210b, 1220a, 1220b, etc.) by splitting the first coding unit 1200. Referring to FIG. 12, the non-square second coding units 1210a, 1210b, 1220a, and 1220b determined by splitting the first coding unit 1200 in only a horizontal direction or vertical direction may be independently split based on the split shape mode information of each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a horizontal direction. An operation of splitting the second coding units 1210a, 1210b, 1220a, and 1220b is described above with reference to FIG. 11, and thus, detailed descriptions thereof are not provided here.

According to an embodiment, the image decoding apparatus 100 may process coding units in a preset order. An operation of processing coding units in a predetermined order is described above with reference to FIG. 7, and thus, detailed descriptions thereof are not provided here. Referring to FIG. 12, the image decoding apparatus 100 may determine four square third coding units 1216a, 1216b, 1216c, and 1216d, and 1226a, 1226b, 1226c, and 1226d by splitting the square first coding unit 1200. According to an embodiment, the image decoding apparatus 100 may determine processing orders of the third coding units 1216a, 1216b, 1216c, and 1216d, and 1226a, 1226b, 1226c, and 1226d, based on a splitting method of the first coding unit 1200.

According to an embodiment, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1220b, respectively. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show same-shaped coding units split from the first coding unit 1200. Accordingly, by recursively splitting a coding unit in different manners based on the split shape mode information, the image decoding apparatus 100 may process a plurality of coding units in different orders even when the coding units are eventually determined to be the same shape.

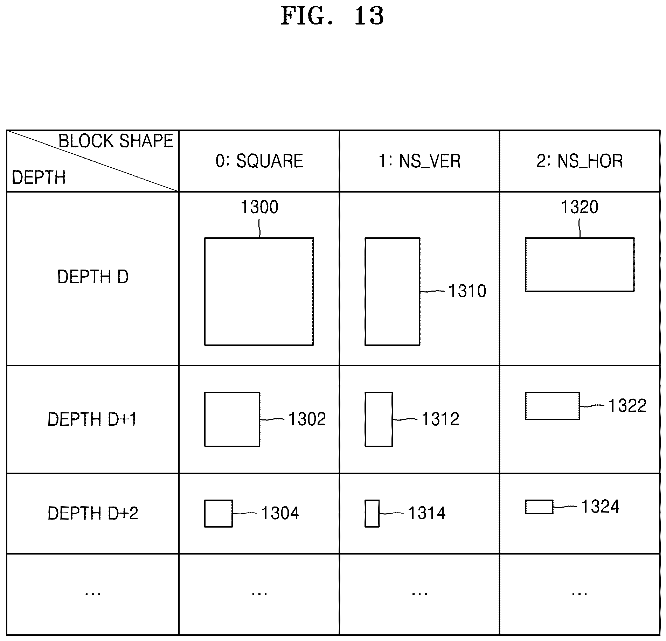

FIG. 13 illustrates a process of determining a depth of a coding unit as a shape and size of the coding unit change, when the coding unit is recursively split such that a plurality of coding units are determined, according to an embodiment.

According to an embodiment, the image decoding apparatus 100 may determine the depth of the coding unit, based on a preset criterion. For example, the preset criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. Hereinafter, a coding unit having an increased depth is expressed as a coding unit of a deeper depth.

Referring to FIG. 13, according to an embodiment, the image decoding apparatus 100 may determine a second coding unit 1302 and a third coding unit 1304 of deeper depths by splitting a square first coding unit 1300 based on block shape information indicating a square shape (for example, the block shape information may be expressed as '0: SQUARE'). Assuming that the size of the square first coding unit 1300 is 2N×2N, the second coding unit 1302 determined by splitting a width and height of the first coding unit 1300 in 1/2 may have a size of N×N. Furthermore, the third coding unit 1304 determined by splitting a width and height of the second coding unit 1302 in 1/2 may have a size of N/2×N/2. In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment, the image decoding apparatus 100 may determine a second coding unit 1312 or 1322 and a third coding unit 1314 or 1324 of deeper depths by splitting a non-square first coding unit 1310 or 1320 based on block shape information indicating a non-square shape (e.g., the block shape information may be expressed as '1: NS_VER' indicating a non-square shape, a height of which is longer than a width, or as '2: NS_HOR' indicating a non-square shape, a width of which is longer than a height).

The image decoding apparatus 100 may determine a second coding unit 1302, 1312, or 1322 by splitting at least one of a width and a height of the first coding unit 1310 having a size of N×2N. That is, the image decoding apparatus 100 may determine the second coding unit 1302 having a size of N×N or the second coding unit 1322 having a size of N×N/2 by splitting the first coding unit 1310 in a horizontal direction, or may determine the second coding unit 1312 having a size of N/2×N by splitting the first coding unit 1310 in horizontal and vertical directions.

According to an embodiment, the image decoding apparatus 100 may determine the second coding unit (e.g., the second coding unit 1302, 1312, 1322, etc.) by splitting at least one of a width and a height of the first coding unit 1320 having a size of 2N×N. That is, the image decoding apparatus 100 may determine the second coding unit 1302 having a size of N×N or the second coding unit 1312 having a size of N/2×N by splitting the first coding unit 1320 in a vertical direction, or may determine the second coding unit 1322 having a size of N×N/2 by splitting the first coding unit 1320 in horizontal and vertical directions.

According to an embodiment, the image decoding apparatus 100 may determine a third coding unit 1304, 1314, or 1324 by splitting at least one of a width and a height of the second coding unit 1302 having a size of N×N. That is, the image decoding apparatus 100 may determine the third coding unit 1304 having a size of N/2×N/2, the third coding unit 1314 having a size of N/4×N/2, or the third coding unit 1324 having a size of N/2×N/4 by splitting the second coding unit 1302 in vertical and horizontal directions.

According to an embodiment, the image decoding apparatus 100 may determine the third coding unit (e.g., the third coding unit 1304, 1314, 1324, etc.) by splitting at least one of a width and a height of the second coding unit 1312 having a size of N/2×N. That is, the image decoding apparatus 100 may determine the third coding unit 1304 having a size of N/2×N/2 or the third coding unit 1324 having a size of N/2×N/4 by splitting the second coding unit 1312 in a horizontal direction, or may determine the third coding unit 1314 having a size of N/4×N/2 by splitting the second coding unit 1312 in vertical and horizontal directions.

According to an embodiment, the image decoding apparatus 100 may determine the third coding unit (e.g., the third coding unit 1304, 1314, 1324, etc.) by splitting at least one of a width and a height of the second coding unit 1322 having a size of N×N/2. That is, the image decoding apparatus 100 may determine the third coding unit 1304 having a size of N/2×N/2 or the third coding unit 1314 having a size of N/4×N/2 by splitting the second coding unit 1322 in a vertical direction, or may determine the third coding unit 1324 having a size of N/2×N/4 by splitting the second coding unit 1322 in vertical and horizontal directions.

According to an embodiment, the image decoding apparatus 100 may split the square coding unit 1300, 1302, or 1304 in a horizontal or vertical direction. For example, the image decoding apparatus 100 may determine the first coding unit 1310 having a size of N×2N by splitting the first coding unit 1300 having a size of 2N×2N in a vertical direction, or may determine the first coding unit 1320 having a size of 2N×N by splitting the first coding unit 1300 in a horizontal direction. According to an embodiment, when a depth is determined based on the length of the longest side of a coding unit, a depth of a coding unit determined by splitting the first coding unit 1300 having a size of 2N×2N in a horizontal or vertical direction may be the same as the depth of the first coding unit 1300.

According to an embodiment, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2.

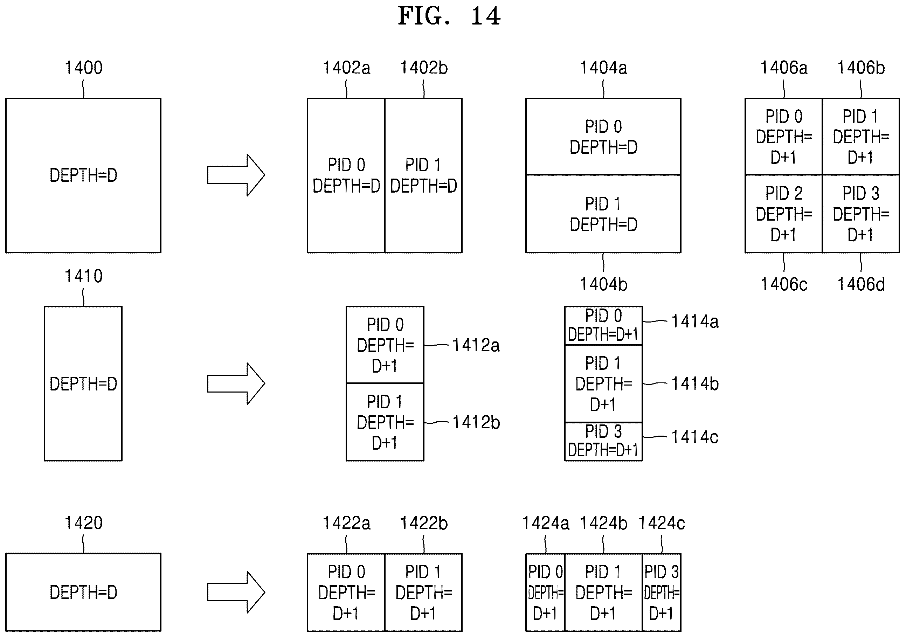

FIG. 14 illustrates depths that are determinable based on shapes and sizes of coding units, and part indexes (PIDs) that are for distinguishing the coding units, according to an embodiment.

According to an embodiment, the image decoding apparatus 100 may determine various-shape second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of a vertical direction and a horizontal direction based on split shape mode information. That is, the image decoding apparatus 100 may determine the second coding units 1402a and 1402b, 1404a and 1404b, and 1406a, 1406b, 1406c, and 1406d, based on the split shape mode information of the first coding unit 1400.

According to an embodiment, a depth of the second coding units 1402a and 1402b, 1404a and 1404b, and 1406a, 1406b, 1406c, and 1406d, which are determined based on the split shape mode information of the square first coding unit 1400, may be determined based on the length of a long side thereof. For example, because the length of a side of the square first coding unit 1400 equals the length of a long side of the non-square second coding units 1402a and 1402b, and 1404a and 1404b, the first coding unit 1400 and the non-square second coding units 1402a and 1402b, and 1404a and 1404b may have the same depth, e.g., D. However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is deeper than the depth D of the first coding unit 1400 by 1.

According to an embodiment, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment, depths of the second coding units 1412a and 1412b, and 1414a, 1414b, and 1414c, or 1422a and 1422b, and 1424a, 1424b, and 1424c that are determined based on the split shape mode information of the non-square first coding unit 1410 or 1420 may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is deeper than the depth D of the non-square first coding unit 1410 by 1.

Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is deeper than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410.

According to an embodiment, the image decoding apparatus 100 may determine PIDs for identifying split coding units, based on a size ratio between the coding units when an odd number of split coding units do not have equal sizes. Referring to FIG. 14, a coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Therefore, when a PID of the coding unit 1414b at the center location is 1 based on a scan order, a PID of the coding unit 1414c located next to the coding unit 1414b may be increased by 2 and thus, may be 3. That is, discontinuity in PID values may be present. According to an embodiment, the image decoding apparatus 100 may determine whether an odd number of split coding units do not have equal sizes, based on whether discontinuity is present in PIDs for identifying the split coding units.

According to an embodiment, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs indicating respective coding units so as to identify the respective coding units. According to an embodiment, the PID may be obtained from a sample of a preset location of each coding unit (e.g., an upper left sample).

According to an embodiment, the image decoding apparatus 100 may determine a coding unit at a preset location from among the split coding units, by using the PIDs for distinguishing the coding units. According to an embodiment, when the split shape mode information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units so as to determine a coding unit at a center location from among the coding units. The image decoding apparatus 100 may determine the coding unit 1414b having a PID corresponding to a middle value among the PIDs of the coding units, as the coding unit at the preset location from among the coding units determined by splitting the first coding unit 1410. According to an embodiment, the image decoding apparatus 100 may determine PIDs for distinguishing split coding units, based on a size ratio between the coding units when the split coding units do not have equal sizes. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus, may be 3. When the PID is not uniformly increased as described above, the image decoding apparatus 100 may determine that a coding unit is split into a plurality of coding units including a coding unit having a size different from that of the other coding units. According to an embodiment, when the split shape mode information indicates to split a coding unit into an odd number of coding units, the image decoding apparatus 100 may split a current coding unit in such a manner that a coding unit of a preset location among an odd number of coding units (e.g., a coding unit of a center location) has a size different from that of the other coding units. In this case, the image decoding apparatus 100 may determine the coding unit of the center location, which has a different size, by using PIDs of the coding units. However, the PIDs and the size or location of the coding unit of the preset location are not limited to the above-described examples, and various PIDs and various locations and sizes of coding units may be used.

According to an embodiment, the image decoding apparatus 100 may use a preset data unit where a coding unit starts to be recursively split.

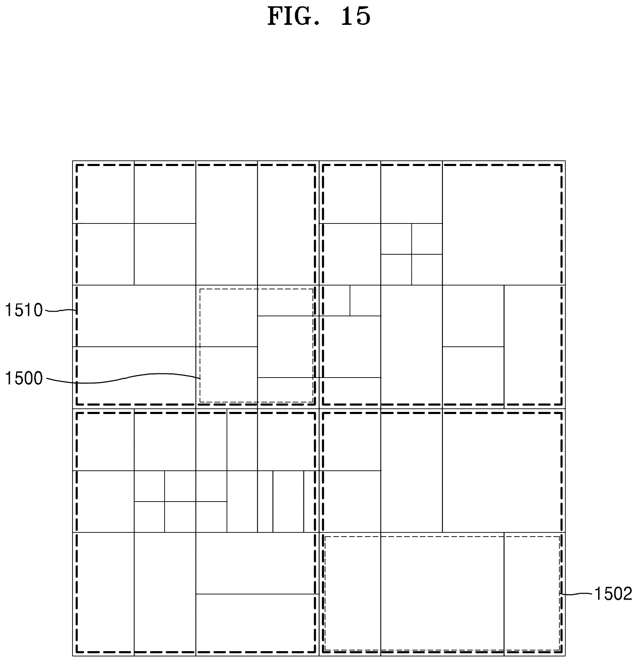

FIG. 15 illustrates that a plurality of coding units are determined based on a plurality of preset data units included in a picture, according to an embodiment.

According to an embodiment, a certain data unit may be defined as a data unit where a coding unit starts to be recursively split by using split shape mode information. That is, the preset data unit may correspond to a coding unit of an uppermost depth, which is used to determine a plurality of coding units split from a current picture. In the following descriptions, for convenience of descriptions, the preset data unit is referred to as a reference data unit.

According to an embodiment, the reference data unit may have a preset size and a preset size shape. According to an embodiment, the reference data unit may include M×N samples. Herein, M and N may be equal to each other, and may be integers expressed as powers of 2. That is, the reference data unit may have a square or non-square shape, and may be split into an integer number of coding units.

According to an embodiment, the image decoding apparatus 100 may split the current picture into a plurality of reference data units. According to an embodiment, the image decoding apparatus 100 may split the plurality of reference data units, which are split from the current picture, by using the split shape mode information of each reference data unit. The operation of splitting the reference data unit may correspond to a splitting operation using a quadtree structure.

According to an embodiment, the image decoding apparatus 100 may previously determine the smallest size allowed for the reference data units included in the current picture. Accordingly, the image decoding apparatus 100 may determine various reference data units having sizes equal to or greater than the smallest size, and may determine one or more coding units by using the split shape mode information with reference to the determined reference data unit.

Referring to FIG. 15, the image decoding apparatus 100 may use a square reference coding unit 1500 or a non-square reference coding unit 1502. According to an embodiment, the shape and size of reference coding units may be determined based on various data units capable of including one or more reference coding units (e.g., sequences, pictures, slices, slice segments, tiles, tile groups, largest coding units, or the like).

According to an embodiment, the receiver 110 of the image decoding apparatus 100 may obtain, from a bitstream, at least one of reference coding unit shape information and reference coding unit size information with respect to each of the various data units. An operation of splitting the square reference coding unit 1500 into one or more coding units is described above with reference to the operation of splitting the current coding unit 300 of FIG. 3, and an operation of splitting the non-square reference coding unit 1502 into one or more coding units is described above with reference to the operation of splitting the current coding unit 400 or 450 of FIG. 4. Thus, detailed descriptions thereof are not provided here.

According to an embodiment, the image decoding apparatus 100 may use a PID for identifying the size and shape of reference coding units, to determine the size and shape of reference coding units according to some data units previously determined based on a preset condition. That is, the receiver 110 may obtain, from the bitstream, only the PID for identifying the size and shape of reference coding units with respect to each slice, slice segment, tile, tile group, or largest coding unit which is a data unit satisfying a preset condition (e.g., a data unit having a size equal to or smaller than a slice) among the various data units (e.g., sequences, pictures, slices, slice segments, tiles, tile groups, largest coding units, or the like). The image decoding apparatus 100 may determine the size and shape of reference data units with respect to each data unit, which satisfies the preset condition, by using the PID. When the reference coding unit shape information and the reference coding unit size information are obtained and used from the bitstream according to each data unit having a relatively small size, efficiency of using the bitstream may not be high, and therefore, only the PID may be obtained and used instead of directly obtaining the reference coding unit shape information and the reference coding unit size information. In this case, at least one of the size and shape of reference coding units corresponding to the PID for identifying the size and shape of reference coding units may be previously determined. That is, the image decoding apparatus 100 may determine at least one of the size and the shape of reference coding units included in a data unit serving as a unit for obtaining the PID, by selecting the previously determined at least one of the size and the shape of reference coding units based on the PID.

According to an embodiment, the image decoding apparatus 100 may use one or more reference coding units included in a largest coding unit. That is, a largest coding unit split from a picture may include one or more reference coding units, and coding units may be determined by recursively splitting each reference coding unit. According to an embodiment, at least one of a width and a height of the largest coding unit may be integer times at least one of the width and the height of the reference coding units. According to an embodiment, the size of reference coding units may be obtained by splitting the largest coding unit n times based on a quadtree structure. That is, the image decoding apparatus 100 may determine the reference coding units by splitting the largest coding unit n times based on a quadtree structure, and may split the reference coding unit based on at least one of the block shape information and the split shape mode information according to various embodiments.

According to an embodiment, the image decoding apparatus 100 may obtain block shape information indicating the shape of a current coding unit or split shape mode information indicating a splitting method of the current coding unit, from the bitstream, and may use the obtained information. The split shape mode information may be included in the bitstream related to various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, a syntax element corresponding to the block shape information or the split shape mode information according to each largest coding unit, each reference coding unit, or each processing block, and may use the obtained syntax element.

Hereinafter, a method of determining a split rule, according to an embodiment of the present disclosure will be described in detail.

The image decoding apparatus 100 may determine a split rule of an image. The split rule may be previously determined between the image decoding apparatus 100 and the video encoding apparatus 2200. The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, or a tile group header. The image decoding apparatus 100 may determine the split rule differently according to frames, slices, tiles, temporal layers, largest coding units, or coding units.

The image decoding apparatus 100 may determine the split rule based on a block shape of a coding unit. The block shape may include a size, shape, a height to width ratio, and a direction of the coding unit. The image decoding apparatus 100 may previously determine to determine the split rule based on block shape information of a coding unit. However, the present disclosure is not limited thereto. The image decoding apparatus 100 may determine the split rule of the image, based on information obtained from a received bitstream.

The shape of the coding unit may include a square and a non-square. When the lengths of the width and height of the coding unit are the same, the image decoding apparatus 100 may determine the shape of the coding unit to be a square. Also, when the lengths of the width and height of the coding unit are not the same, the image decoding apparatus 100 may determine the shape of the coding unit to be a non-square.

A size of the coding unit may include various sizes such as 4x4, 8x4, 4x8, 8x8, 16x4, 16x8, ..., 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of the long sides as having the same size. Also, the image decoding apparatus 100 may apply the same split rule to coding units having the same lengths of long sides.

The height to width ratio of the coding unit may include 1:2, 2:1, 1:4, 4:1, 1:8, 8:1, 1:16, 16:1, 32:1, 1:32, or the like. Also, a direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit. The image decoding apparatus 100 may determine an allowable split type according to the size of the coding unit.

The split rule determined based on the size of the coding unit may be a split rule pre-determined in the image decoding apparatus 100. Also, the image decoding apparatus 100 may determine the split rule based on the information obtained from the bitstream.

The image decoding apparatus 100 may adaptively determine the split rule based on a location of the coding unit. The image decoding apparatus 100 may adaptively determine the split rule based on the location of the coding unit in the image.

Also, the image decoding apparatus 100 may determine the split rule such that coding units generated via different splitting paths do not have the same block shape. However, the present disclosure is not limited thereto, and the coding units generated via different splitting paths have the same block shape. The coding units generated via the different splitting paths may have different decoding processing orders. As the decoding processing orders are described above with reference to FIG. 12, details thereof are not provided here.

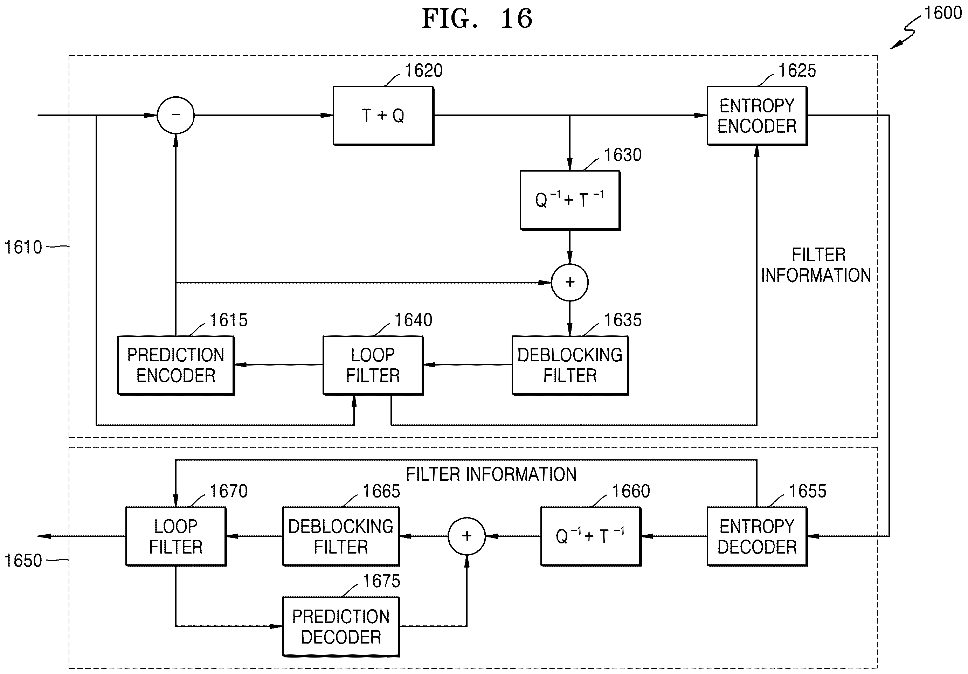

FIG. 16 is a block diagram of an image encoding and decoding system.

An encoding end 1610 of an image encoding and decoding system 1600 transmits an encoded bitstream of an image and a decoding end 1650 outputs a reconstructed image by receiving and decoding the bitstream. Here, the decoding end 1650 may have a similar configuration as the image decoding apparatus 100.

At the encoding end 1610, a prediction encoder 1615 outputs a reference image via inter-prediction and intra-prediction, and a transformer and quantizer 1616 quantizes residual data between a reference image and a current input image to a quantized transform coefficient and outputs the quantized transform coefficient. An entropy encoder 1625 transforms the quantized transform coefficient by encoding the quantized transform coefficient, and outputs the transformed quantized transform coefficient as a bitstream. The quantized transform coefficient is reconstructed as data of a spatial domain via an inverse quantizer and inverse transformer 1630, and the data of the spatial domain is output as a reconstructed image via a deblocking filter 1635 and a loop filter 1640. The reconstructed image may be used as a reference image of a next input image via the prediction encoder 1615.

Encoded image data among the bitstream received by the decoding end 1650 is reconstructed as residual data of a spatial domain via an entropy decoder 1655 and an inverse quantizer and inverse transformer 1660. Image data of a spatial domain is configured when a reference image and residual data output from a prediction decoder 1675 are combined, and a deblocking filter 1665 and a loop filter 1670 may output a reconstructed image regarding a current original image by performing filtering on the image data of the spatial domain. The reconstructed image may be used by the prediction decoder 1675 as a reference image for a next original image.

The loop filter 1640 of the encoding end 1610 performs loop filtering by using filter information input according to a user input or system setting. The filter information used by the loop filter 1640 is output to the entropy encoder 1610 and then is transmitted to the decoding end 1650 together with the encoded image data. The loop filter 1670 of the decoding end 1650 may perform loop filtering based on the filter information input from the decoding end 1650.

Hereinafter, with reference to FIGS. 17 to 37, a method of predicting a block partitioning method will now be described.

FIG. 17 is a diagram illustrating a split tree and QT depths of a CTU, according to an embodiment.

A CTU 1700 may be referred to as a coding tree unit or a largest coding unit. FIG. 17 illustrates a case in which a CTU or a CU is split only in a quadtree split mode. Hereinafter, a split in the quadtree split mode is referred to as a quad-split.

A QT depth indicates the number of quad-splits performed to generate a current coding unit from a CTU.

As the CTU 1700 is a CTU itself, a QT depth of the CTU 1700 is 0.

When it is determined that the CTU 1700 is not encoded or decoded at its size but is split into smaller CUs, the CTU 1700 may be split one time in a quad-split mode.

When the CTU 1700 is quad-split one time, a width of the CTU 1700 is split in half and a height thereof is split in half, such that four CUs 1710, 1720, 1730, and 1740 having the same size may be generated. As the CUs 1710, 1720, 1730, and 1740 are generated by being quad-split one time from the CTU, a QT depth of the CUs 1710, 1720, 1730, and 1740 is 1.

When it is determined that the CUs 1710 and 1730 are not split into smaller CUs, encoding or decoding may be performed at the size of the CUs 1710 and 1730.

When it is determined that the CUs 1720 and 1740 are not encoded or decoded at their sizes but are split into smaller CUs, the CUs 1720 and 1740 may be quad-split.

When the CU 1720 is quad-split one time, a width of the CU 1720 is split in half and a height thereof is split in half, such that four CUs 1722, 1724, 1726, and 1728 having the same size may be generated. It may be determined that the CUs 1722, 1724, 1726, and 1728 are not split into smaller CUs but are encoded or decoded at sizes of the CUs 1722, 1724, 1726, and 1728.

When the CU 1740 is quad-split one time, a width of the CU 1740 is split in half and a height thereof is split in half, such that four CUs 1742, 1744, 1746, and 1748 having the same size may be generated. It may be determined that the CUs 1742, 1744, 1746, and 1748 are not split into smaller CUs but are encoded or decoded at sizes of the CUs 1742, 1744, 1746, and 1748.

As the CUs 1722, 1724, 1726, and 1728, and 1742, 1744, 1746, 1748 are generated by being quad-split twice from the CTU, a QT depth of the CUs 1722, 1724, 1726, and 1728, and 1742, 1744, 1746, 1748 is 2.

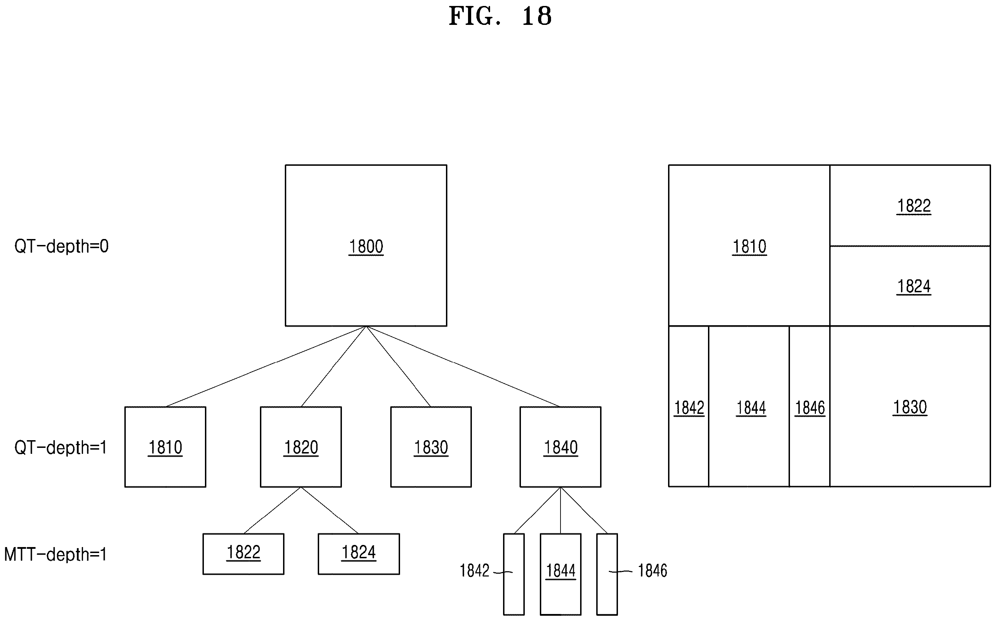

FIG. 18 is a diagram illustrating a split tree, a QT depth, and an MTT depth of a CTU, according to an embodiment.

A CTU 1800 may be referred to as a coding tree unit or a largest coding unit. FIG. 18 illustrates a case in which a CTU or a CU is split in a quadtree split mode or a multitree split mode. Hereinafter, a split in the multitree split mode is referred to as a multitree-split.

A QT depth indicates the number of quad-splits performed to generate a current coding unit from a CTU. An MTT depth indicates the number of multitree-splits performed to generate a current coding unit from a CTU. A multitree-split may be at least one of a vertical binary split, a horizontal binary split, a horizontal ternary split, or a vertical ternary split.

As the CTU 1800 is a CTU itself, a QT depth of the CTU 1800 is 0.

When it is determined that the CTU 1800 is not encoded or decoded at its size but is split into smaller CUs, the CTU 1800 may be quadtree split one time.

When the CTU 1800 is quad-split one time, a width of the CTU 1800 is split in half and a height thereof is split in half, such that four CUs 1810, 1820, 1830, and 1840 having the same size may be generated. As the CUs 1810, 1820, 1830, and 1840 are generated by being quad-split one time from the CTU, a QT depth of the CUs 1810, 1820, 1830, and 1840 is 1.

When it is determined that the CUs 1810 and 1830 are not split into smaller CUs, encoding or decoding may be performed at the size of the CUs 1810 and 1830.

When it is determined that the CUs 1820 and 1840 are not encoded or decoded at their sizes but are split into smaller CUs, the CUs 1820 and 1840 may be quad-split or multitree-split.

When the CU 1820 is horizontally binary split one time, a height of the CU 1820 is split in half, and thus, two CUs 1822 and 1824 may be generated. It may be determined that the CUs 1822 and 1824 are not split into smaller CUs but are encoded or decoded at sizes of the CUs 1822 and 1824. As the CUs 1822 and 1824 are generated by being multitree-split one time from the CTU 1800, an MTT depth of the CUs 1822 and 1824 is 1.

When the CU 1840 is vertically ternary split one time, a width of the CU 1840 is split into three parts according to a preset ratio, and thus, three CUs 1842, 1844, and 1846 may be generated. It may be determined that the CUs 1842, 1844, and 1846 are not split into smaller CUs but are encoded or decoded at sizes of the CUs 1842, 1844, and 1846. The CUs 1842, 1844, and 1846 are generated by being multitree-split one time from the CTU 1800, an MTT depth of the CUs 1842, 1844, and 1846 is 1.

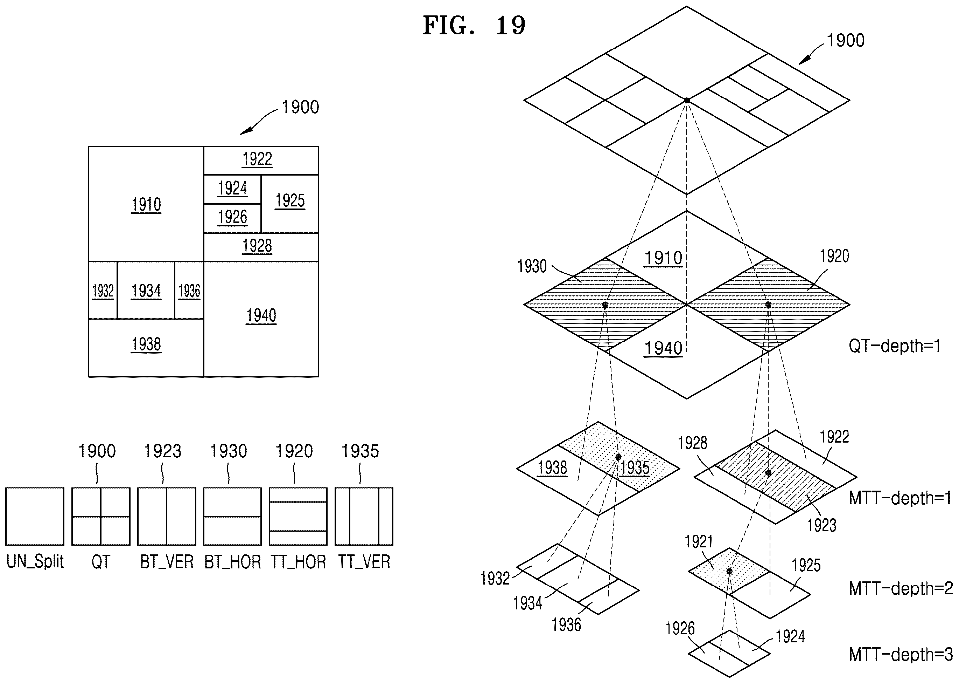

FIG. 19 is a diagram illustrating split types for generating a split tree, a QT depth, MTT depths, and each coding unit of a CTU, according to an embodiment.

A CTU 1900 may be split into four CUs 1910, 1920, 1930, and 1940 via a quad-split 1900. Therefore, a QT depth of the CUs 1910, 1920, 1930, and 1940 is 1. The CUs 1910 and 1940 may not be split into smaller CUs, and encoding or decoding may be performed thereon.

The CUs 1920 and 1930 may be split into smaller CUs.

The CU 1920 may be split into three CUs 1922, 1923, and 1928 via a horizontal ternary split TT_HOR. Therefore, an MTT depth of the CUs 1922, 1923, and 1928 is 1. The CUs 1922 and 1928 may not be split into smaller CUs, and encoding or decoding may be performed thereon. The CU 1923 may be split into two CUs 1921 and 1925 via a vertical binary split BT_VER. Therefore, an MTT depth of the CUs 1921 and 1925 is 2. The CU 1925 may not be split into smaller CUs, and encoding or decoding may be performed thereon. The CU 1921 may be split into two CUs 1924 and 1926 via a horizontal binary split BT_HOR. Therefore, an MTT depth of the CUs 1924 and 1926 is 3. The CUs 1924 and 1926 may not be split into smaller CUs, and encoding or decoding may be performed thereon.

The CU 1930 may be split into two CUs 1935 and 1938 via a horizontal binary split BT_HOR. Therefore, an MTT depth of the CUs 1935 and 1938 is 1. The CU 1938 may not be split into smaller CUs, and encoding or decoding may be performed thereon. The CU 1935 may be split into three CUs 1932, 1934, and 1936 via a vertical ternary split TT_VER. Therefore, an MTT depth of the CUs 1932, 1934, and 1936 is 1. The CUs 1932, 1934, and 1936 may not be split into smaller CUs, and encoding or decoding may be performed thereon.

According to an embodiment, split types No_split, QT, BT_HOR, BT_VER, TT_HOR, and TT_VER may respectively indicate no split, quadtree split, horizontal binary split, vertical binary split, horizontal ternary split, and vertical ternary split. In order to complete CTU split trees shown as examples via FIGS. 17, 18, and 19, one or more split types are requested. In particular, a split has to be performed one or more times so as to generate one CU among a CTU, and a split type of each split has to be determined. Split types used to determine CUs configuring a CTU split tree in an encoding process have to be equally used in a decoding process.

According to an embodiment, by signaling information indicating a split type used in a CU encoding process, a split type may be reconstructed in a CU decoding process. According to an embodiment, information indicating a used split type or a split type itself may be obtained via prediction in a CU encoding process, and in a CU decoding process, the information indicating the split type or the split type itself may be reconstructed via prediction in the same manner as the encoding process.

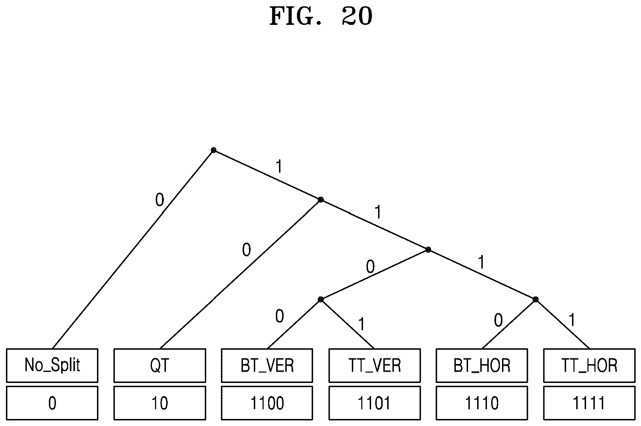

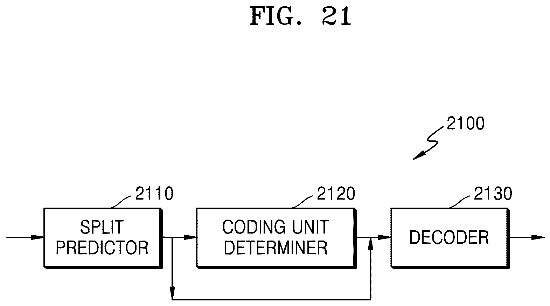

Hereinafter, with reference to FIG. 20, a bitstream of information indicating a split type will be first described, and with reference to FIGS. 21 to 37, a method of predicting a CU split type or a split scheme will be described.

FIG. 20 is a diagram illustrating a split-type indicating bitstream according to an embodiment.

The split-type indicating bitstream shown in FIG. 20 is determined according to a determination order of whether a CU is split or not, whether a quadtree split is performed, whether a binary split is performed, whether a horizontal split or a vertical split is performed, whether a binary split or a ternary split is performed.

In detail, when a current CU is not split into smaller CUs, a first bit of the split-type indicating bitstream is determined as 0, and it is completed with the first bit, without an additional bit. When the current CU is split, the first bit of the split-type indicating bitstream starts as 1.

In a case where the current CU is split and the first bit of the split-type indicating bitstream starts as 1, when it is quadtree split, a second bit is determined as 0, and when it is multitree split, the second bit is determined as 1.

When it is quadtree split, the split-type indicating bitstream is completed as 10 without an additional bit.

In a case of a multitree split, when it is vertically split, a third bit is determined as 0, and when it is horizontally split, the third bit is determined as 1. In a case of a binary split, a fourth bit is determined as 0, and in a case of a ternary split, the fourth bit is determined as 1. Therefore, when the current CU is multitree split, a bitstream indicating a vertical binary split is 1100, a bitstream indicating a vertical ternary split type is 1101, a bitstream indicating a horizontal binary split type is 1110, and a bitstream indicating a horizontal ternary split type is 1111.

A length of the split-type indicating bitstream for each CU is 1 to 4. As the number of CUs is very high in a video encoding and decoding process, a total amount of bitstream indicating split types of CUs may be significant. A largest size of a CTU (largest coding unit) supportable by a video codec standard increases, and a size of a smallest coding unit decreases. For example, a largest size of a CTU that is currently supportable is 128x128, and a size of a smallest CU is 4x4. As a split scheme varies to quadtree split (QT), a binary split (BT), a ternary split (TT), or the like, the number of combinations of split schemes performed on each coding unit increases in a split tree of coding units. Accordingly, an amount of split type-associated information transmitted to determine a split scheme for each coding unit also increases. For example, in a case where QT, BT, and TT are all allowed in a coding unit corresponding to each node of a split tree, as described above with reference to FIG. 20, an amount of bits transmitted according to each split mode varies, and it is predictable that an amount of bits sharply increases, compared to a case where only QT is available.

Therefore, in order to signal information indicating various split types of coding units in one split tree, a significant communication bandwidth or a significant amount of storage is required. Therefore, when a data amount of information indicating split types of coding units is decreased, information transmission or storage efficiency may be improved.

In the present specification, in order to decrease a data amount of CU split type indicating information or CU split scheme determining information so as to decrease a data amount of information indicating split types of CUs, a method of predicting a split scheme of a block including a CU is provided with reference to FIGS. 21 to 37.

FIG. 21 illustrates a block diagram of a video decoding apparatus according to an embodiment.

A video decoding apparatus 2100 according to an embodiment includes a split predictor 2110, a coding unit determiner 2120, and a decoder 2130. The video decoding apparatus 2100 according to an embodiment may include at least one processor, and the at least one processor may control at least one of the split predictor 2110, the coding unit determiner 2120, and the decoder 2130. At least one of the split predictor 2110, the coding unit determiner 2120, and the decoder 2130 may include a separate processor. One processor may include one core, or may include multiple cores.

According to an embodiment, the coding unit split predictor 2110 may determine whether to apply split prediction for a current coding unit. When split prediction is applied to the current coding unit, the coding unit split predictor 2110 may determine a neighboring area of the current coding unit which is to be used in split prediction. According to an embodiment, the neighboring area may be a current picture including the current coding unit or a picture decoded before the current picture.

According to an embodiment, the coding unit split predictor 2110 may predict a split scheme for the current coding unit by using split-associated information obtained from the neighboring area. According to an embodiment, the split-associated information may include at least one of size information and depth information of at least one coding unit included in the neighboring area.

According to an embodiment, when a split scheme determined before indicates a split of the current coding unit, the coding unit determiner 2120 may determine a lower coding unit by splitting the current coding unit according to the split scheme.

According to an embodiment, when the split scheme determined before indicates no split of the current coding unit, the decoder 2130 may decode the current coding unit. The decoder 2130 may obtain prediction samples by performing prediction on the current coding unit, and may obtain residual samples by performing inverse transformation on the current coding unit. The decoder 2130 may obtain reconstruction samples by combining the prediction samples and the residual samples of the current coding unit, and thus, may reconstruct the current coding unit.

When split prediction is not applied to the current coding unit, the coding unit determiner 2120 may parse, from a bitstream, split type information of the current coding unit. According to an embodiment, the split-associated information may include at least one of information indicating whether the current coding unit is not to be split or is to be split, information indicating whether, when split, it is to be quadtree split or multitree split, information indicating a split direction when it is to be multitree split, or information indicating the number of splits when it is to be multitree split. The coding unit determiner 2120 may split the current coding unit according to the parsed split type information. When the split type determined according to the parsed split type information indicates no split of the current coding unit, the decoder 2130 may decode the current coding unit.

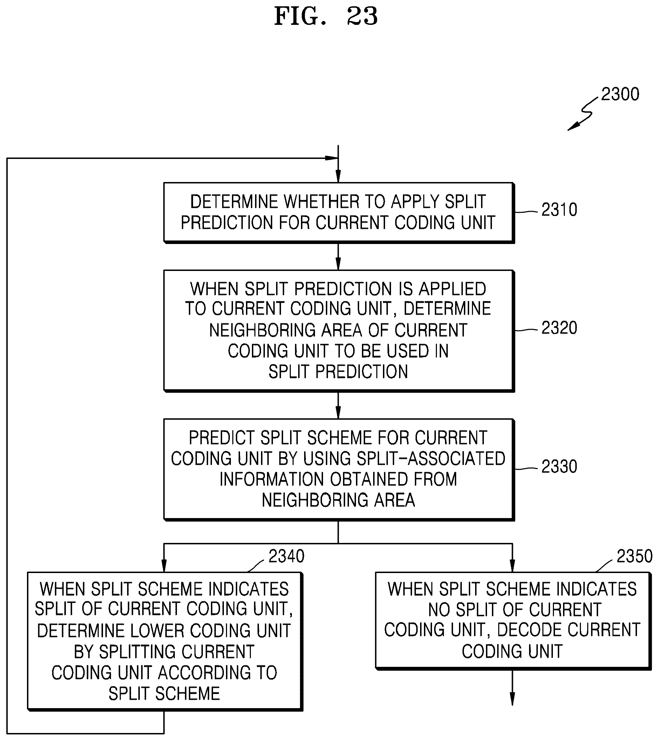

With reference to FIG. 23, an operation of each configuration of the video decoding apparatus will be described in detail below.

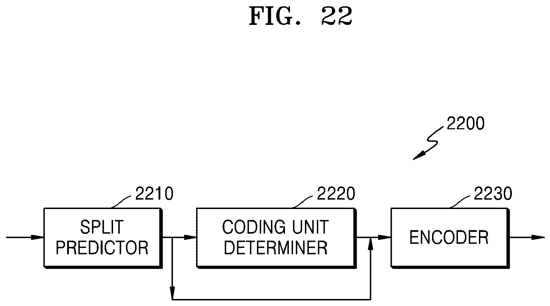

FIG. 22 illustrates a block diagram of a video encoding apparatus according to an embodiment.

According to an embodiment, the video encoding apparatus 2200 includes a coding unit split predictor 2210, a coding unit determiner 2220, and an encoder 2230. The video encoding apparatus 2200 according to an embodiment includes at least one processor, and the at least one processor may control at least one of the coding unit split predictor 2210, the coding unit determiner 2220, and the encoder 2230. At least one of the split predictor 2110, the coding unit determiner 2120, and the decoder 2130 may include a separate processor. One processor may include one core, or may include multiple cores.

According to an embodiment, the coding unit split predictor 2210 may determine whether to apply split prediction for a current coding unit. When split prediction is applied to the current coding unit, the coding unit split predictor 2210 may determine a neighboring area of the current coding unit which is to be used in split prediction. According to an embodiment, the neighboring area that is to be used in split prediction may be an area within a current picture including a current coding unit or may be an area within a picture decoded before the current picture.

According to an embodiment, the coding unit split predictor 2210 may predict a split scheme for the current coding unit by using split-associated information obtained from the neighboring area. According to an embodiment, the split-associated information may include at least one of size information and depth information of at least one coding unit included in the neighboring area.

According to an embodiment, when a split scheme determined by using split-associated information of the neighboring area indicates a split of the current coding unit, the coding unit determiner 2220 may determine at least one lower coding unit by splitting the current coding unit according to the split scheme.

According to an embodiment, when the split scheme indicates no split of the current coding unit, the encoder 2230 may encode the current coding unit. The encoder 2230 may obtain prediction samples by performing prediction on the current coding unit, and may obtain residual samples between original samples and the prediction samples of the current coding unit. The encoder 2230 may perform transformation on the residual samples, and thus, may obtain encoded data with respect to the residual samples. The encoded data may be output in the form of a bitstream.

When split prediction is not applied to the current coding unit, the coding unit determiner 2220 may split the current coding unit according to information about a split type with which the most efficient encoding is available. The coding unit determiner 2220 may generate split type information of the current coding unit. According to an embodiment, the split-associated information may include at least one of information indicating whether the current coding unit is not to be split or is to be split, information indicating whether, when split, it is to be quadtree split or multitree split, information indicating a split direction when it is to be multitree split, or information indicating the number of splits when it is to be multitree split. When a split type determined according to split type information determined before indicates no split of the current coding unit, the encoder 2230 may encode the current coding unit.

According to an embodiment, the encoder 2230 may generate a bitstream by encoding a coding unit. A bitstream may be generated in a coding unit encoded via split prediction, and even not by the split prediction, a bitstream of an encoded coding unit may be generated. When split prediction is performed, information indicating that the split prediction is performed may be included in a bitstream. On the contrary, when the split prediction is not performed, split type information may be included in the bitstream.

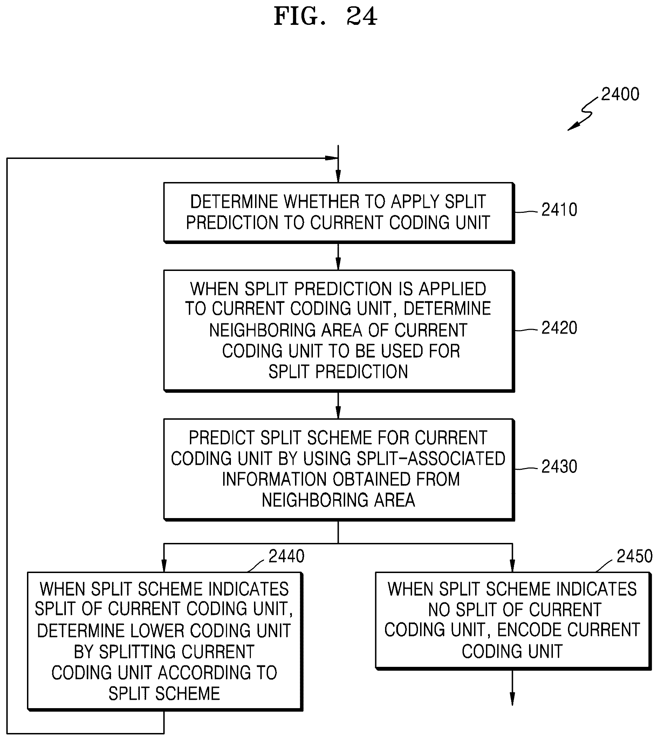

With reference to FIG. 24, an operation of each configuration of the video encoding apparatus 2200 will be described in detail below.

FIG. 23 illustrates a flowchart of a video decoding method according to an embodiment.

In operation 2310, the coding unit split predictor 2110 according to an embodiment may determine whether to apply split prediction for a current coding unit.

According to an embodiment, the split prediction may be performed when a preset condition is satisfied.

According to an embodiment, the split prediction may be used to predict a split scheme to be applied to one or more coding units included in multiple depths or one depth. For example, a split tree including one or more coding units split from one coding unit of an uppermost depth may be determined via one split prediction. Alternatively, split prediction may be used only to use some coding units among a plurality of coding units split from one coding unit or split schemes of coding units of some depths.

According to an embodiment, the video decoding apparatus 2100 may obtain, from a bitstream, information indicating whether split prediction is applied to an upper coding unit including the current coding unit. According to an embodiment, when split prediction is applied to the upper coding unit, the coding unit split predictor 2110 may determine whether split prediction is applied to the current coding unit. That is, when the split prediction is performed in the upper coding unit including the current coding unit, the coding unit split predictor 2110 may determine whether the current coding unit is included in a split prediction range determined by the upper coding unit. The split prediction range may include a split depth, a split level, or the like. When the current coding unit is included in the split prediction range of the upper coding unit, a split scheme of the current coding unit may be determined according to a split scheme predicted with respect to the upper coding unit.

According to an embodiment, split prediction may define only a split tree of one block. In this case, information indicating whether to apply split prediction for each coding unit may be determined for each coding unit.

For example, the video decoding apparatus 2100 according to an embodiment may obtain, from a bitstream, information indicating whether split prediction is applied for the current coding unit.

According to an embodiment, split prediction may be available according to a preset size condition. According to an embodiment, when a size of the current coding unit corresponds to a preset size, the video decoding apparatus 2100 may obtain, from the bitstream, the information indicating whether split prediction is applied for the current coding unit.

According to an embodiment, split prediction may be available in a coding unit stage only when split prediction is allowed in a high level stage. According to an embodiment, the video decoding apparatus 2100 may obtain split prediction allowance information indicating whether application of split prediction is allowed in an upper data unit, from a bitstream for the upper data unit that includes the current coding unit and is a slice, a tile, a picture, or a sequence. When application of split prediction in the upper data unit is allowed based on the split prediction allowance information, the video decoding apparatus 2100 according to an embodiment may obtain information indicating whether split prediction is applied to the current coding unit.

In operation 2320, when split prediction is applied to the current coding unit, the coding unit split predictor 2110 according to an embodiment may determine a neighboring area of the current coding unit which is to be used in split prediction.

According to an embodiment, when a value of information indicating whether split prediction is applied for a lower coding unit or the current coding unit is 1, it means that split prediction is applied, and the value of the information is 0, it means that a split scheme is directly determined according to a legacy scheme, without split prediction.

According to an embodiment, the neighboring area may be an area within a current picture including the current coding unit or may be an area within a picture decoded before the current picture.

The neighboring area is a coding unit adjacent to the current coding unit, and may be a CTU or a coding unit that is not a CTU.

According to an embodiment, a size of the neighboring area of the current coding unit which is to be used in split prediction may be equal to a size of the current coding unit. In this regard, the size of the current coding unit may be at least one of an area, a width, or a height of the coding unit.

According to an embodiment, the neighboring area of the current coding unit which is to be used in split prediction may be a coding unit separate from the current coding unit by a preset offset.

According to an embodiment, the split-associated information may include at least one of size information and depth information of at least one coding unit included in the neighboring area.

According to an embodiment, the coding unit split predictor 2110 may determine the neighboring area by using a template adjacent to or including the current coding unit, within the current picture or the picture adjacent to the current picture.

In operation 2330, the coding unit split predictor 2110 according to an embodiment may predict a split scheme for the current coding unit by using the split-associated information obtained from the neighboring area.

According to an embodiment, the split-associated information obtained from the neighboring area may be at least one of a width, a height, a depth, a QT depth, an MTT depth, and an area of a final coding unit or a coding unit with a largest size which is no longer split in the neighboring area.

According to an embodiment, the split-associated information obtained from the neighboring area may correspond to an average value, a maximum value or a minimum value of at least two of a width, a height, and an area of the final coding unit that is no longer split in the neighboring area.

According to an embodiment, the split-associated information obtained from the neighboring area may correspond to an average value, a maximum value or a minimum value of at least two of a depth, a QT depth, and an MTT depth of a final coding unit that is no longer split in the neighboring area.

According to an embodiment, the coding unit split predictor 2110 may predict split-associated information of the current coding unit by using the split-associated information obtained from the neighboring area.

According to an embodiment, the coding unit split predictor 2110 may determine at least one of a QT depth, an MTT depth, and an MTT mode of the current coding unit by using the split-associated information obtained from the neighboring area.

According to an embodiment, when the current coding unit is generated by quad-split, a split scheme predicted with respect to the current coding unit may be a multitree split. When the current coding unit is generated by a quad-split scheme determined according to split prediction, the coding unit split predictor 2110 according to an embodiment may determine again a neighboring area for split prediction for the current coding unit, and may determine at least one of an MTT depth and an MTT mode, based on split-associated information obtained from the neighboring area.

According to an embodiment, there may be priorities in predicted split schemes. For example, a quad-split may have priority over a multitree split. In this case, when a QT depth determined by using split-associated information corresponds to 0, at least one of an MTT depth and an MTT mode for the current coding unit may be determined by using the split-associated information.

In operation 2340, when the predicted split scheme indicates a split of the current coding unit, the coding unit split predictor 2110 according to an embodiment may determine at least one lower coding unit by splitting the current coding unit according to the split scheme.

In operation 2350, when the predicted split scheme indicates no split of the current coding unit, the decoder 2130 according to an embodiment may decode the current coding unit.

When a scheme of parsed split type information indicates no split of the current coding unit, the decoder 2130 according to an embodiment may decode the current coding unit.

The video decoding apparatus 2100 according to an embodiment may use a split prediction scheme capable of predicting a split scheme of a coding unit, and thus, may reduce the amount of bits for transmitting split type information and the amount of computation for parsing the split type information.

FIG. 24 illustrates a flowchart of a video encoding method according to an embodiment.

In operation 2410, the coding unit split predictor 2210 according to an embodiment may determine whether to apply split prediction to a current coding unit.

According to an embodiment, the split prediction may be performed when a preset condition is satisfied.

According to an embodiment, the split prediction may be used to predict a split scheme to be applied to one or more coding units included in multiple depths or one depth. For example, a split tree including one or more coding units split from one coding unit of an uppermost depth may be determined via one split prediction. Alternatively, split prediction may be used only to use some coding units among a plurality of coding units split from one coding unit or split schemes of coding units of some depths.

According to an embodiment, the video encoding apparatus 2200 may generate information indicating whether split prediction is applied to an upper coding unit including the current coding unit. When split prediction is applied to the upper coding unit, the coding unit split predictor 2210 according to an embodiment may determine whether split prediction is applied for the current coding unit. That is, when split prediction is performed in the upper coding unit including the current coding unit, the coding unit split predictor 2210 may determine whether the current coding unit is included in a split prediction range determined by the upper coding unit. When the current coding unit is included in the split prediction range of the upper coding unit, a split scheme of the current coding unit may be determined according to a split scheme predicted with respect to the upper coding unit.

According to an embodiment, split prediction may define only a split tree of one block. In this case, information indicating whether to apply split prediction for each coding unit may be determined for each coding unit.

For example, the video encoding apparatus 2200 according to an embodiment may generate information indicating whether split prediction is applied for the current coding unit.

According to an embodiment, split prediction may be available according to a preset size condition. According to an embodiment, when a size of the current coding unit corresponds to a preset size, the video encoding apparatus 2200 according to an embodiment may obtain, from the bitstream, the information indicating whether split prediction is applied for the current coding unit.

According to an embodiment, split prediction may be available in a coding unit stage only when split prediction is allowed in a high level stage. The video encoding apparatus 2200 according to an embodiment may determine whether application of split prediction is allowed in an upper data unit that includes the current coding unit and is a slice, a tile, a picture, or a sequence. The video encoding apparatus 2200 may generate split prediction allowance information indicating whether application of split prediction is allowed in the upper data unit including the current coding unit. When application of split prediction is allowed in the upper data unit, the video encoding apparatus 2200 according to an embodiment may determine again whether split prediction is applied for the current coding unit. In this case, information indicating whether split prediction is applied to the current coding unit may be generated.

The video encoding apparatus 2200 may encode at least one of the information indicating whether split prediction is performed and the split prediction allowance information, and may output the at least one in the form of a bitstream.

In operation 2420, when split prediction is applied to the current coding unit, the coding unit split predictor 2210 according to an embodiment may determine a neighboring area of the current coding unit which is to be used for split prediction.

According to an embodiment, the neighboring area may be an area within a current picture including the current coding unit or may be an area within a picture decoded before the current picture.

The neighboring area is a coding unit adjacent to the current coding unit, and may be a CTU or a coding unit that is not a CTU.

According to an embodiment, a size of the neighboring area of the current coding unit which is to be used in split prediction may be equal to a size of the current coding unit. In this regard, the size of the current coding unit may be at least one of an area, a width, or a height of the coding unit.

According to an embodiment, the neighboring area of the current coding unit which is to be used in split prediction may be a coding unit separate from the current coding unit by a preset offset.

According to an embodiment, split-associated information may include at least one of size information and depth information of at least one coding unit included in the neighboring area.

According to an embodiment, the coding unit split predictor 2210 may determine the neighboring area by using a template adjacent to or including the current coding unit, within the current picture or the picture adjacent to the current picture.

In operation 2430, the coding unit split predictor 2210 according to an embodiment may predict a split scheme for the current coding unit by using the split-associated information obtained from the neighboring area.

According to an embodiment, the split-associated information obtained from the neighboring area may be at least one of a width, a height, a depth, a QT depth, an MTT depth, and an area of a final coding unit or a coding unit with a largest size which is no longer split in the neighboring area.

According to an embodiment, the split-associated information obtained from the neighboring area may correspond to an average value, a maximum value or a minimum value of at least two of a width, a height, and an area of the final coding unit that is no longer split in the neighboring area.

According to an embodiment, the split-associated information obtained from the neighboring area may correspond to an average value, a maximum value or a minimum value of at least two of a depth, a QT depth, and an MTT depth of a final coding unit that is no longer split in the neighboring area.

According to an embodiment, the coding unit split predictor 2110 may predict split-associated information of the current coding unit by using the split-associated information obtained from the neighboring area.

According to an embodiment, the coding unit split predictor 2110 may determine at least one of a QT depth, an MTT depth, and an MTT mode of the current coding unit by using the split-associated information obtained from the neighboring area.

According to an embodiment, when the current coding unit is generated by quad-split, a split scheme predicted with respect to the current coding unit may be a multitree split. When the current coding unit is generated by a quad-split scheme determined according to split prediction, the coding unit split predictor 2210 according to an embodiment may determine again a neighboring area for split prediction for the current coding unit, and may determine at least one of an MTT depth and an MTT mode, based on split-associated information obtained from the neighboring area.

According to an embodiment, there may be priorities in predicted split schemes. For example, a quad-split may have priority over a multitree split. In this case, when a QT depth determined by using split-associated information corresponds to 0, at least one of an MTT depth and an MTT mode for the current coding unit may be determined by using the split-associated information.

In operation 2440, when the predicted split scheme indicates a split of the current coding unit, the coding unit split predictor 2210 according to an embodiment may determine at least one lower coding unit by splitting the current coding unit according to the split scheme.

In operation 2450, when the predicted split scheme indicates no split of the current coding unit, the encoder 2230 according to an embodiment may encode the current coding unit.

When a scheme of split type information generated without split prediction indicates no split of the current coding unit, the encoder 2230 according to an embodiment may encode the current coding unit.

Bitstreams generated by being encoded by the encoder 2230 may be stored in a recording medium or may be transmitted via a communication network.

The video encoding apparatus 2200 according to an embodiment may use a split prediction scheme capable of predicting a split scheme of a coding unit, and thus, may reduce the amount of bits for transmitting split type information and the amount of computation for encoding the split type information.

In a particular example, according to the legacy HEVC video codec standard, only quadruple-split of a coding unit is allowed, but, on the other hand, according to the VVC video codec standard, bi-split, tri-split, and quad-split of a coding unit are available, and horizontal/vertical splits are available for bi-split and tri-split, so that the amount of computation and the amount of data for indicating a split scheme of the coding unit increase according to the developments in the video codec standard. Therefore, according to a method of predicting a split scheme of a block according to an embodiment, by performing split prediction of the block, the amount of computation and the amount of data for determining the split scheme may be sharply reduced.

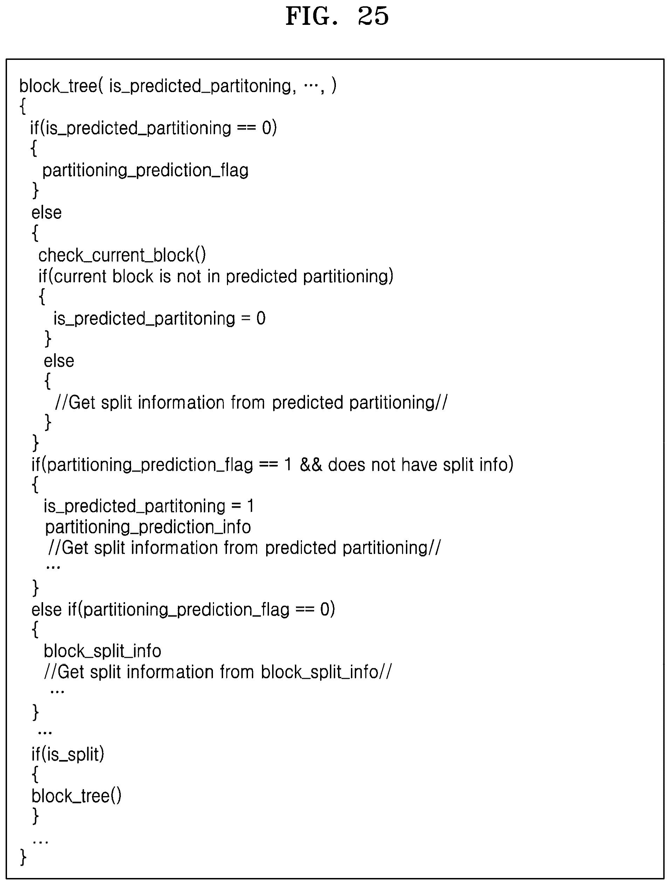

Hereinafter, with reference to FIGS. 25 to 28, syntax for signaling information indicating whether split prediction is performed on a current coding unit will now be described. block_partition or block_tree syntax described with reference to FIGS. 25 to 28 may be syntax generated by the video encoding apparatus 2200. The video encoding apparatus 2200 may generate a bitstream including bits that are syntax elements encoded according to an order based on syntax shown in FIGS. 25 to 28. The video decoding apparatus 2100 may parse the syntax elements by decoding the bitstream according to the order based on the syntax shown in FIGS. 25 to 28, and may reconstruct a current coding unit by using the syntax elements.

FIG. 25 is a diagram illustrating syntax for signaling information indicating whether split prediction is performed on a current coding unit, according to an embodiment.

According to an embodiment, block_tree syntax of FIG. 25 corresponds to a case in which a syntax element 'partitioning_predition_flag' is signaled as the information indicating whether split prediction is performed on a current coding unit.

In this regard, a variable 'is_predicted_partitioning' indicates whether split prediction is performed on a current coding unit. When a first part of block_tree syntax already indicates 'is_predicted_partitioning == 1', it means that the current coding unit is generated by preceding split prediction. The preceding split prediction is first determined in an upper data unit or other data unit for which a split structure has been determined before split prediction of the current coding unit is determined. When the first part of block_tree syntax already indicates 'is_predicted_partitioning == 0', it means that the current coding unit is not generated by the preceding split prediction.

In syntax 2510, if the current coding unit is not generated by the preceding split prediction ( if(is_predicted_partitioning == 0) ), it is determined in the current coding unit whether to determine a split scheme via new split prediction based on syntax element 'partitioning_predition_flag'.

Under first else syntax of syntax 2520, the current coding unit is generated by the preceding split prediction, and it is determined whether the current coding unit is included in a prediction range determined in the preceding split prediction ( check_current_block() ). If the current coding unit is not included in the prediction range of the preceding split prediction (if(current block is not in predicted partitioning) ), it is determined that the current coding unit does not follow split prediction ( is_predicted_partitoning = 0 ). In this case, split type-associated information for determining a split scheme of the current coding unit may be separately signaled.

In syntax 2520, if the current coding unit is included in the prediction range of the preceding split prediction ( if(current block is not in predicted partitioning) ... else ...), a split scheme of the current coding unit may be predicted according to the preceding split prediction (Get split information from predicted partitioning). For example, a neighboring area for split prediction of the current coding unit may be determined, and split-associated information of the current coding unit may be predicted by using split-associated information of the neighboring area.

Syntax 2530 defines an operation of (if(partitioning_prediction_flag == 1 && does not have split info)) when split prediction is performed on the current coding unit and there is no split-associated information for the current coding unit, via pre-parsed partitioning_prediction_flag.

A variable is newly set to allow split prediction to be performed on the current coding unit ( is_predicted_partitoning = 1 ). For split prediction, information about a method of prediction a split scheme (partitioning_prediction_info) is parsed. The information about the method of prediction a split scheme may include a method of determining a neighboring area of the current coding unit which is to be referred to for split prediction, information indicating information to be referred from the neighboring area, or the like. Based on the split-associated information of the determined neighboring area of the current coding unit, split-associated information of the current coding unit may be obtained or a split scheme may be determined.

In syntax 2540, if split prediction is not performed on the current coding unit ( else if(partitioning_prediction_flag == 0)), split-associated information (block_split_info) for determining a split scheme of the current coding unit may be directly parsed. The split scheme of the current coding unit may be determined based on the parsed split-associated information.

In syntax 2550, when a split is performed on the current coding unit, whether to split a lower coding unit may be determined.

In block_tree syntax of FIG. 25, whether split prediction is performed on the current coding unit may be already determined in an upper data unit. Therefore, if the current coding unit is included in the prediction range of the preceding split prediction, the current coding unit may be split according to a split scheme predicted for the current coding unit, without signaling of additional information. Therefore, even when split prediction is performed in the upper data unit, information indicating whether to apply a split prediction scheme to the current coding unit split from the upper data unit may be signaled again.

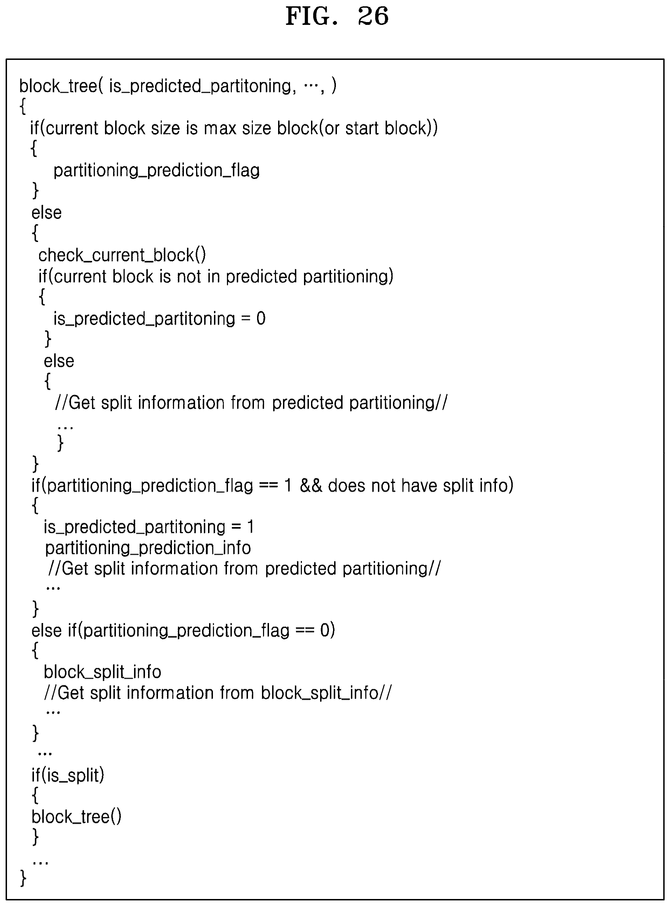

FIG. 26 is a diagram illustrating syntax for signaling information indicating whether split prediction is performed according to a size of a current coding unit, according to an embodiment.

According to an embodiment, block_tree syntax of FIG. 26 shows a case in which, when a size of a current coding unit satisfies a preset condition, a syntax element 'partitioning_predition_flag' is signaled as information indicating whether split prediction is performed on a current coding unit.

In syntax 2610, if the size of the current coding unit is a maximum block size of split prediction or a size of a prediction start block (if(current block size is max size block(or start block)), the syntax element 'partitioning_predition_flag' indicating whether split prediction is performed on the current coding unit may be parsed for the current coding unit. Therefore, it indicates that whether to determine a split scheme via new split prediction is determined in the current coding unit.

When a size condition for signaling the information indicating whether split prediction is performed on the current coding unit corresponds to a condition for a size for starting split prediction, as lower coding units split from the current coding unit are smaller than the current coding unit, the size condition is no longer satisfied in the lower coding units. However, if the lower coding units are included in a prediction range of split prediction determined in the current coding unit, split prediction may be performed on the lower coding units.

Operations in syntax 2620, 2630, 2640, and 2650 are equal to operations of syntax 2520, 2530, 2540, and 2550 of FIG. 25, and thus, descriptions are not provided here.

In block_tree syntax of FIG. 26, whether split prediction is performed on the current coding unit may be identified only in the current coding unit. Therefore, regardless of whether split prediction has been performed on the upper data unit, whether split prediction is performed is determined in the current coding unit. However, a largest block size of split prediction or a size of a prediction start block may be limited to a preset block size. For example, there may be a condition by which split prediction may start only in a CTU and coding units with sizes of 256x256, 128x128, 64x64, and 32x32. When split prediction is performed in the current coding unit, there is no need to signal again information ('partitioning_predition_flag) indicating whether a split prediction scheme is applied in a lower coding unit that is split from the current coding unit and is in a prediction range, and a split scheme of the lower coding unit may be determined according to a split prediction scheme determined in the current coding unit.

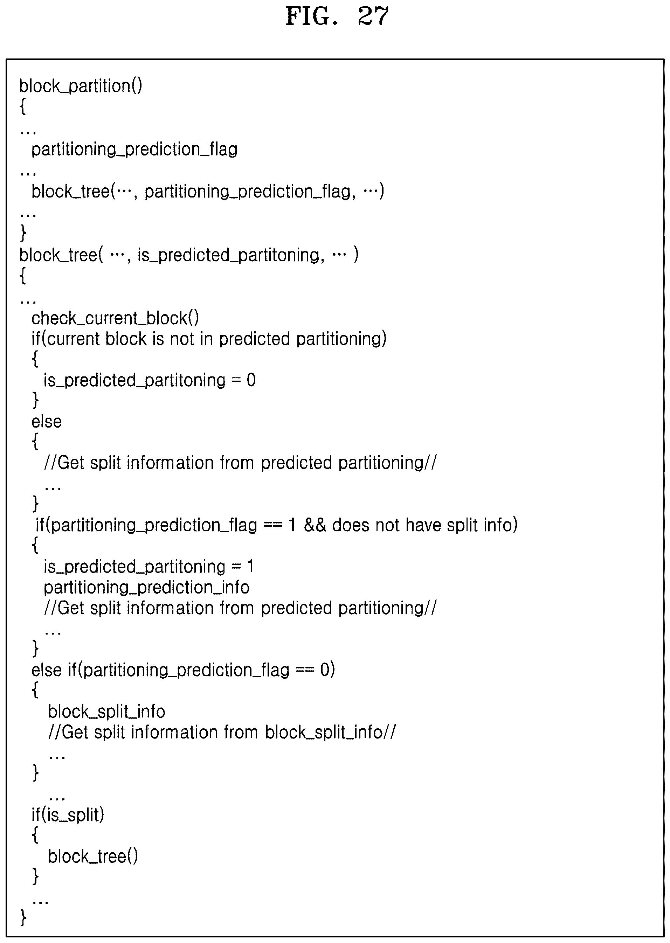

FIG. 27 is a diagram illustrating syntax for signaling information indicating whether split prediction is performed in an upper block of a current coding unit, according to an embodiment.

According to an embodiment, block_tree syntax of FIG. 27 shows a case in which information about a split prediction scheme is signaled only in upper block/upper data unit, and split prediction of the current coding unit that is a lower block of the upper block is predicted based on information obtained in an upper block stage.

In syntax 2700, 'partitioning_predition_flag' is parsed from syntax block_partition() for a largest coding unit, so that whether split prediction is to be applied to lower coding units of the largest coding unit. In block_tree() syntax of a lower coding unit, a value of 'partitioning_predition_flag' obtained from the largest coding unit is changelessly transferred.

In syntax 2710, in block_tree() syntax of the current coding unit that is a lower coding unit of the largest coding unit, a value of a variable 'is_predicted_partitioning' is set to be equal to the value of 'partitioning_predition_flag' obtained from the largest coding unit. Therefore, if the value of 'partitioning_predition_flag' obtained from the largest coding unit is 0, the value of the variable 'is_predicted_partitioning' is also 0 in the current coding unit, and thus, split prediction is not performed on the current coding unit. If the value of 'partitioning_predition_flag' obtained from the largest coding unit is 1, the value of the variable 'is_predicted_partitioning' is also 1 in the current coding unit, and thus, split prediction is performed on the current coding unit.

Operations in syntax 2720, 2730, 2740, and 2750 are equal to operations of syntax 2520, 2530, 2540, and 2550 of FIG. 25, and thus, descriptions are not provided here.

In block_tree syntax of FIG. 27, whether split prediction is performed on the current coding unit is all determined in the largest coding unit that is the upper data unit. Therefore, without signaling addition information, the current coding unit may be split according to a split scheme predicted in the largest coding unit.

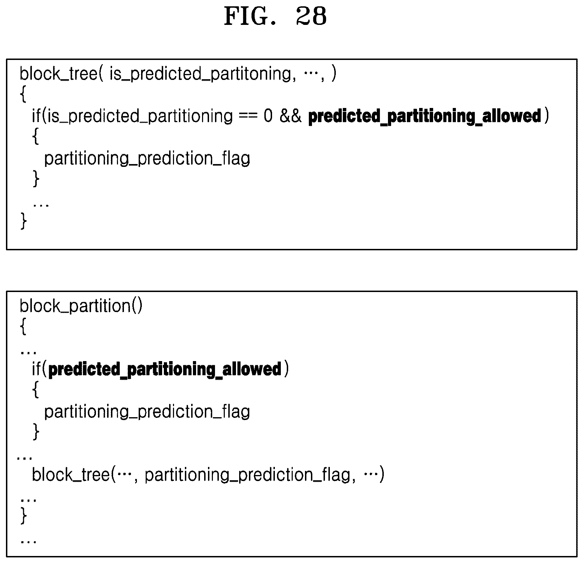

FIG. 28 is a diagram illustrating syntax for signaling information indicating via high level syntax whether it is allowed to perform split prediction, according to an embodiment.

Information such as a slice header, a tile header, a picture parameter set, or a sequence parameter set, which previously indicates whether application of split prediction is allowed for lower coding units included in an upper data unit may be signaled in the form of a syntax element predicted_partitioning_allowed. If a value of predicted_partitioning_allowed is 1, application of split prediction may be allowed for the lower coding units included in the upper data unit.

Therefore, only when the value of predicted_partitioning_allowed is 1 in block_tree syntax for the coding unit or block_partition for the largest coding unit, information indicating whether split prediction is performed on the current coding unit or a current largest coding unit may be signaled in the form of a syntax element **partitioning_prediction_flag.**

block_tree syntax described above with reference to FIGS. 25 to 28 may be syntax generated by the video encoding apparatus 2200. The video encoding apparatus 2200 may generate a bitstream including bits that are syntax elements encoded according to an order based on syntax shown in FIGS. 25 to 28. The video decoding apparatus 2100 may parse the syntax elements by decoding the bitstream according to the order based on the syntax shown in FIGS. 25 to 28, and may reconstruct a current coding unit by using the syntax elements.

In various embodiments described above with reference to FIGS. 21 to 28, a current block subject to split prediction may be a CTU, a CU, a PU, a TU, or the like. That is, split prediction is available for one of blocks of the CTU, the CU, the PU, and the TU. Also, a block to which split prediction is applicable may be determined based on a size of a particular block. For example, a size of a particular block from among all sizes of blocks that may be generated when at least one applicable block split scheme is repeatedly applied to a largest-size block is referred to as NxM or L (where, N, M, L are each a positive integer). In this regard, based on a result of comparing a size of a current block with NxM or L which is the size of the particular block, it may be determined whether split prediction is applicable to the current block. For example, when the size of the current block and the size of the particular block are equal to NxM, split prediction may be applied to the current block. In this case, when split prediction is allowed for the current block, a size of a lower block split from the current block is smaller than the size of the particular block, split prediction is no longer performed.

Also, in various embodiments described above with reference to FIGS. 21 to 28, split-associated information is collected from a neighboring area of the current block which is to be used for split prediction of the current block. Based on split-associated information of at least one block included in the neighboring area, a split scheme of the current block may be determined. In this regard, various methods of determining the neighboring area from which split-associated information for split prediction is to be collected are as below.

In an embodiment, a size of the neighboring area from which split-associated information for split prediction is to be collected may be equal to a size of the current block. For example, an area adjacent to the current block which has the same area as an area (height x width) of the current block may be determined as the neighboring area for split prediction of the current block. Alternatively, a neighboring area having the same width as a width of the current block may be determined as the neighboring area for split prediction of the current block. Alternatigely, a neighboring area having the same width as a height of the current block may be determined as the neighboring area for split prediction of the current block.

In an embodiment, the size of the neighboring area from which split-associated information for split prediction is to be collected may be a preset multiple of the size of the current block. For example, an area that is adjacent to the current block and has an area being a preset multiple of an area (height x width) of the current block may be determined as the neighboring area for split prediction of the current block. Alternatively, an adjacent area having a width being a preset multiple of a width of the current block may be determined as the neighboring area for split prediction of the current block. Alternatively, an adjacent area having a width being a preset multiple of a height of the current block may be determined as the neighboring area for split prediction of the current block.

In an embodiment, the neighboring area from which split-associated information for split prediction is to be collected may be a largest coding unit (CTU) adjacent to the current block.

In an embodiment, the neighboring area from which split-associated information for split prediction is to be collected may be a largest-size block adjacent to the current block. When the current block is a coding unit, the neighboring area may be a coding unit having a largest allowable size. When the current block is a prediction unit (PU), the neighboring area may be a prediction unit having a largest allowable size. When the current block is a transform unit (TU), the neighboring area may be a transform unit having a largest allowable size.

In a particular example, a size of the neighboring area from which split-associated information for split prediction is to be collected may be an area being adjacent to the current block and having a fixed size of 256x256, 256x128, 128x128, 128x64, 64x64, 64x16, 16x16, 8x8, 4x4, etc. In this regard, the neighboring area may have a regular quadrilateral (square) shape. Alternatively, the neighboring area may have a non-square shape.

In an embodiment, the neighboring area from which split-associated information for split prediction is to be collected may be at least one block of the same type which is adjacent to the current block. For example, when the current block is a coding unit, the neighboring area may be at least one coding unit adjacent to the current block. For example, when the current block is a prediction unit, the neighboring area may be at least one prediction unit adjacent to the current block. For example, when the current block is a transform unit, the neighboring area may be at least one transform unit adjacent to the current block.

A neighboring area adjacent to the left side of the current block may be an HxH square area having the same height as a height H of the current block. A neighboring area adjacent to the top side of the current block may be a WxW square area having the same width as a width W of the current block.

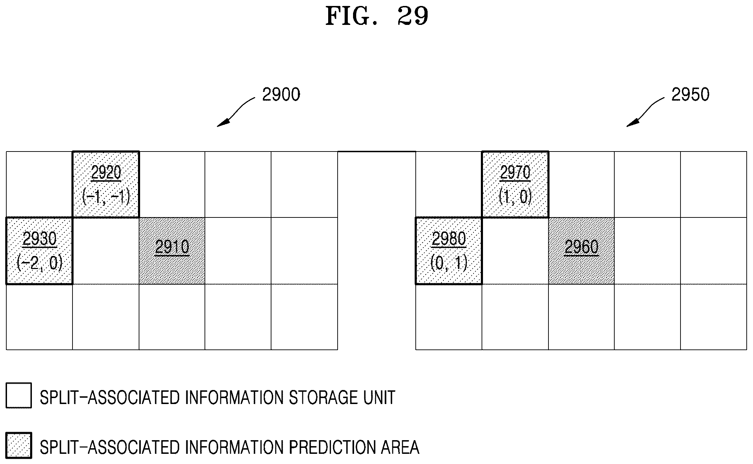

A location of the neighboring area may be signaled by transmitting an offset with respect to a location of the current block. A method of transmitting an offset with respect to a location of a neighboring area will now be described in detail with reference to FIG. 29.

FIG. 29 is a diagram illustrating a method of determining a neighboring block to be used for split prediction of a current coding unit, according to a location of a storage block of split-associated information, according to an embodiment.

In an image 2900, coordinates of a location of a current block 2910 may be set to (0, 0), and a prediction area from which split-associated information may be collected, i.e., an offset for representing a location of a neighboring area may be set. Therefore, an offset for representing a neighboring area 2920 may be determined as (-1, -1), and an offset for representing a neighboring area 2930 may be determined as (-2, 0).

In an image 2950, independently from coordinates of a location of a current block 2960, a prediction area from which split-associated information may be collected, i.e., an offset for representing a location of a neighboring area may be set as a distance to an upper left point of the image 2950, i.e., a distance to a neighboring area from an original point. Therefore, an offset for representing a neighboring area 2970 may be determined as (1, 0), and an offset for representing a neighboring area 2980 may be determined as (0, 1).

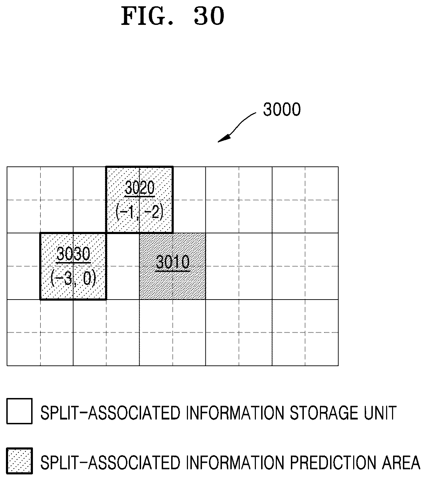

An offset of a block in which split-associated information for split prediction of a current block is stored may be represented by using a size of the block in which the split-associated information is stored. Hereinafter, with reference to FIG. 30, a method of representing a location of a neighboring area that is a prediction area from which split-associated information may be collected will now be described.

FIG. 30 is a diagram for describing a method of representing a location of a neighboring block by using a size of a storage block of split-associated information, the neighboring block being to be used for split prediction of a current coding unit, according to an embodiment.

In an image 3000, an offset for indicating a location of a neighboring block 3020 or 3030 to be used for split prediction of a current coding unit 3010 may be represented as (x axis, y axis), and an x-axis value and a y-axis value may each be set to half a size of a storage block of split-associated information (a height or a width of the storage block of the split-associated information). Therefore, an offset for indicating a location of the neighboring block 3020 may be determined as (-1, -2), and an offset for indicating a location of the neighboring block 3030 may be determined as (-3, 0).

In an example different from that of the image 3000, a representation unit of an x-axis value and a y-axis value of an offset for indicating a location of a neighboring area may be 1/2, 1/4, 1/8, 1/16, etc. of the size of the storage block of the split-associated information.

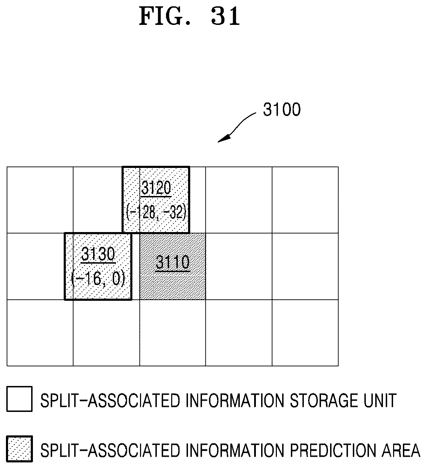

FIG. 31 is a diagram for illustrating a method of determining a location of a neighboring block to be used for split prediction of a current coding unit, based on an offset of a pixel unit, according to an embodiment.

In an image 3100, an offset for indicating a location of a neighboring block 3120 or 3130 to be used for split prediction of a current coding unit 3110 may be represented as (x axis, y axis), and an x-axis value and a y-axis value may each be set in a pixel unit of a storage block of split-associated information. Therefore, an offset for indicating a location of the neighboring block 3120 may be determined as (-128, -32), and an offset for indicating a location of the neighboring block 3130 may be determined as (-16, 0).

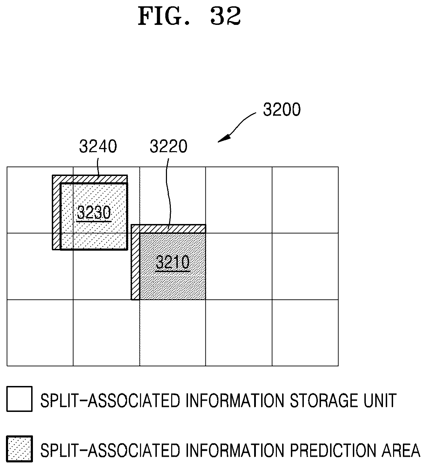

The offset described above with reference to FIGS. 30 and 31 may be signaled via a bitstream. With reference to FIG. 32, a method of determining a location of a neighboring area via a template matching scheme without signaling an offset will now be described.

FIG. 32 is a diagram illustrating a method of determining, according to a template matching scheme, a location of a neighboring area to be used for split prediction of a current coding unit, according to an embodiment.

In an image 3200, a neighboring area to be used for split prediction of a first block 3210 may be determined among pixels adjacent to a first block 3210, by using a first template 3220. A neighboring area to be used for split prediction of a second block 3230 may be determined among pixels adjacent to a second block 3230, by using a second template 3240. An area that is most similar to the first template 3220 may be determined as a first neighboring area to be used in split prediction of the first block 3210, via sum of Absolute Differences (SAD), sum of Squared Error (SSE), Mean Squared Error (MSE), or the like. An area that is most similar to the second block 3230 may be determined as a second neighboring area to be used in split prediction of the second block 3230, via SAD, SSE, MSE, or the like.

Also, by combining an offset signaling scheme described with reference to FIGS. 30 and 31 and a template matching scheme described with reference to FIG. 32, a neighboring area from which split-associated information for split prediction of a current block may be collected.

According to an embodiment, split-associated information obtainable from a neighboring area may include at least one of a width, a height, a depth, a QT depth, an MTT depth, or an area (height x width) of blocks that are no longer split and are included in the neighboring area. A block that is no longer split may correspond to a coding unit, a prediction unit, or a transform unit on which encoding has been performed.

According to an embodiment, split-associated information obtainable from a neighboring area may include at least one of a width, a height, a depth, a QT depth, an MTT depth, or an area (height x width) of largest-size blocks included in the neighboring area. A largest-size block may be a largest-size coding unit, a largest-size prediction unit or a largest-size transform unit.

According to an embodiment, split-associated information obtainable from a neighboring area may include an average value, a maximum value, or a minimum value of at least one of a width, a height, a depth, a QT depth, an MTT depth, or an area (height x width) of blocks that are included in the neighboring area and are no longer split.

In a particular example, split-associated information may include an average value, a maximum value, or a minimum value obtained by using same type information of the blocks that are included in the neighboring area and are no longer split. For example, when the neighboring area includes a left block adjacent to the left side of the current block and an upper block adjacent to the top side of the current block, an average value of an area of the left block and an area of the upper block may be used as the split-associated information for split prediction of the current block. A maximum value among an MTT depth of the left block and an MTT depth of the upper block may be used as split-associated information for split prediction of the current block.

In a particular example, split-associated information may include an average value, a maximum value, or a minimum value obtained by using different type information of the blocks that are included in the neighboring area and are no longer split. For example, when the neighboring area includes the left block adjacent to the left side of the current block and the upper block adjacent to the top side of the current block, an average value of a height of the left block and a width of the upper block may be used as the split-associated information for split prediction of the current block. A minimum value among a QT depth of the left block and an MTT depth of the upper block may be used as the split-associated information for split prediction of the current block.

Also, split-associated information may be obtained to differ, according to a direction in which the split-associated information is obtained, among blocks included in the neighboring area. For example, among blocks included in the neighboring area, a scheme of using, in split prediction, split-associated information obtained from an upper area of the current block may be different from a scheme of using, in split prediction, split-associated information obtained from a left area of the current block. It may be combined in such a manner that different weights are applied to the split-associated information obtained from the upper area of the current block and the split-associated information obtained from the left area of the current block, such that final split-associated information may be determined.

Hereinafter, methods, performed by the video decoding apparatus 2100 and the video encoding apparatus 2200, of determining a split scheme of a current block by performing split prediction of the current block will now be described.

According to an embodiment, a QT depth or an MTT depth of a current block may be determined by using split-associated information obtained from a neighboring area.

In a particular example, when 'a minimum value of a QT depth of at least one block included in the neighboring area' is used as split-associated information, a prediction value of a QT depth of the current block may be determined to be 'the minimum value among a QT depth of at least one block included in the neighboring area'. Therefore, QT split may be performed on the current block until the QT depth of the current block reaches from 0 to the prediction value. In a similar manner, a prediction value of an MTT depth of the current block may be determined by using 'a minimum value of an MTT depth of at least one block included in the neighboring area'.

In a particular example, when 'an average value of a QT depth of at least one block included in the neighboring area' is used as split-associated information, a prediction value of a QT depth of the current block may be determined to be 'the average value of a QT depth of at least one block included in the neighboring area' or 'the average value-1 of a QT depth of at least one block included in the neighboring area'. Therefore, QT split may be performed on the current block until the QT depth of the current block reaches from 0 to the prediction value. In a similar manner, a prediction value of an MTT depth of the current block may be determined by using 'the average value of a QT depth of at least one block included in the neighboring area'.

In a particular example, when 'an average value and a minimum value of a QT depth of at least one block included in the neighboring area' is used as split-associated information, a prediction value of a QT depth of the current block may be determined to be 'the minimum value of a QT depth of at least one block included in the neighboring area'. Therefore, QT split may be performed on the current block until the QT depth of the current block reaches from 0 to the prediction value, and in addition, a probability that QT split is performed on the current block until the prediction value reaches 'the average value-1 of a QT depth of at least one block included in the neighboring area' may increase. In a similar manner, a prediction value of an MTT depth of the current block may be determined by using 'the average value and the minimum value of an MTT depth of at least one block included in the neighboring area'.

For example, a QT depth of the current block may be determined by using a minimum QT depth or an average QT depth-1 value of blocks that are included in the neighboring area and are no longer split. The current block may be quad-split up to the predicted QT depth.

According to an embodiment, when the predicted MTT depth is 1 or more, an MTT type, i.e., whether it is bi-split or tri-split, and whether it is horizontal split or vertical split may be determined. For example, when a minimum (average) MTT depth of the blocks that are included in the neighboring area and are no longer split is 1, an MTT type of the current block may correspond to bi-split, and when the MTT depth is 2, the MTT type of the current block may correspond to tri-split. Also, when a size of blocks in the neighboring area, the blocks being located above the current block, is greater than a size of blocks located in the left side, an MTT direction of the current block may be determined to be a horizontal direction, and when it is less, the MTT direction may be determined to be a vertical direction. For example, when an average height of the blocks that are included in the neighboring area and are no longer split is greater than an average width, the MTT direction of the current block may be determined to be a vertical direction, and when it is less, the MTT direction may be determined to be a horizontal direction.

According to an embodiment, a value obtained by combining 'a width, a height, or an area of a no-longer split block' and 'a width, a height, or an area of a largest-size block' in the neighboring area may be used as split-associated information.

For example, split-associated information obtainable from the neighboring area may be 'a value obtained by dividing an area of a largest-size block in the neighboring area by an average value, a maximum value, or a minimum value of an area of the no-longer split block in the neighboring area' or 'a logarithmic value of the value'. A value obtained by subtracting 'a logarithmic value of an average value, a maximum value, or a minimum value of an area of the no-longer split block in the neighboring area' from 'a logarithmic value of an area of a largest-size block in the neighboring area' may be used as split-associated information. In this regard, log2, log4, or the like may be used. In a particular example, when an average value of an area of the blocks that are included in the neighboring area and are no longer split is 32*32, and an area of a largest-size block is 128*128, split-associated information may be determined to be log4((128*128)/(32*32))=2. Therefore, a QT depth or an MTT depth which is to be applied to the current block may be determined as 2, by using the split-associated information.

Alternatively, +0, +1, -1, +2, -2, etc. of a QT depth or an MTT depth which is obtained as split-associated information may be determined as a QT depth or an MTT depth of the current block.

According to an embodiment, a split scheme that is predicted by using split-associated information obtained from the neighboring area and is to be applied to the current block is an MTT split, an MTT depth and at least one of an MTT type or an MTT direction may be determined via split prediction. The MTT type indicates a BT split (binary split) or a TT split (ternary split). The MTT direction indicates a vertical split or a horizontal split. Therefore, the MTT mode may be determined by combining the MTT type and the MTT direction, and may be determined as BT_VER (vertical binary) mode, BT_HOR (horizontal binary) mode, TT_VER (vertical ternary) mode, or TT_HOR (horizontal ternary) mode.

According to an embodiment, after a QT depth is predicted, an MTT depth determined for split prediction may be additionally predicted. For example, when a prediction value of the QT depth determined via split prediction is greater than 0, QT split may be performed on the current block until the QT depth of the current block reaches from 0 to the prediction value, and then, MTT split may be performed on the current block. Therefore, when the prediction value of the QT depth determined via split prediction is greater than 0 and a prediction value of the MTT depth is greater than 0, QT split may be performed on the current block until the QT depth of the current block reaches from 0 to the prediction value, and MTT split may be performed on the current block until the MTT depth of the current block reaches the prediction value via split prediction.

According to an embodiment, split-associated information required to determine a prediction value of a QT depth for QT split of the current block and a prediction value of an MTT depth for MTT split may be determined by using 'a QT depth, an MTT depth, a width, a height, or an area of a no-longer split block' in the neighboring area. In another example, by using a value obtained by combining 'a QT depth, an MTT depth, a width, a height, or an area of a no-longer split block' in the neighboring area and 'a width, a height, or an area of a largest-size block', the prediction value of the QT depth for QT split of the current block and the prediction value of the MTT depth for MTT split may be determined.

Alternatively, the prediction value of the QT depth or the prediction value of the MTT depth of the current block may be determined to be equal to a value obtained by having applied thereto +0, +1, -1, +2, or -2 of a QT depth or an MTT depth obtained as split-associated information from the neighboring area.

According to an embodiment, not only the prediction value of the MTT depth of the current block but also an MTT direction may also be determined via split prediction.

According to an embodiment, the prediction value of the MTT depth of the current block may be determined via split prediction, and information indicating the MTT direction may be separately obtained from a bitstream or transmitted via a bitstream.

According to an embodiment, an MTT type to be applied to the current block may be determined via split prediction.

According to an embodiment, split-associated information requested to determine a prediction value of an MTT direction or a prediction value of an MTT type for MTT split of the current block may be determined by using 'a width, a height, or an area of a no-longer split block' in the neighboring area. In another example, the prediction value of the MTT direction or the prediction value of the MTT type of the current block may be determined by using a value obtained by combining 'a width, a height, or an area of a no-longer split block' and 'a width, a height, or an area of a largest-size block' in the neighboring area.

Also, the prediction value of the MTT direction or the prediction value of the MTT type may be determined based on a result of analysis with respect to split-associated information obtained from the neighboring area.

In a particular example, in a case where there is an upper block adjacent to the top side of the current block and a left block adjacent to the left side of the current block in the neighboring area, when a size of the upper block is less than a size of the left block, an MTT direction of the current block may be determined to be a vertical split direction. In a particular example, when the size of the upper block is greater than the size of the left block, the MTT direction of the current block may be determined to be a horizontal split direction.

In a particular example, when an average width of the blocks that are included in the neighboring area and are no longer split is less than an average height, the MTT direction of the current block may be determined to be a vertical split direction. In a particular example, when the average width of the blocks that are included in the neighboring area and are no longer split is greater than the average height, the MTT direction of the current block may be determined to be a horizontal split direction.

In a particular example, among MTT types of the blocks that are included in the neighboring area and are no longer split, when ternary-split blocks are more than binary-split blocks, an MTT type of the current block may be determined as a ternary-split type. On the other hand, among MTT types of the blocks that are included in the neighboring area and are no longer split, when ternary-split blocks are fewer than binary-split blocks, an MTT type of the current block may be determined as a binary-split type.

According to an embodiment, after the current block is split according to a split scheme determined via split prediction, a normal split scheme may be additionally applied to the current block. In this case, the additionally-applied normal split scheme is not a scheme determined via split prediction. For example, a normal split scheme that is additionally applicable may include legacy split schemes including QT, BT, TT, MTT, QTMTT, or the like.

When a size of a lower block generated when the current block is split via split prediction satisfies a condition of a block size to which split prediction is applicable, split prediction may be performed on the lower block by using split-associated information being a different type from a block split scheme applied to the current block. For example, when a lower block is generated when the current block is split via split prediction with respect to the current block via a QT depth, split prediction with respect to the lower block may be performed by using an MTT depth obtained from the neighboring area.

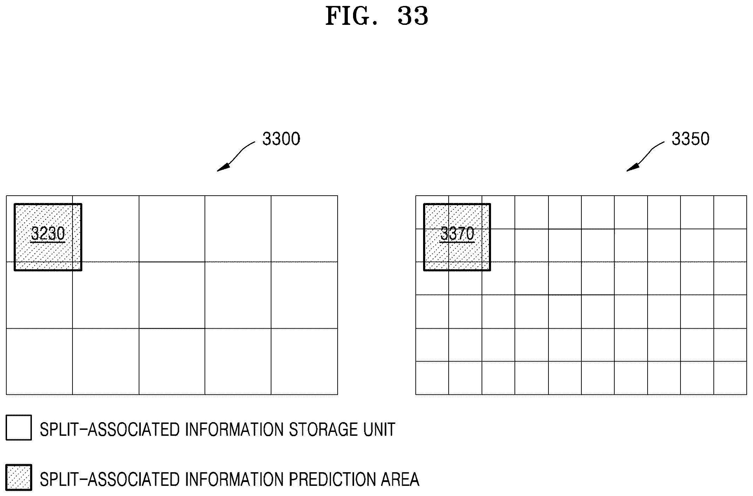

In the above, a method of obtaining split-associated information for split prediction of a current block from a surrounding area and a neighboring area of the current block within the same picture as a current picture including the current block, and a method of performing split prediction by using the split-associated information are described. Hereinafter, with reference to FIGS. 33 to 34, a method of obtaining split-associated information for split prediction of a current block from a reference picture not a current picture including the current block will now be described.

First, a current block to which split prediction using a reference picture is applicable may be determined as below. The current block may be a largest coding unit (CTU), a coding unit (CU), a prediction unit (PU), or a transform unit (TU). Whether split prediction is to be applied to the current block may be determined by using a preset block size. For example, the preset block size may be one of sizes of all blocks that may be generated in a procedure in which one or more split schemes that are allowed for a largest-size block are repeatedly applied. For example, only when a size of the current block is equal to the preset block size or is greater than the preset block size, split prediction may be applied to the current block.

Split-associated information obtainable from a reference picture may be stored for each block of particular types of the reference picture. Therefore, split-associated information may be obtained for each block of the particular types. For example, split-associated information may be obtained for each largest coding unit of the reference picture. Alternatively, split-associated information may be obtained for each smallest coding unit of the reference picture. In an embodiment, split-associated information may be obtained for each prediction unit (PU) of the reference picture. In another example, split-associated information may be obtained for each transform unit (TU) of the reference picture.

In a particular example, a block size of a reference picture from which split-associated information for split prediction is to be obtained may be a fixed size such as 256x256, 256x128, 128x128, 128x64, 64x64, 64x16, 16x16, 8x8, 4x4, etc.

In an embodiment, split-associated information, in a reference picture, for split prediction of a current block may be obtained from the same type of a block as the current block. For example, when the current block is a coding unit, split-associated information may be obtained from at least one coding unit in the reference picture. For example, when the current block is a prediction unit, split-associated information may be obtained from at least one prediction unit in the reference picture. For example, when the current block is a transform unit, split-associated information may be obtained from at least one transform unit in the reference picture.

Split-associated information may be obtained from a block included in a reference area that is to be used for split prediction of the current block and is included within the reference picture. The split-associated information obtainable from the reference picture may be at least one of a width, a height, a depth, a QT depth, an MTT depth, or an area of the block that is no longer split in the reference area. Alternatively, the split-associated information may be determined by using an average value, a maximum value, or a minimum value of at least one of the width, the height, the depth, the QT depth, the MTT depth, or the area of the block that is no longer split in the reference area.

According to an embodiment, split-associated information may be stored for each storage block by using a result of analysis with respect to complexity of a corresponding reference area for each storage block in which split-associated information may be stored after the reference picture is reconstructed. Here, a value indicating complexity of the reference area may be determined via SAD, SSE, MSE, etc. of a gradient of the storage blocks. Alternatively, the value indicating complexity of the reference area may be determined via a size of an area in which CBF is not 0 among the storage blocks. Alternatively, the value indicating complexity of the reference area may be determined via SAD, SSE, MSE, etc. of a residual among the storage blocks.

According to an embodiment, provided is a method of obtaining split-associated information when there are two or more reference pictures available for split prediction of the current block.

Split-associated information may be obtained from a reference picture that is temporally close to a current picture including the current block and is among the two or more reference pictures available for split prediction of the current block. Alternatively, split-associated information may be obtained from a reference picture that has the most similar QP to a QP of a current picture including the current block and is among the two or more reference pictures available for split prediction of the current block. Alternatively, split-associated information may be obtained from a reference picture that is most recently reconstructed according to a decoding order and is among the two or more reference pictures available for split prediction of the current block.

According to an embodiment, a reference picture to be used for split prediction of the current block by using reference picture information of inter prediction information of a block to which inter prediction is applied and is among neighboring blocks may be determined.

For example, blocks on which inter prediction has been performed and are among neighboring blocks that are adjacent in upper, left, upper left, upper right, and lower left directions of the current block and are among neighboring blocks decoded before the current block may be used. Alternatively, a neighboring block adjacent to a left boundary of the current block and adjacent to a lower left corner may be used. Alternatively, a neighboring block adjacent to the lower left corner of the current block in a diagonal direction may be used.

According to an embodiment, when two or more pieces of reference picture information obtainable from a neighboring block that is adjacent to the current block and on which inter prediction has been performed, two or more reference pictures available for split prediction of the current block may be determined by using the reference picture information. In this case, split-associated information may be obtained from a reference picture that is temporally close to the current picture including the current block and is among the two or more reference pictures available for split prediction of the current block. Alternatively, split-associated information may be obtained from a reference picture having the most similar QP to a QP of the current picture including the current block and is among the two or more reference pictures available for split prediction of the current block. Alternatively, split-associated information may be obtained from a reference picture that is most recently reconstructed according to a decoding order and is among the two or more reference pictures available for split prediction of the current block. Alternatively, split-associated information may be obtained from a reference picture that is included in a first reference picture list, e.g., L0 list, and is among the two or more reference pictures available for split prediction of the current block.

According to an embodiment, information about the reference picture may be transmitted via a bitstream. Therefore, the video decoding apparatus 2100 may obtain the information about the reference picture from the bitstream, and may obtain split-associated information for split prediction of the current block, from the reference picture indicated by the information about the reference picture.

The split-associated information obtained from a reference area in the reference picture may include at least one of a width, a height, a depth, a QT depth, an MTT depth, or an area of a storage block included in the reference area. When split-associated information is obtained from two or more storage blocks of the reference area, an average value, a maximum value, and a minimum value of split-associated information obtainable from one storage may be used as split-associated information for split prediction of the current block.

According to an embodiment, split-associated information obtainable from a reference area may include complexity information stored in the reference area. The complexity information in the reference area may be obtained via SAD, SSE, MSE, etc. of a gradient of storage blocks in the reference area, a size of an area in which CBF is not 0 in the reference area, SAD, SSE, MSE, etc. of a residual, or the like.

According to an embodiment, an average value, a maximum value, and a minimum value of block-associated information obtainable for each storage blocks in the reference area may be used as split-associated information for split prediction of the current block.

According to an embodiment, information of a collocated area in the reference picture, the collocated area being located in correspondence to a location of the current block, may be used as split-associated information for split prediction. The collocated area located in correspondence to the location of the current block may include an area including a block in the reference picture, the block being located in correspondence to the location of the current block.

According to an embodiment, the video decoding apparatus 2100 may determine a reference picture and a reference area for split prediction of a current block and may obtain split-associated information from the reference area, by using inter prediction information of a neighboring block that is adjacent to the current block and on which inter prediction has been performed.

Alternatively, information about the reference area in the reference picture may be obtained from the bitstream. A transmission unit of the information about the reference area may be equal to a storage block of the split-associated information. Alternatively, an accuracy of the transmission unit of the information about the reference area may be 1/2, 1/4, 1/8, 1/16, etc. of an accuracy of the storage block of the split-associated information. An integer pixel unit of the storage block or the transmission unit may correspond to an integer pixel unit of a luma picture.

FIG. 33 illustrates a case in which reference picture information obtained from a neighboring area does not match a storage block of split-associated information in a reference picture, according to an embodiment. Hereinafter, with reference to FIG. 33, a method of obtaining split-associated information when an area indicated by reference picture information exceeds an integer pixel unit of a storage block of split-associated information in a reference picture to be referred to will now be described.

In a first example, reference picture information obtained from a neighboring block of a current block indicates a reference picture 3300, and split-associated information storage blocks of the reference picture 3300 are shown. A collocated area of the current block is used as a split-associated information prediction area 3320, and in this case, a size of the split-associated information prediction area 3320 is equal to a size of a split-associated information storage block, but the split-associated information prediction area 3320 is not located in an integer pixel unit of the split-associated information storage block.

In a second example, reference picture information obtained from a neighboring block of a current block indicates a reference picture 3350, and split-associated information storage blocks of the reference picture 3350 are shown. A collocated area of the current block is used as a split-associated information prediction area 3370, and in this case, a size of the split-associated information prediction area 3320 is greater than a size of a split-associated information storage block. Also, the split-associated information prediction area 3370 is not located in an integer pixel unit of the split-associated information storage block.

The split-associated information prediction area 3320 or 3370 indicates an area from which split-associated information for split prediction of a current block is obtained, and corresponds to a reference area described above.

According to an embodiment, the split-associated information for split prediction of a current block may be obtained from a split-associated information storage block including a largest area among the split-associated information prediction areas 3320 and 3370 of the reference pictures 3300 and 3350.

According to an embodiment, a weighted sum of split-associated information obtained from split-associated information storage blocks may be determined by using as a weight value, an area of split-associated information storage blocks included in the split-associated information prediction areas 3320 and 3370 in the reference pictures 3300 and 3350. The weighted sum of the split-associated information may be used as split-associated information for split prediction of the current block.

Alternatively, by equally setting, via a weight, areas of the split-associated information storage blocks included in the split-associated information prediction areas 3320 and 3370 of the reference pictures 3300 and 3350, an average value of split-associated information obtained from the split-associated information storage blocks included in the split-associated information prediction areas 3320 and 3370 may be used as final split-associated information for split prediction of the current block.

Alternatively, split-associated information may be obtained from a storage block of a preset location among the split-associated information storage blocks included in the split-associated information prediction areas 3320 and 3370. For example, the preset location may be an upper left location, a lower left location, an upper right location, a lower right location, or a center location of the split-associated information prediction areas 3320 and 3370. Here, the center location may be (width/2, height/2), (width/2 - 1, height/2), (width/2 - 1, height/2 - 1), (width/2 - 1, height/2 - 1) (here, 'width' indicates a width of the split-associated information prediction areas 3320 and 3370, and 'height' indicates a height of the split-associated information prediction areas).

According to an embodiment, when a split-associated information storage block is greater than the split-associated information prediction areas 3320 and 3370, split-associated information for split prediction of the current block may be obtained from the split-associated information storage block including a location and a size of the split-associated information storage block.

According to an embodiment, a size of an area from which split-associated information to be used for split prediction of the current block is obtained may be equal to a size of the current block. The size may be at least one of an area, a width, or a height. Alternatively, the size of the area from which split-associated information is obtained may be a fixed size such as 256x256, 256*128, 128x128, 128*64, 64x64, 64*16, 32x32, 16x16, 8x8, 4x4, etc.

Hereinafter, a method of determining a split scheme when split prediction of a current block is performed by using split-associated information obtained from a reference area (split-associated information prediction area) in a reference picture will now be described.

According to an embodiment, by using split-associated information obtained from a reference area in a reference picture, a QT depth or an MTT depth of a current block may be determined.

In a particular example, when 'an average value and a minimum value of a QT depth of at least one block included in the reference area' is used as split-associated information, a prediction value of a QT depth of the current block may be determined to be 'the minimum value of a QT depth of at least one block included in the reference area'. Therefore, QT split may be performed on the current block until the QT depth of the current block reaches from 0 to the prediction value. In a similar manner, a prediction value of an MTT depth of the current block may be determined by using 'the average value of a QT depth of at least one block included in the reference area'.

In a particular example, when 'an average value of a QT depth of at least one block included in the reference area' is used as split-associated information, a prediction value of a QT depth of the current block may be determined to be 'the average value of a QT depth of at least one block included in the reference area' or 'the average value-1 of a QT depth of at least one block included in the reference area'. Therefore, QT split may be performed on the current block until the QT depth of the current block reaches from 0 to the prediction value. In a similar manner, a prediction value of an MTT depth of the current block may be determined by using 'the average value of a QT depth of at least one block included in the reference area'.

In a particular example, when 'an average value and a minimum value of a QT depth of at least one block included in the reference area' is used as split-associated information, a prediction value of a QT depth of the current block may be determined to be 'the minimum value of a QT depth of at least one block included in the reference area'. Therefore, QT split may be performed on the current block until the QT depth of the current block reaches from 0 to the prediction value, and in addition, a probability that QT split is performed on the current block until the prediction value reaches 'the average value-1 of a QT depth of at least one block included in the reference area' may increase. In a similar manner, a prediction value of an MTT depth of the current block may be determined by using 'the average value and the minimum value of an MTT depth of at least one block included in the reference area'.

According to an embodiment, a value obtained by combining 'a width, a height, or an area of a no-longer split block' and 'a width, a height, or an area of a largest-size block' in the reference area may be used as split-associated information.

For example, split-associated information obtainable from the reference area may be 'a value obtained by dividing an area of a largest-size block in the reference area by an average value, a maximum value, or a minimum value of an area of the no-longer split block in the reference area' or 'a logarithmic value of the value'. A value obtained by subtracting 'a logarithmic value of an average value, a maximum value, or a minimum value of an area of the no-longer split block in the reference area' from 'a logarithmic value of an area of a largest-size block in the reference area' may be used as split-associated information. In this regard, log2, log4, or the like may be used. In a particular example, when an average value of an area of the blocks that are included in the reference area and are no longer split is 32*32, and an area of a largest-size block is 128*128, split-associated information may be determined to be log4((128*128)/(32*32))=2. Therefore, a QT depth or an MTT depth which is to be applied to the current block may be determined as 2, by using the split-associated information.

Alternatively, +0, +1, -1, +2, -2, etc. of a QT depth or an MTT depth which is obtained as split-associated information may be determined as a QT depth or an MTT depth of the current block.

According to an embodiment, a split scheme that is predicted by using split-associated information obtained from the reference area and is to be applied to the current block is an MTT split, an MTT depth and at least one of an MTT type or an MTT direction may be determined via split prediction. The MTT type indicates a BT split (binary split) or a TT split (ternary split). The MTT direction indicates a vertical split or a horizontal split. Therefore, the MTT mode may be determined by combining the MTT type and the MTT direction, and may be determined as BT_VER (vertical binary) mode, BT_HOR (horizontal binary) mode, TT_VER (vertical ternary) mode, or TT_HOR (horizontal ternary) mode.

According to an embodiment, after a QT depth is predicted, an MTT depth determined for split prediction may be additionally predicted. For example, when a prediction value of the QT depth determined via split prediction is greater than 0, QT split may be performed on the current block until the QT depth of the current block reaches from 0 to the prediction value, and then, MTT split may be performed on the current block. Therefore, when the prediction value of the QT depth determined via split prediction is greater than 0 and a prediction value of the MTT depth is greater than 0, QT split may be performed on the current block until the QT depth of the current block reaches from 0 to the prediction value, and MTT split may be performed on the current block until the MTT depth of the current block reaches the prediction value via split prediction.

According to an embodiment, split-associated information required to determine a prediction value of a QT depth for QT split of the current block and a prediction value of an MTT depth for MTT split may be determined by using 'a QT depth, an MTT depth, a width, a height, or an area of a no-longer split block' in the reference area. In another example, by using a value obtained by combining 'a QT depth, an MTT depth, a width, a height, or an area of a no-longer split block' in the reference area and 'a width, a height, or an area of a largest-size block', the prediction value of the QT depth for QT split of the current block and the prediction value of the MTT depth for MTT split may be determined.

Alternatively, the prediction value of the QT depth or the prediction value of the MTT depth of the current block may be determined to be equal to a value obtained by having applied thereto +0, +1, -1, +2, or -2 of a QT depth or an MTT depth obtained as split-associated information from the reference area.

According to an embodiment, not only the prediction value of the MTT depth of the current block but also an MTT direction may also be determined via split prediction.

According to an embodiment, the prediction value of the MTT depth of the current block may be determined via split prediction, and information indicating the MTT direction may be separately obtained from a bitstream or transmitted via a bitstream.

According to an embodiment, an MTT type to be applied to the current block may be determined via split prediction.

According to an embodiment, split-associated information requested to determine a prediction value of an MTT direction or a prediction value of an MTT type for MTT split of the current block may be determined by using 'a width, a height, or an area of a no-longer split block' in the reference area. In another example, the prediction value of the MTT direction or the prediction value of the MTT type of the current block may be determined by using a value obtained by combining 'a width, a height, or an area of a no-longer split block' and 'a width, a height, or an area of a largest-size block' in the reference area.

Also, the prediction value of the MTT direction or the prediction value of the MTT type may be determined based on a result of analysis with respect to split-associated information obtained from the reference area.

In a particular example, in a case where there is an upper block adjacent to the top side of the current block and a left block adjacent to the left side of the current block in the reference area, when a size of the upper block is less than a size of the left block, an MTT direction of the current block may be determined to be a vertical split direction. In a particular example, when the size of the upper block is greater than the size of the left block, the MTT direction of the current block may be determined to be a horizontal split direction.

In a particular example, when an average width of the blocks that are included in the reference area and are no longer split is less than an average height, the MTT direction of the current block may be determined to be a vertical split direction. In a particular example, when the average width of the blocks that are included in the reference area and are no longer split is greater than the average height, the MTT direction of the current block may be determined to be a horizontal split direction.

In a particular example, among MTT types of the blocks that are included in the reference area and are no longer split, when ternary-split blocks are more than binary-split blocks, an MTT type of the current block may be determined as a ternary-split type. On the other hand, among MTT types of the blocks that are included in the reference area and are no longer split, when ternary-split blocks are fewer than binary-split blocks, an MTT type of the current block may be determined as a binary-split type.

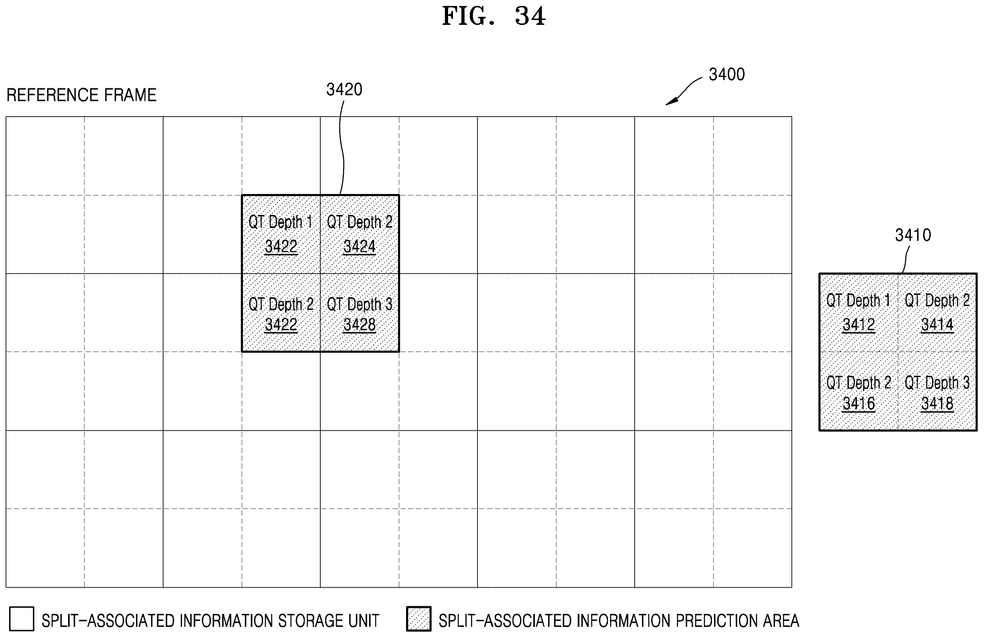

FIG. 34 is a diagram illustrating a case in which a storage block of split-associated information is greater than a size of a current coding unit or a reference area to be used in prediction, according to an embodiment.

A split-associated information storage block of a reference frame 3400 is greater than a split-associated information prediction area 3420 of a current block. A first area 3422 of the split-associated information prediction area 3420 may obtain a QT depth value of 1 from a first split-associated information storage block of the reference frame 3400. A second area 3424 of the split-associated information prediction area 3420 may obtain a QT depth value of 2 from a second split-associated information storage block of the reference frame 3400. A third area 3426 of the split-associated information prediction area 3420 may obtain a QT depth value of 2 from a third split-associated information storage block of the reference frame 3400. A fourt area 3428 of the split-associated information prediction area 3420 may obtain a QT depth value of 3 from a fourth split-associated information storage block of the reference frame 3400.

Therefore, a QT depth value for a first area 3412 of a current block 3410 may be determined to be 1, based on the split-associated information prediction area 3420. In a similar manner, a QT depth value for a second area 3414 of the current block 3410 may be determined to be 2, a QT depth value for a third area 3416 may be determined to be 2, and a QT depth value for a fourth area 3418 may be determined to be 3.

According to an embodiment, a QT depth and an MTT depth of a current block may be determined via split prediction of the current block, by using split-associated information obtained from a reference area.

According to an embodiment, when complexity of the split-associated information obtained from the reference area is higher than average complexity of a reference picture, a minimum QT depth of the current block may be determined to be 1 or more. When a complexity difference increases, the minimum QT depth of the current block may be determined to be 1, 2, 3, etc.

According to an embodiment, when the complexity of the split-associated information obtained from the reference area is higher than the average complexity of the reference picture, the minimum QT depth of the current block may be determined to be greater than an average QT depth of the reference picture. When a complexity difference increases, the minimum QT depth of the current block which is greater than the average QT depth of the reference picture may be determined to be 1, 2, 3, etc.

According to an embodiment, when the complexity of the split-associated information obtained from the reference area is higher than the average complexity of the reference picture, a minimum MTT depth of the current block may be determined to be greater than an average MTT depth of the reference picture. When a complexity difference increases, the minimum MTT depth of the current block which is greater than the average MTT depth of the reference picture may be determined to be 1, 2, 3, etc.

According to an embodiment, after the current block is split according to a split scheme determined via split prediction, a normal split scheme may be additionally applied to the current block. In this case, the additionally-applied normal split scheme is not a scheme determined via split prediction. For example, a normal split scheme that is additionally applicable may include legacy split schemes including QT, BT, TT, MTT, QTMTT, or the like.

When a size of a lower block generated when the current block is split via split prediction satisfies a condition of a block size to which split prediction is applicable, split prediction may be performed on the lower block by using split-associated information being a different type from a block split scheme applied to the current block. For example, when a lower block is generated when the current block is split via split prediction with respect to the current block via a QT depth, split prediction with respect to the lower block may be performed by using an MTT depth obtained from the reference area.

Hereinafter, a method of performing split prediction of a chroma component by using split information of a luma component will now be described.

A luma block for a luma component and a chroma block for a chroma component of a current block may be encoded/decoded. There may be a mode in which block split-associated information of a luma component of a particular area and block split-associated information of a chroma component of the corresponding area are separately determined. In this case, the block split-associated information of the chroma component may be predicted by using the block split-associated information of the luma component.

In order to allow application of block split prediction of the chroma component, a current area or a current block may be a largest coding unit, a coding unit, a prediction unit, or a transform unit.

Alternatively, in order to allow application of block split prediction of the chroma component, a size of the current block may be specified. For example, a size of the current block so as to allow block split prediction of the chroma component may be any one of all sizes of blocks that may be generated when at least one applicable block split scheme is repeatedly applied to a largest-size block.

Encoding may be performed via block split in the luma component, and split-associated information determined via block split of the luma component may be stored.

According to an embodiment, the split-associated information of the luma block may be determined for each particular block. For example, block split-associated information may be stored for each largest coding unit, each coding unit, each prediction unit, or each transform unit of the luma component. A size of a block in which block split-associated information is stored may be a fixed size such as 256x256, 256x128, 128x128, 128x64, 64x64, 64x16, 32x32, 16x16, 8x8, 4x4, etc.

For example, the block split-associated information of the luma component may include at least one of a width, a height, a depth, a QT depth, an MTT depth, or an area of a block that is included in the corresponding area and is no longer split. Also, the block split-associated information of the luma component may be determined by using at least one of an average value, a maximum value, and a minimum value of widths of blocks that are included in the corresponding area and are no longer split. Also, the block split-associated information of the luma component may be determined by using at least one of an average value, a maximum value, and a minimum value of heights of the blocks that are included in the corresponding area and are no longer split. Also, the block split-associated information of the luma component may be determined by using at least one of an average value, a maximum value, and a minimum value of depths, QT depths, or MTT depths of the blocks that are included in the corresponding area and are no longer split. Also, the block split-associated information of the luma component may be determined by using at least one of an average value, a maximum value, and a minimum value of areas of the blocks that are included in the corresponding area and are no longer split.

According to an embodiment, in order to perform split prediction of a chroma block, split-associated information of a luma block may be obtained. The split-associated information of the luma block may include at least one of a width, a height, a depth, a QT depth, an MTT depth, or an area of the luma block. When it is possible to store split-associated information of two or more blocks in a neighboring area or a reference area in which storage of the split-associated information of the luma block corresponding to the chroma block, split prediction of the chroma block may be performed by using at least one of an average value, a maximum value, or a minimum value of the split-associated information obtained from the two or more blocks.

The neighboring area or the reference area from which luma block split-associated information may be obtained in correspondence to the chroma block may be an area including the luma block that corresponds to the chroma block. Here, a size of a luma area may be determined, in proportion to a color format of an image.

For example, when an image format is YUV 4:2:0, a size of the luma area from which luma block split-associated information may be obtained may be twice the width and twice the height of the chroma block.

For example, when an image format is YUV 4:2:2, a size of the luma area from which the luma block split-associated information may be obtained may be twice the width and one time the height of the chroma block.

For example, when an image format is YUV 4:4:4 or RGB444, a size of the luma area from which the luma block split-associated information may be obtained may be one time the width and one time the height of the chroma block.

According to an embodiment, a method of performing split prediction of a chroma block by using block split-associated information of a neighboring area or a reference area (hereinafter, 'luma area') of a luma component corresponding to a chroma block will now be described.

According to an embodiment, a QT depth or an MTT depth of the chroma block may be determined by using the block split-associated information obtained from the luma area.

In a particular example, when 'a minimum value of a QT depth of at least one block included in the luma area' is used as the block split-associated information, a prediction value of a QT depth of the chroma block may be determined to be 'the minimum value among a QT depth of at least one luma block included in the luma area'. Therefore, QT split may be performed on the chroma block until the QT depth of the chroma block reaches from 0 to the prediction value. In a similar manner, a prediction value of an MTT depth of the chroma block may be determined by using 'a minimum value of an MTT depth of at least one block included in the luma area'.

In a particular example, when 'an average value of a QT depth of at least one block included in the luma area' is used as split-associated information, a prediction value of a QT depth of the chroma block may be determined to be 'the average value of a QT depth of at least one block included in the luma area' or 'the average value-1 of a QT depth of at least one luma block included in the luma area'. Therefore, QT split may be performed on the chroma block until the QT depth of the chroma block reaches from 0 to the prediction value. In a similar manner, a prediction value of an MTT depth of the chroma block may be determined by using 'the average value of a QT depth of at least one luma block included in the luma area'.

In a particular example, when 'an average value and a minimum value of a QT depth of at least one luma block included in the luma area' is used as split-associated information, a prediction value of a QT depth of the chroma block may be determined to be 'the minimum value of a QT depth of at least one luma block included in the luma area'. Therefore, QT split may be performed on the chroma block until the QT depth of the chroma block reaches from 0 to the prediction value, and in addition, a probability that QT split is performed on the chroma block until the prediction value reaches 'the average value-1 of a QT depth of at least one luma block included in the luma area' may increase. In a similar manner, a prediction value of an MTT depth of the chroma block may be determined by using 'the average value and the minimum value of an MTT depth of at least one luma block included in the luma area'.

According to an embodiment, a value obtained by combining 'a width, a height, or an area of a no-longer split luma block' and 'a width, a height, or an area of a luma block with a largest size' in the luma area may be used as split-associated information.

For example, split-associated information obtainable from the luma area may be 'a value obtained by dividing an area of the luma block with the largest size in the luma area by an average value, a maximum value, or a minimum value of an area of the no-longer split luma block in the luma area' or 'a logarithmic value of the value'. A value obtained by subtracting 'a logarithmic value of an average value, a maximum value, or a minimum value of a luma area of the no-longer split luma block in the luma area' from 'a logarithmic value of an area of the luma block with the largest size in the luma area' may be used as split-associated information. In this regard, log2, log4, or the like may be used. In a particular example, when an average value of an area of the blocks that are included in the luma area and are no longer split is 32*32, and an area of a luma block with a largest size is 128*128, split-associated information may be determined to be log4((128*128)/(32*32))=2. Therefore, a QT depth or an MTT depth which is to be applied to the chroma block may be determined as 2, by using the split-associated information.

Alternatively, +0, +1, -1, +2, -2, etc. of a QT depth or an MTT depth which is obtained as split-associated information may be determined as a QT depth or an MTT depth of the chroma block.

Also, an offset (+0, +1, -1, +2, -2, etc.) that is applied to the QT depth or the MTT depth and is obtained as the split-associated information may vary according to a color format.

According to an embodiment, a split scheme that is predicted by using split-associated information obtained from the luma area and is to be applied to the chroma block is an MTT split, an MTT depth and at least one of an MTT type or an MTT direction may be determined via split prediction. The MTT type indicates a BT split (binary split) or a TT split (ternary split). The MTT direction indicates a vertical split or a horizontal split. Therefore, the MTT mode may be determined by combining the MTT type and the MTT direction, and may be determined as BT_VER (vertical binary) mode, BT_HOR (horizontal binary) mode, TT_VER (vertical ternary) mode, or TT_HOR (horizontal ternary) mode.

According to an embodiment, after a QT depth is predicted, an MTT depth determined for split prediction may be additionally predicted. For example, when a prediction value of the QT depth determined via split prediction is greater than 0, QT split may be performed on the chroma block until the QT depth of the chroma block reaches from 0 to the prediction value, and then, MTT split may be performed on the chroma block. Therefore, when the prediction value of the QT depth determined via split prediction is greater than 0 and a prediction value of the MTT depth is greater than 0, QT split may be performed on the chroma block until the QT depth of the chroma block reaches from 0 to the prediction value, and MTT split may be performed on the chroma block until the MTT depth of the chroma block reaches the prediction value via split prediction.

According to an embodiment, split-associated information required to determine a prediction value of a QT depth for QT split of the chroma block and a prediction value of an MTT depth for MTT split may be determined by using 'a QT depth, an MTT depth, a width, a height, or an area of a no-longer split block' in the luma area. In another example, by using a value obtained by combining 'a QT depth, an MTT depth, a width, a height, or an area of a no-longer split block' in the luma area and 'a width, a height, or an area of a luma block with a largest size', the prediction value of the QT depth for QT split of the chroma block and the prediction value of the MTT depth for MTT split may be determined.

Alternatively, the prediction value of the QT depth or the prediction value of the MTT depth of the chroma block may be determined to be equal to a value obtained by having applied thereto +0, +1, -1, +2, or -2 of a QT depth or an MTT depth obtained as split-associated information from the luma area.

Also, an offset (+0, +1, -1, +2, -2, etc.) that is applied to the QT depth or the MTT depth and is obtained as the split-associated information may vary according to a color format.

According to an embodiment, not only the prediction value of the MTT depth of the chroma block but also an MTT direction may also be determined via split prediction.

According to an embodiment, an MTT type to be applied to the chroma block may be determined via split prediction.

According to an embodiment, split-associated information requested to determine a prediction value of an MTT direction or a prediction value of an MTT type for MTT split of the chroma block may be determined by using 'a width, a height, or an area of a no-longer split block' in the luma area. In another example, the prediction value of the MTT direction or the prediction value of the MTT type of the chroma block may be determined by using a value obtained by combining 'a width, a height, or an area of a no-longer split block' and 'a width, a height, or an area of a luma block with a largest size' in the luma area.

Also, the prediction value of the MTT direction or the prediction value of the MTT type may be determined based on a result of analysis with respect to split-associated information obtained from the luma area.

In a particular example, in a case where there is an upper block adjacent to the top side of the luma block and a left block adjacent to the left side of the luma block in the luma area, the luma block corresponding to the chroma block, when a size of the upper block is less than a size of the left block, an MTT direction of the chroma block may be determined to be a vertical split direction. In a particular example, when the size of the upper block of the luma block is greater than the size of the left block, the MTT direction of the chroma block may be determined to be a horizontal split direction.

In a particular example, when an average width of the blocks that are included in the luma area and are no longer split is less than an average height, the MTT direction of the chroma block may be determined to be a vertical split direction. In a particular example, when the average width of the blocks that are included in the luma area and are no longer split is greater than the average height, the MTT direction of the chroma block may be determined to be a horizontal split direction.

In a particular example, among MTT types of luma blocks that are included in the luma area and are no longer split, when ternary-split luma blocks are more than binary-split luma blocks, an MTT type of the chroma block may be determined as a ternary-split type. On the other hand, among MTT types of the luma blocks that are included in the luma area and are no longer split, when ternary-split luma blocks are fewer than binary-split luma blocks, an MTT type of the chroma block may be determined as a binary-split type.

According to an embodiment, after the chroma block is split according to a split scheme determined via split prediction, a normal split scheme may be additionally applied to the chroma block. In this case, the additionally-applied normal split scheme is not a scheme determined via split prediction. For example, a normal split scheme that is additionally applicable may include legacy split schemes including QT, BT, TT, MTT, QTMTT, or the like.

When a size of a lower chroma block generated when the current chroma block is split via split prediction satisfies a condition of a chroma block size to which split prediction is applicable, split prediction may be performed on the lower chroma block by using split-associated information being a different type from a block split scheme applied to the current chroma block. For example, when a lower chroma block is generated when the current chroma block is split via split prediction with respect to the current chroma block via a QT depth, split prediction with respect to the lower chroma block may be performed by using an MTT depth obtained from the luma area.

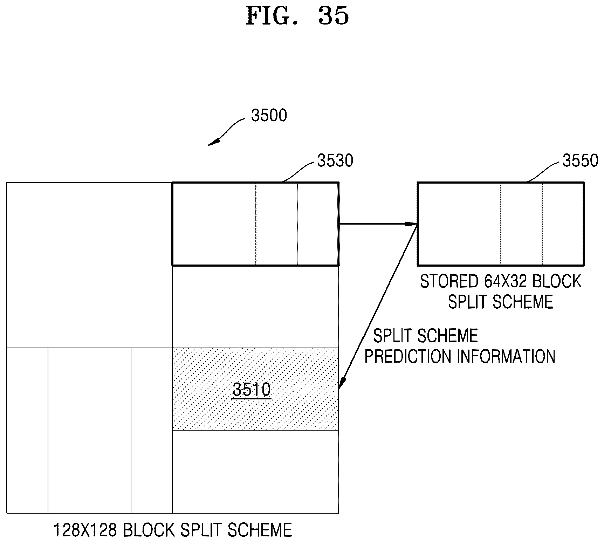

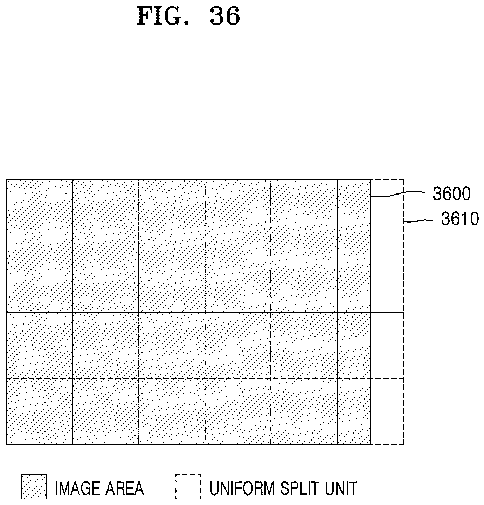

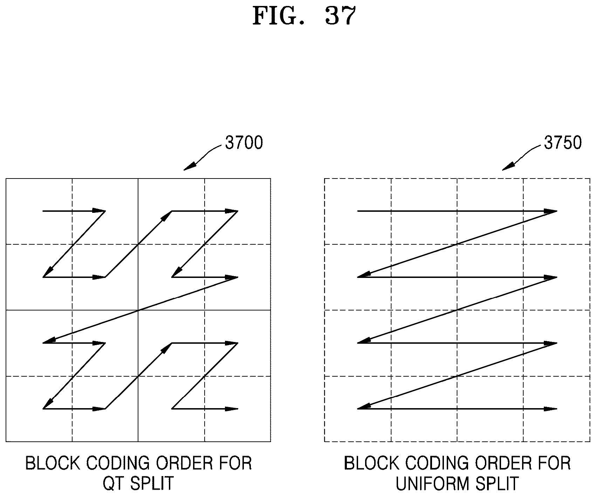

In the above, a method of obtaining split-associated information from a spatially-adjacent neighboring area or a temporally-adjacent reference area, and performing split prediction of a current block is described. Hereinafter, with reference to FIG. 35, a method of performing split prediction by using a history of split prediction, and with reference to FIGS. 36 and 37, a method of uniformly splitting a block into preset size blocks are proposed.

FIG. 35 is a diagram illustrating a method of determining a split scheme of a current coding unit by using a history of split prediction, according to an embodiment.

According to an embodiment, the video decoding apparatus 2100 may store a block split scheme of a corresponding area for each particular area, and may determine a split scheme of a current block by using a block split scheme stored in a different area.

Here, a particular area unit may be a block of any shape that may occur in block split schemes. For example, when the particular area unit is a coding unit, it may be a coding unit with any available size including 256x256, 256x128, 128x128, 128x64, 64x64, 64x16, 16x16, 8x8, or 4x4, starting from a largest coding unit. Alternatively, it may be a particular area in which block split-associated information such as a prediction unit, a transform unit, etc. may be stored. In a process in which an uppermost block is split to a no-longer split block, information about a split scheme may be stored as split-associated information at each split depth.

Hereinafter, a particular area unit in which block split-associated information is stored is referred to as a split-associated information storage block. That is, the video decoding apparatus 2100 may obtain split-associated information from a split-associated information storage block.

According to an embodiment, block split prediction may be performed by using all split-associated information obtained from a split-associated information storage block at each split depth.

Also, block split prediction may be performed by using split-associated information obtained from a split-associated information storage block up to a particular split depth.

Also, block split prediction may be performed by using split-associated information obtained from a split-associated information storage block at a first split depth up to a second split depth.

Also, block split prediction may be performed by using split-associated information obtained from a split-associated information storage block only at a first split depth.

Referring to FIG. 35, in a process of splitting a 128x128 block 3500, split-associated information 3550 about a block split scheme of a 64x32 block 3530 being equal to a size of a current block 3510 may have been stored.

According to an embodiment, split prediction with respect to the current block 3510 may be performed by using only the split-associated information 3550 of the 64x32 block 3530.

Alternatively, split prediction with respect to the current block 3510 may be performed by using split-associated information stored at each depth from the current block 3510 up to the 64x32 block 3530.

FIG. 36 is a diagram illustrating a method of uniformly splitting a largest coding unit into preset size blocks and performing block split with respect to storage blocks, according to an embodiment.

According to an embodiment, in order to reduce the amount of data for transmission of split-associated information, a largest block size to be encoded or decoded may be uniformly split into preset size blocks. Afterward, QT split, QTMTT split, MTT split, binary-tree (BT) split, ternary-tree (TT) split, etc. may be performed from a block generated via uniform split.

For example, an image area 3600 that is a largest-size block of a picture may be split into uniform split units with a preset size. The blocks generated via uniform split have the same size. However, when a block generated via uniform split exceeds a picture boundary (3610), only data in an image area 3600 within the picture boundary may be used.

Also, in order to use only the data in the image area 3600 within the picture boundary, BT split may be repeatedly performed on a block that has been generated via uniform split and exceeds the picture boundary. For example, vertical BT split may be performed on an image area exceeding a right boundary of a picture, and horizontal BT split may be performed on an image area exceeding a bottom boundary of the picture.

FIG. 37 is a diagram in which a coding order of storage blocks generated via QT split is compared with a coding order of storage blocks generated as preset size blocks via uniform split, according to an embodiment.

According to an embodiment, when a largest-size storage block is uniformly split to store split-associated information, QT split may be performed on a largest-size block. In this case, a coding order of storage blocks of split-associated information generated via uniform split may be equal to the coding order of QT split. For example, the storage blocks generated via QT split may be encoded/decoded according to a Z scan order 3700, and split-associated information of the storage blocks may be stored.

Alternatively, according to an embodiment, when a largest-size storage block is uniformly split to store split-associated information, the largest-size storage block may be uniformly split into preset storage blocks. In this case, the storage blocks generated via uniform split may be encoded/decoded according to a raster scan order 3750, and split-associated information of the storage blocks may be stored.

According to an embodiment, a size of a storage block generated via uniform split may correspond to a preset size. The preset size of the storage block may be determined from a largest size of the storage block. For example, the preset size may be 1/4, 1/6, ..., 1/64 of the largest size of the storage block. According to an embodiment, the largest-size storage block may be a largest coding unit. According to an embodiment, the preset size of the storage block may be 256x256, 128x128, 64x64, 32x32, 16x16, 8x8, etc. According to an embodiment, 1 bit information may be signaled to indicate uniform split or not with respect to a storage block, for each largest size storage block.

Also, according to an embodiment, a size of a storage block generated via uniform split may be selected to be one of preset sizes. The preset size of the storage block may be selected based on a largest size of the storage block. For example, the preset size of the storage block may be selected to be 1/4, 1/6, ..., 1/64, etc. According to an embodiment, the largest-size storage block may be a largest coding unit. According to an embodiment, the preset size of the storage block may be selected among 256x256, 128x128, 64x64, 32x32, 16x16, 8x8, etc. According to an embodiment, information may be signaled to select a size of a storage block generated via uniform split, for each largest size storage block.

According to an embodiment, the information for selecting the size of the storage block may indicate a depth starting from a largest size of a storage block. In a case where a previous depth is a QT depth, when QT is further performed due to uniform split of a storage block, a depth may increase in addition to the previous QT depth.

According to an embodiment, the information for selecting the size of the storage block may indicate a particular size. The information for selecting the size of the storage block may be set such that a bit length increases from a large block (or low depth) to a small block (or high depth). The information for selecting the size of the storage block may be expressed in a Unary, Truncated Unary, Exponential Golomb, Golomb binarization manner.

According to an embodiment, whether to use a uniform split scheme for a storage block of split-associated information may be signaled using on/off information for each particular unit. For example, whether to use a uniform split scheme to generate a storage block of split-associated information may be determined for a unit of a particular block set such as a picture, a slice, a tile, a block, etc.

After uniform split is performed to a storage block, a normal split scheme may be performed on the storage block. For example, QT split, MTT split, QTMTT split, BT split, TT split, etc. may be applied to the storage block such that the storage block may be split.

According to an embodiment, a method of determining a size of a storage block of split-associated information, i.e., a method of splitting a largest coding unit into preset size storage blocks is proposed. When a largest coding unit is split according to a QTMTT scheme and is determined up to final blocks that are no longer split, various combinations of block sizes and shapes are available, and thus, a significant amount of time and computation complexity are required. In addition, even in consideration of a split scheme of a preset size storage block for storing split-associated information, combinations of applicable block split schemes increase such that computation time and complexity further increase. In order to prevent this matter, proposed is a method of determining a preset size storage block without increasing computation time and complexity.

First, a split scheme of a largest-size block is selected among QTMTT split schemes. For example, the largest-size block may be split via a QT scheme. A minimum QT depth of a no-longer split block split from the largest-size block is found. A size of a block generated when a block is split with the found minimum QT depth is determined as a size of a storage block generated via a uniform split scheme.

A scheme of signaling information about the determined size of the storage block may be equal to a scheme of signaling information of the uniform split scheme. After the storage block is generated via the uniform split scheme, a scheme of signaling split-associated information of blocks generated from the storage block may be determined according to a scheme of signaling information about a normal block split scheme.

For example, when the uniform split scheme is a QT split scheme, information about the uniform split scheme may be re-used without a need to re-search for a split scheme of the storage block.

For example, when the uniform split scheme is a scheme of encoding/decoding according to a raster scan order after split into a preset size, a search for a split mode may be re-performed on each storage block. In a case of following the raster scan order, when split-associated information exists in a block adjacent to an upper right side of the storage block, the number of blocks that may be generated via a split scheme is greater than the number of blocks via a QT scheme, and thus, encoding/decoding efficiency may increase.

According to an embodiment, a video decoding method 2300 performed by the video decoding apparatus 2100 may include determining whether to apply split prediction for a current coding unit (operation 2310). When the split prediction is applied to the current coding unit, the video decoding method 2300 may include determining a neighboring area of the current coding unit, wherein the neighboring area is to be used in the split prediction (operation 2320) The video decoding method 2300 may include predicting a split scheme for the current coding unit by using split-associated information obtained from the neighboring area (operation 2330) When the split scheme indicates a split of the current coding unit, the video decoding method 2300 may include determining at least one lower coding unit by splitting the current coding unit according to the split scheme (operation 2340). When the split scheme indicates no split of the current coding unit, the video decoding method 2300 may include decoding the current coding unit (operation 2350). Here, the neighboring area may be an area within a current picture including the current coding unit or may be an area within a picture decoded before the current picture. The split-associated information obtained from the neighboring area may include at least one of size information and depth information of at least one coding unit included in the neighboring area. As an image feature of a neighboring area that is spatially adjacent to a current coding unit or a reference area that is temporally adjacent to the current coding unit is likely to be similar to an image feature of the ucrent coding unit, a block split scheme may be likely to be similar. Therefore, according to an embodiment, the video decoding method 2300 may include determining a block splitting method of the current coding unit by referring to block split information from the neighboring area that is spatially adjacent to the current coding unit or the reference area that is temporally adjacent thereto, so that the amount of computation and the amount of data for newly determining a block splitting method of the current coding unit may be reduced. That is, a split scheme of various blocks including a coding unit may be induced in the video decoding process, so that an amount of bits for indicating a split scheme may be reduced.

According to an embodiment, the determining of whether to apply the split prediction for the current coding unit (2310) may include obtaining, from a bitstream, information indicating whether split prediction is applied to an upper coding unit including the current coding unit. Also, the determining of whether to apply the split prediction for the current coding unit (2310) may include, when the split prediction is applied to the upper coding unit, determining whether the split prediction is applied to the current coding unit. Therefore, only when whether split prediction is applied to lower coding units included in an upper coding unit is explicitly signaled via a bitstream, split prediction of the lower coding units included in the upper coding unit may be selectively performed.

According to an embodiment, the determining of whether to apply the split prediction for the current coding unit (2310) may include determining whether the current coding unit is included in a split prediction range determined by the upper coding unit including the current coding unit. Therefore, split prediction may be performed only on a coding unit included in the split prediction range determined by the upper coding unit.

According to an embodiment, the determining of whether to apply the split prediction for the current coding unit (2310) may include obtaining, from the bitstream, information indicating whether the split prediction is applied to the current coding unit. Therefore, whether split prediction is applied in each coding unit may be directly signaled.

According to an embodiment, the determining of whether to apply the split prediction for the current coding unit (2310) may include, when a size of the current coding unit corresponds to a preset size, obtaining, from the bitstream, the information indicating whether the split prediction is applied to the current coding unit. Therefore, split prediction may be performed only on a coding unit satisfying a preset size zondition, and a split scheme may be directly determined in a coding unit not satisfying the size condition.

According to an embodiment, the determining of whether to apply the split prediction for the current coding unit (2310) may include obtaining, from a bitstream for an upper data unit including the current coding unit and being a slice, a tile, a picture, or a sequence, split prediction allowance information indicating whether application of the split prediction is allowed in the upper data unit, and when application of the split prediction is allowed in the upper data unit, based on the split prediction allowance information, obtaining information indicating whether the split prediction is applied to the current coding unit. Therefore, in high level syntax for an upper data unit such as a slice header, a tile header, a picture parameter set, or a sequence parameter set, whether split prediction is to be performed on lower data units included in the upper data unit may be signaled.

According to an embodiment, a size of the neighboring area of the current coding unit, wherein the neighboring area is to be used in the split prediction, may be equal to a size of the current coding unit, and the size may be at least one of an area, a width, or a height of a coding unit. The neighboring area may be a coding tree unit (CTU) or a coding unit which is adjacent to the current coding unit.

According to an embodiment, the neighboring area of the current coding unit, wherein the neighboring area is to be used in the split prediction, may be a coding unit separate from the current coding unit by a preset offset, and the neighboring area may be a CTU or a coding unit which is adjacent to the current coding unit.

According to an embodiment, the determining of the neighboring area of the current coding unit, wherein the neighboring area is to be used in the split prediction (2320), may include determining the neighboring area by using a template adjacent to or including the current coding unit, within the current picture or a picture adjacent to the current picture. Therefore, the neighboring area for split prediction of the current coding unit may be an area within a current picture having a high spatial similarity or an area within a reference area having a high temporal similarity.

According to an embodiment, the split-associated information obtained from the neighboring area for split prediction may correspond to at least one of a width, a height, a depth, a quadtree-depth (QT depth), a multitree type-depth (MTT depth), and an area of a final coding unit that is no longer split in the neighboring area or the reference area or a coding unit with a largest size. Also, the split-associated information obtained from the neighboring area may correspond to an average value, a maximum value, or a minimum value of at least two of a width, a height, and an area of a final coding unit that is no longer split in the neighboring area or the reference area. According to an embodiment, the split-associated information obtained from the neighboring area may correspond to an average value, a maximum value, or a minimum value of at least two of a depth, a QT depth, and an MTT depth of a final coding unit that is no longer split in the neighboring area. Therefore, split prediction of the current coding unit may be performed by using a size-associated characteristic or a split scheme of a coding unit in the neighboring area or the reference area.

According to an embodiment, the predicting of the split scheme for the current coding unit (2330) may include determining at least one of a QT depth, an MTT depth, and an MTT mode of the current coding unit by using the split-associated information. Therefore, a split scheme of the current coding unit may be determined by using a split scheme of a coding unit in the neighboring area or the reference area.

According to an embodiment, when the current coding unit is generated by a QT split scheme determined according to split prediction, a neighboring area may be re-determiend for split prediction of the current coding unit, and at least one of an MTT depth and an MTT mode may be determined based on split-associated information obtained form the neighboring area. Therefore, an MTT split scheme may be additionally performed on a block generated by the QT split scheme according to split prediction.

According to an embodiment, the predicting of the split scheme for the current coding unit (2330) may include, when the QT depth determined by using the split-associated information is 0, determining at least one of an MTT depth and an MTT mode for the current coding unit by using the split-associated information. Therefore, MTT split may be performed when QT split is not performed as the QT depth is 0.

According to an embodiment, the video decoding apparatus 2100 may include the coding unit split predictor 2110, the coding unit determiner 2120, and the decoder 2130. According to an embodiment, the coding unit split predictor 2110 may determine whether to apply split prediction for a current coding unit. When split prediction is applied to the current coding unit, the coding unit split predictor 2110 may determine a neighboring area of the current coding unit which is to be used in split prediction. The coding unit split predictor 2110 may predict a split scheme for the current coding unit by using split-associated information obtained from the neighboring area. When the split scheme indicates a split of the current coding unit, the coding unit determiner 2120 may determine at least one lower coding unit by splitting the current coding unit according to the split scheme determined before. When the split scheme indicates no split of the current coding unit, the decoder 2130 may decode the current coding unit. Here, the neighboring area may be an area within a current picture including the current coding unit or may be an area within a picture decoded before the current picture. The area within the picture decoded before the current picture may be referred to as a reference area. The split-associated information may include at least one of size information and depth information of at least one coding unit included in the neighboring area.

According to an embodiment, a video encoding method 2400 to be performed by the video encoding apparatus 2200 may include determining whether to apply split prediction to a current coding unit (2410).

According to an embodiment, when the split prediction is applied to the current coding unit, the video encoding method 2400 may include determining a neighboring area of the current coding unit, wherein the neighboring area is to be used for the split prediction (2420).

According to an embodiment, the video encoding method 2400 may include predicting a split scheme for the current coding unit by using split-associated information obtained from the neighboring area (2430).

When the split scheme indicates a split of the current coding unit, the video encoding method 2400 may include determining at least one lower coding unit by splitting the current coding unit according to the split scheme (2440).

When the split scheme indicates no split of the current coding unit, the video encoding method 2400 may include encoding the current coding unit (2450).

According to an embodiment, the neighboring area for split prediction may be an area within a current picture including the current coding unit or may be an area within a picture encoded before the current picture. The split-associated information may include at least one of size information and depth information of at least one coding unit included in the neighboring area.

As an image feature of a neighboring area that is spatially adjacent to a current coding unit or a reference area that is temporally adjacent to the current coding unit is likely to be similar to an image feature of the ucrent coding unit, a block split scheme may be likely to be similar. Therefore, according to an embodiment, the video encoding method 2400 may include determining a block splitting method of the current coding unit by referring to block split information from the neighboring area that is spatially adjacent to the current coding unit or the reference area that is temporally adjacent thereto, so that the amount of computation and the amount of data for newly determining a block splitting method of the current coding unit may be reduced.

According to an embodiment, the video encoding method 2400 may include, when split prediction is applied to the upper coding unit, determining whether split prediction is applied to the current coding unit, and encoding information indicating whether split prediction is applied to the upper coding unit including the current coding unit. Therefore, only when split prediction of lower coding units included in the upper coding unit is selectively performed, whether split prediction is applied to the lower coding units included in the upper coding unit may be explicitly signaled via a bitstream.

According to an embodiment, the video encoding method 2400 may include encoding information indicating whether split prediction is applied to the current coding unit. Therefore, whether split prediction is applied may be directly determined in each coding unit, and information related thereto may be signaled.

According to an embodiment, the video encoding method 2400 may include, when a size of the current coding unit is a preset size, encoding information indicating whether split prediction is applied to the current coding unit. Therefore, split prediction may be performed only in a coding unit satisfying a preset size condition, and a split scheme may be directly determined in a coding unit not satisfying the size condition.

According to an embodiment, the video encoding method 2400 may include determining application of split prediction for lower data units is allowed in an upper data unit such as a slice, a tile, a picture, or a sequence which includes the current coding unit, and encoding split prediction allowance information indicating whether the application is allowed. Therefore, via high level syntax for an upper data unit such as a slice header, a tile header, a picture parameter set, or a sequence parameter set, information as to whether split prediction is to be performed on lower data units included in the upper data unit may be transmitted.

According to an embodiment, the video encoding apparatus 2200 may include the coding unit split predictor 2210, the coding unit determiner 2220, and the encoder 2230.

According to an embodiment, the coding unit split predictor 2210 may determine whether to apply split prediction to a current coding unit, and when the split prediction is applied to the current coding unit, determine a neighboring area of the current coding unit, wherein the neighboring area is to be used for the split prediction. The coding unit split predictor 2210 may predict a split scheme for the current coding unit by using split-associated information obtained from the neighboring area.

According to an embodiment, when the predicted split scheme indicates a split of the current coding unit, the coding unit determiner 2220 may determine at least one lower coding unit by splitting the current coding unit according to the split scheme.

According to an embodiment, when the predicted split scheme indicates no split of the current coding unit, the encoder 2230 may encode the current coding unit.

According to an embodiment, the neighboring area may be an area within a current picture including the current coding unit or may be an area within a picture encoded before the current picture. According to an embodiment, the split-associated information may include at least one of size information and depth information of at least one coding unit included in the neighboring area.

According to an embodiment, a method of storing a bitstream generated by the video decoding method 2400 in a computer-readable recording medium may include including determining whether to apply split prediction to a current coding unit (2410). According to an embodiment, the method of storing in the recording medium may include, when the split prediction is applied to the current coding unit, determining a neighboring area of the current coding unit, wherein the neighboring area is to be used for the split prediction (2420). According to an embodiment, the method of storing in the recording medium may include predicting a split scheme for the current coding unit by using split-associated information obtained from the neighboring area (2430). According to an embodiment, the method of storing in the recording medium may include, when the split scheme indicates a split of the current coding unit, determining at least one lower coding unit by splitting the current coding unit according to the split scheme (2440). According to an embodiment, the method of storing in the recording medium may include, when the split scheme indicates no split of the current coding unit, encoding the current coding unit (2450). According to an embodiment, the method of storing in the recording medium may include storing, in the recording medium, a bitstream including encoded data of the current coding unit. According to an embodiment, the neighboring area may be an area within a current picture including the current coding unit or may be an area within a picture encoded before the current picture. According to an embodiment, the split-associated information to be used in split prediction may include at least one of size information and depth information of at least one coding unit included in the neighboring area.

In the computer-readable recording medium having recorded thereon a bitstream generated by the method 2400 of claim 17, when a split scheme determined by a split prediction scheme indicates no split of a current coding unit, the bitstream may include encoded data of an encoded current coding unit.

A machine-readable storage medium may be provided in a form of a non-transitory storage medium. Here, the "non-transitory storage medium" only denotes a tangible device and does not contain a signal (for example, electromagnetic waves). This term does not distinguish a case where data is stored in the storage medium semi- permanently and a case where the data is stored in the storage medium temporarily. For example, the "non-transitory storage medium" may include a buffer where data is temporarily stored.

According to an embodiment, a method according to various embodiments disclosed in the present specification may be provided by being included in a computer program product. The computer program products are products that can be traded between sellers and buyers. The computer program product may be distributed in a form of machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or a memory of a relay server.

## Claims

1. A video decoding method (2300) comprising:
determining whether to apply split prediction for a current coding unit (2310);
when the split prediction is applied to the current coding unit, determining a neighboring area of the current coding unit, wherein the neighboring area is to be used in the split prediction (2320);
predicting a split scheme for the current coding unit by using split-associated information obtained from the neighboring area (2330);
when the split scheme indicates a split of the current coding unit, determining at least one lower coding unit by splitting the current coding unit according to the split scheme (2340); and
when the split scheme indicates no split of the current coding unit, decoding the current coding unit (2350),
wherein the neighboring area is an area within a current picture comprising the current coding unit or is an area within a picture decoded before the current picture, and
the split-associated information comprises at least one of size information and depth information of at least one coding unit comprised in the neighboring area.

2. The video decoding method of claim 1, wherein the determining of whether to apply the split prediction for the current coding unit (2310) comprises:
obtaining, from a bitstream, information indicating whether split prediction is applied to an upper coding unit comprising the current coding unit; and
when the split prediction is applied to the upper coding unit, determining whether the split prediction is applied to the current coding unit.

3. The video decoding method of claim 1 or 2, wherein the determining of whether to apply the split prediction for the current coding unit (2310) comprises determining whether the current coding unit is comprised in a split prediction range determined by the upper coding unit comprising the current coding unit.

4. The video decoding method of any one claims 1 to 3, wherein the determining of whether to apply the split prediction for the current coding unit (2310) comprises obtaining, from the bitstream, information indicating whether the split prediction is applied to the current coding unit.

5. The video decoding method of any one of claims 1 to 4, wherein the determining of whether to apply the split prediction for the current coding unit (2310) comprises, when a size of the current coding unit corresponds to a preset size, obtaining, from the bitstream, the information indicating whether the split prediction is applied to the current coding unit.

6. The video decoding method of any one of claims 1 to 5, wherein the determining of whether to apply the split prediction for the current coding unit (2310) comprises:
obtaining, from a bitstream for an upper data unit comprising the current coding unit and being a slice, a tile, a picture, or a sequence, split prediction allowance information indicating whether application of the split prediction is allowed in the upper data unit; and
when application of the split prediction is allowed in the upper data unit, based on the split prediction allowance information, obtaining information indicating whether the split prediction is applied to the current coding unit.

7. The video decoding method of any one of claims 1 to 6, wherein
a size of the neighboring area of the current coding unit is equal to a size of the current coding unit, wherein the neighboring area is to be used in the split prediction,
the size is at least one of an area, a width, or a height of a coding unit, and
the neighboring area is a coding tree unit (CTU) or a coding unit adjacent to the current coding unit.

8. The video decoding method of any one of claims 1 to 7, wherein
the neighboring area of the current coding unit, to be used in the split prediction, is a coding unit separate from the current coding unit by a preset offset, and
the neighboring area is a CTU or a coding unit adjacent to the current coding unit.

9. The video decoding method of any one of claims 1 to 8, wherein the determining of the neighboring area of the current coding unit, wherein the neighboring area is to be used in the split prediction (2320), comprises determining the neighboring area by using a template adjacent to or comprising the current coding unit, within the current picture or a picture adjacent to the current picture.

10. The video decoding method of any one of claims 1 to 9, wherein the split-associated information obtained from the neighboring area corresponds to at least one of a width, a height, a depth, a quadtree-depth (QT depth), a multitree type-depth (MTT depth), and an area of a final coding unit that is no longer split in the neighboring area or a coding unit with a largest size.

11. The video decoding method of any one of claims 1 to 10, wherein the split-associated information obtained from the neighboring area corresponds to an average value, a maximum value, or a minimum value of at least two of a width, a height, and an area of a final coding unit that is no longer split in the neighboring area.

12. The video decoding method of any one of claims 1 to 10, wherein the split-associated information obtained from the neighboring area corresponds to an average value, a maximum value, or a minimum value of at least two of a depth, a QT depth, and an MTT depth of a final coding unit that is no longer split in the neighboring area.

13. The video decoding method of any one of claims 1 to 12, wherein the predicting of the split scheme for the current coding unit (2330) comprises determining at least one of a QT depth, an MTT depth, and an MTT mode of the current coding unit by using the split-associated information.

14. A video encoding method (2400) comprising:
determining whether to apply split prediction to a current coding unit (2410);
when the split prediction is applied to the current coding unit, determining a neighboring area of the current coding unit, wherein the neighboring area is to be used for the split prediction (2420);
predicting a split scheme for the current coding unit by using split-associated information obtained from the neighboring area (2430);
when the split scheme indicates a split of the current coding unit, determining at least one lower coding unit by splitting the current coding unit according to the split scheme (2440); and
when the split scheme indicates no split of the current coding unit, encoding the current coding unit (2450),
wherein the neighboring area is an area within a current picture comprising the current coding unit or is an area within a picture encoded before the current picture, and
the split-associated information comprises at least one of size information and depth information of at least one coding unit comprised in the neighboring area.

15. A computer-readable recording medium having stored therein a bitstream generated by the method (2400) of claim 14, the bitstream comprising encoded data of a current coding unit, and the method comprising:
determining whether to apply split prediction to the current coding unit (2410);
when the split prediction is applied to the current coding unit, determining a neighboring area of the current coding unit, wherein the neighboring area is to be used for the split prediction (2420);
predicting a split scheme for the current coding unit by using split-associated information obtained from the neighboring area (2430);
when the split scheme indicates a split of the current coding unit, determining at least one lower coding unit by splitting the current coding unit according to the split scheme (2440); and
when the split scheme indicates no split of the current coding unit, encoding the current coding unit (2450), and
wherein the neighboring area is an area within a current picture comprising the current coding unit or is an area within a picture encoded before the current picture, and
the split-associated information comprises at least one of size information and depth information of at least one coding unit comprised in the neighboring area.
